# EUROPEAN PATENT APPLICATION

(11) **EP 4 324 538 A1**
(43) Date of publication of application: **21.02.2024**
(21) Application number: 22787943.4
(22) Date of filing: 18.03.2022
(51) Int. Cl.: B01D 11/04

(54) **LIQUID-LIQUID SYSTEM MULTI-STAGE DEVICE AND METHOD FOR PRODUCING SPECIFIC SUBSTANCE USING SAME**

(30) Priority: 16.04.2021 JP 2021069670
(71) Applicant: Japan Atomic Energy Agency, Ibaraki 319-1184 (JP)
(72) Inventor: NAGANAWA, Hirochika, Naka-gun, Ibaraki 319-1195 (JP); NAGANO, Tetsushi, Naka-gun, Ibaraki 319-1195 (JP); SUZUKI, Hideya, Naka-gun, Ibaraki 319-1195 (JP)
(74) Representative: Cabinet Nony
(86) International application number: PCT/JP2022/012669
(87) International publication number: WO 2022/220017

(57) **Abstract**

[PROBLEMS] To provide a multistage apparatus used in a liquid-liquid system comprising two liquid phases that do not mix with each other, in which the position of the interface (liquid-liquid interface) of a heavy liquid phase and a light liquid does not fluctuate or else is suppressed, and a method of producing a specific substance using it.

[SOLVING MEANS]

An apparatus having a connected body of a plurality of adjacent containers or two or more stages installed in a single-piece container in which a plurality of partitions are arranged inside thereof, and a method of producing a specific substance using it. The multistage extraction is performed so as that the position of the interface (liquid-liquid interface) of a heavy liquid phase and a light liquid does not fluctuate or else is suppressed, by using the mechanism in which only the heavy liquid phase communicates in the lower part of the container, the mechanism in which only the light liquid phase communicates in the upper part of the container, or both of them.

## Description

### [TECHNICAL FIELD]

The present invention relates to a multistage apparatus used in a liquid-liquid system which uses two liquids that do not mix with each other, and a method of producing a specific substance using it. In this multistage apparatus, the position of the liquid-liquid interface does not fluctuate or else is suppressed. Here, the term "multistage" refers to a mechanism for repeating unit operation. The number of unit operations corresponds to the number of stages. The mechanism of repeating unit operations two or more times is expressed in "multistage". The multistage in a liquid-liquid system stands for a mechanism in which the unit operation of liquid-liquid extraction (industrially referred to as solvent extraction) is repeated multiple times. Such a mechanism is widely used in industry such as metal smelting and recycling, separation and purification of organic compounds, and recovery and removal of harmful substances from wastewater.

### [BACKGROUND TECHNOLOGY]

The liquid-liquid system which uses two liquids that do not mix with each other is widely used in the chemical field, etc. For example, liquid-liquid extraction (solvent extraction), in which a substance is separated and purified or recovered and removed by utilizing the difference in distribution between two liquid phases about substances, is used as a method of separating and purifying metal elements and organic compounds. This method supports key industries such as the metal industry and the chemical industry, and is one of the most important technologies for separating and recovering rare metals, which is indispensable in the high-technology industry.

On the other hand, in the so-called high-technology industries such as electronics and information processing, more advanced separation and purification are required. That is, the demand for separation such as high purification of metal elements such as four nines (99.99%) or five nines (99.999%) and mutual separation in element groups having very similar chemical properties (for example, rare earths) is only increasing.

### [PATENT DOCUMENTS]

[PATENT LITERATURE 1] JP2020-203267A
[PATENT LITERATURE 2] JP2021-000622A
[PATENT LITERATURE 3] JP5305382B
[PATENT LITERATURE 4] JP5565719B
[PATENT LITERATURE 5] JP2021-094546A
[PATENT LITERATURE 6] JP2021-094547A

### BRIEF SUMMARY OF THE INVENTION

### [PROBLEMS TO BE SOLVED BY THE INVENTION]

Separation and purification by liquid-liquid extraction (solvent extraction) can be performed at a higher level by repeating the unit operation. However, as the number of iterations increases, more complex system comprised of a lot of unit apparatus are required, making it difficult to operate properly each unit apparatus simultaneously. For example, in a solvent extraction apparatus represented by a mixer settler, when the number of stages is large, a lot of labor and time are spent adjusting the position of the interface (liquid-liquid interface) formed by the heavy liquid phase and the light liquid phase and monitoring the change of its position.

In addition, the increase in the number of stages causes the system to become larger, which is a serious barrier that economically and spatially hinders the improvement of separation and purification performance. As the system becomes larger, larger facilities and more parts are required, the cost is higher, and the installation floor area is larger, which may make it difficult to introduce.

Furthermore, since the unit operation is repeated by sequentially shifting the liquid phase to be processed to the next stage, the processing time becomes longer in proportion to the number of stages. For example, if the pipe connecting each stage for liquid feeding becomes longer, a longer processing time is required. Since the pressure loss is large in the liquid feeding pipe, the pump load becomes large in the long liquid feeding pipe, and it is not possible to feed the liquid with a large capacity. Therefore, there is a drawback that the processing time becomes long.

Especially in the multistage mechanism based on the two-liquid phase mixing by ejecting droplets with the nozzle, a long pipe from the lower end to the upper end is required for the liquid transfer of the heavy liquid phase, and a long pipe from the upper end to the lower end is required for the liquid feed of the light liquid phase (Patent Documents 1 and 2). Therefore, the pressure loss in the liquid feeding pipe is large.

Further, in a multistage apparatus using droplet ejection in a closed container, one pump may send a heavy liquid phase or a light liquid phase over a plurality of stages. For example, by sequentially feeding the liquid in the order of the first-stage nozzle, the second-stage nozzle, the third-stage nozzle, and so on, the pressure loss at the nozzles is accumulated, and the jet output gradually decreases. This also causes the position of the liquid-liquid interface to be changed in each stage. In addition, increasing the volume velocity also increases the effect of pressure loss, which limits liquid transfer in large volumes.

The processing time in the mixer settler, which is the most popular industrial apparatus for liquid-liquid extraction (solvent extraction), is determined by the time required for phase separation. This is because the mixer settler discharges water after waiting for phase separation due to gravity in the settler section. On the other hand, in the mechanism of emulsion flow in which phase mixing and phase separation proceed at the same time (Patent Documents 3 and 4), the processing time depends on the pressure loss in the pump liquid feed.

This is also related to the fact that the principle of liquid feeding is different between the mixer settler and the emulsion flow apparatus. That is, the mixer settler utilizes the liquid feed based on an overflow mainly by the suction force of an impeller (stirring blade), whereas the emulsion flow apparatus utilizes the pressure liquid feed by a pump, etc. In overflow liquid feeding, pressure loss is often not a big problem, but in pressure liquid feeding by a pump, etc., the pressure loss greatly affects the processing speed. In many cases, in a mixer settler arranged in multiple stages, each stage is installed adjacent to each other so that the mixer portion and the settler portion may be alternately arranged, and both portions are connected by a passage. Therefore, in the mixer settler arranged in multiple stages, the liquid feeding pipe connecting each stage is unnecessary, and the pressure loss is not a problem.

On the other hand, even when using a mechanical stirring blade like the mixer settler, in the mechanism based on pressure liquid feeding by a pump, etc. without relying on the suction force of the impeller (stirring blade), it is greatly affected by the pressure loss during liquid feeding similar to the emulsion flow apparatus (Patent Documents 5 and 6).

As described above, in a chemical method using a liquid-liquid system, for example, in the liquid-liquid extraction (solvent extraction), a multistage apparatus that repeats the unit operation is required to perform more advanced separation and purification. The conventional multistage apparatus has a structure in which the unit operation is repeated by arranging in series a mechanism that functions as a single unit in a number corresponding to the number of stages. However, in such a multistage structure, there is a problem that the position of the interface at each stage is liable to fluctuate and it is, therefore, not possible to feed a large amount of liquid.

An object of the present invention is to provide a multistage (referred to as "internal multistage") apparatus that suppresses fluctuations in the interface position by communicating the lower part, the upper part, or both of a container, and a method of producing specific substances using it. When both the upper part and the lower part of the container communicate with each other, the adjustment of the interface position becomes practically unnecessary, and the operability (ease of handling) of the apparatus is greatly improved.

### [MEANS FOR SOLVING PROBLEMS]

The feature of the multistage apparatus of the present invention is that each liquid phase is carried to the next stage without passing through a liquid feeding pipe. That is, it is possible to avoid a large pressure loss in the liquid feeding pipe. In many of the apparatus according to the present invention, sufficient phase separation can be achieved without installing a liquid feeding pipe between each stage. Moreover, since the load of liquid feeding can be significantly reduced, and the liquid feeding in a large capacity becomes possible. In the conventional multistage mechanism of liquid phase mixing by droplet ejection, a long pipe from the lower end to the upper end of the container for the heavy liquid phase liquid feeding connecting each stage, or a long pipe from the upper end to the lower end for the light liquid phase liquid feeding is required. But the present invention does not need such a pipe, the pressure loss does not occur. It should be noted that the fact that the interface position does not need to be adjusted regardless of the amount of liquid to be fed is also one of the factors that enable the liquid to be fed in a large capacity. By enabling large-capacity liquid feeding, the apparatus can be significantly downsized.

In addition, the phenomena that the liquid feeding pipe is narrowed or blocked due to the precipitation of solid components occurs on a daily basis. However, since there is no piping connecting each stage, the work related to maintenance can be reduced, thus the ease of handling is improved.

Further, the structure according to the present invention is different from the mechanism in which the liquid is sequentially feed in order from the first stage to the second stage and then to the third stage via the liquid feeding pipe as in the conventional multistage mechanism. That is, even in a multistage apparatus using droplet ejection in a closed container, pressure loss caused by passing through a large number of nozzles in order does not occur. Accordingly, the pump load is significantly reduced and thus the position of the liquid-liquid interface is stabilized.

Conventionally, the structure of a multistage apparatus used in a liquid-liquid system has a problem that the position of an interface at each stage is liable to fluctuate and a large-capacity liquid cannot be sent. Since these problems are solved by the present invention, it becomes possible to more efficiently produce a specific substance related to a metal material, a chemical product, a bio product, or the like.

### BRIEF DESCRIPTION OF DRAWINGS

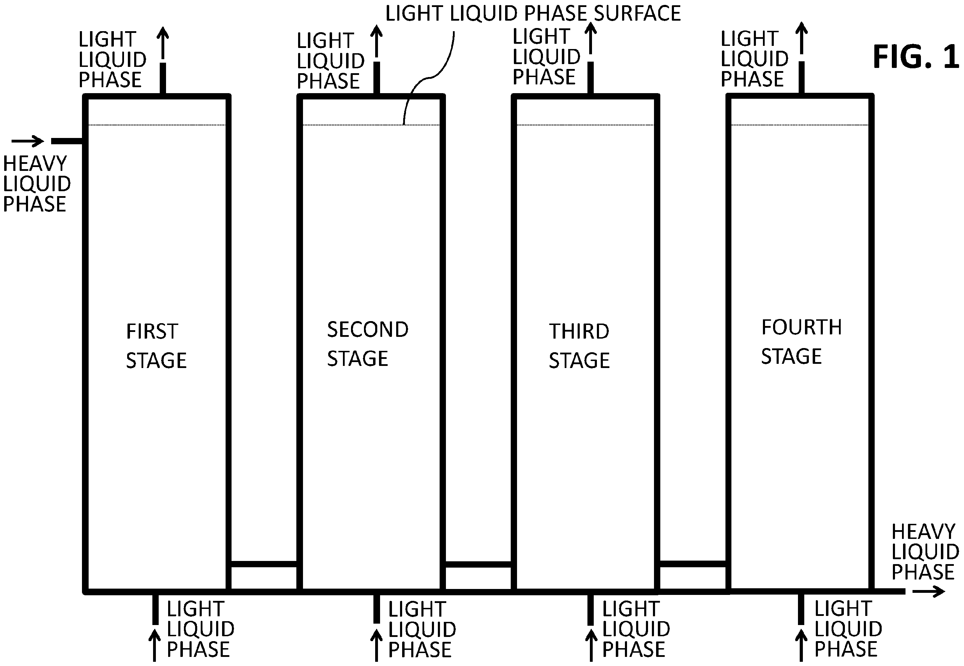

FIG. 1 shows an example of the internal multistage of a connection type with transverse contact, where only the heavy liquid phase communicates at one side of a container.

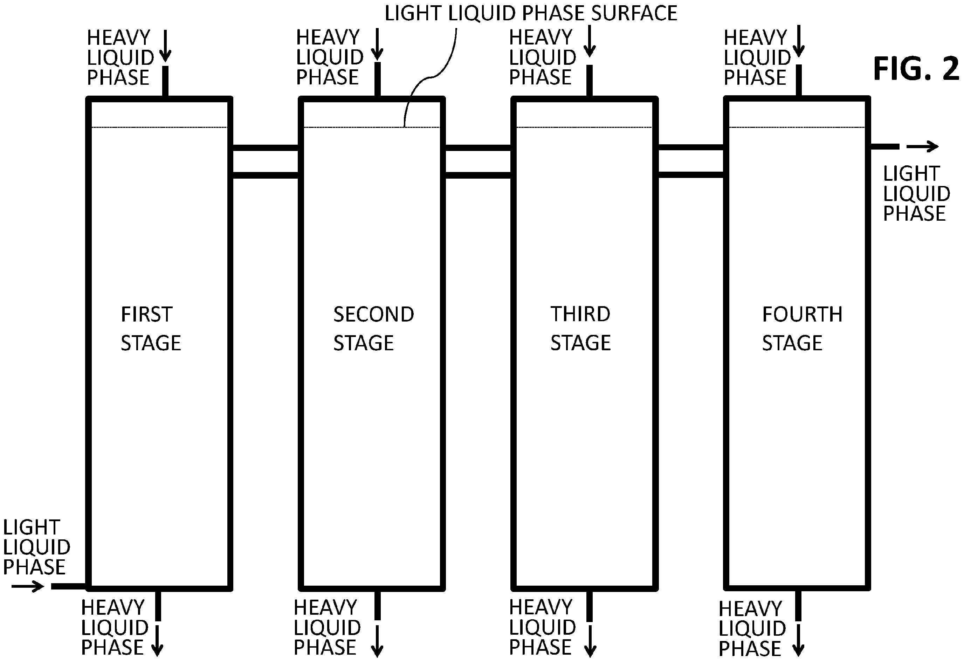

FIG. 2 shows an example of the internal multistage of a connection type with transverse contact, where only the light liquid phase communicates at one side of a container.

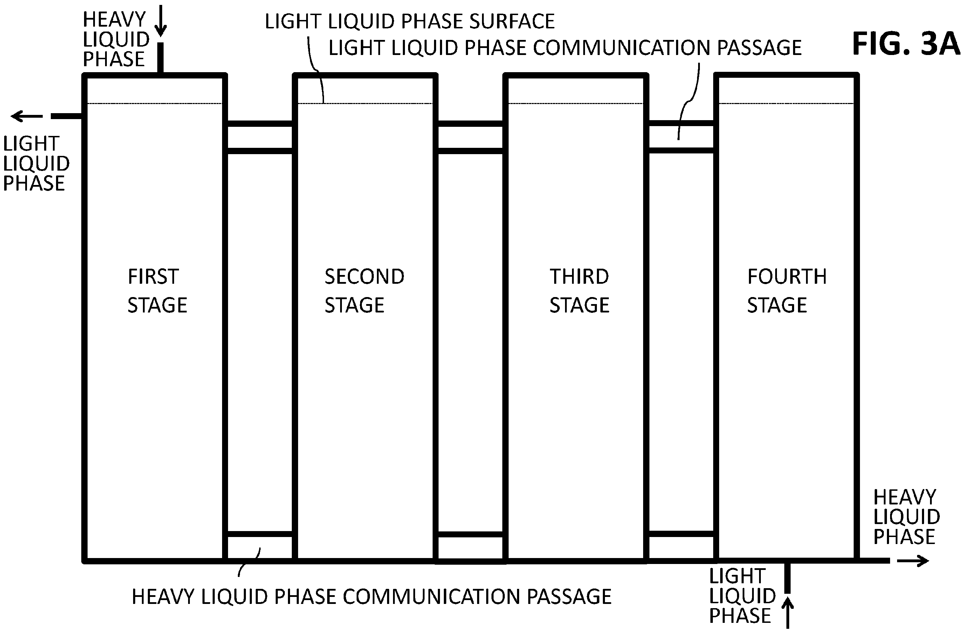

FIG. 3A shows an example of the internal multistage of a connection type with counter-current contact, where each of the heavy liquid phase and the light liquid phase communicates separately.

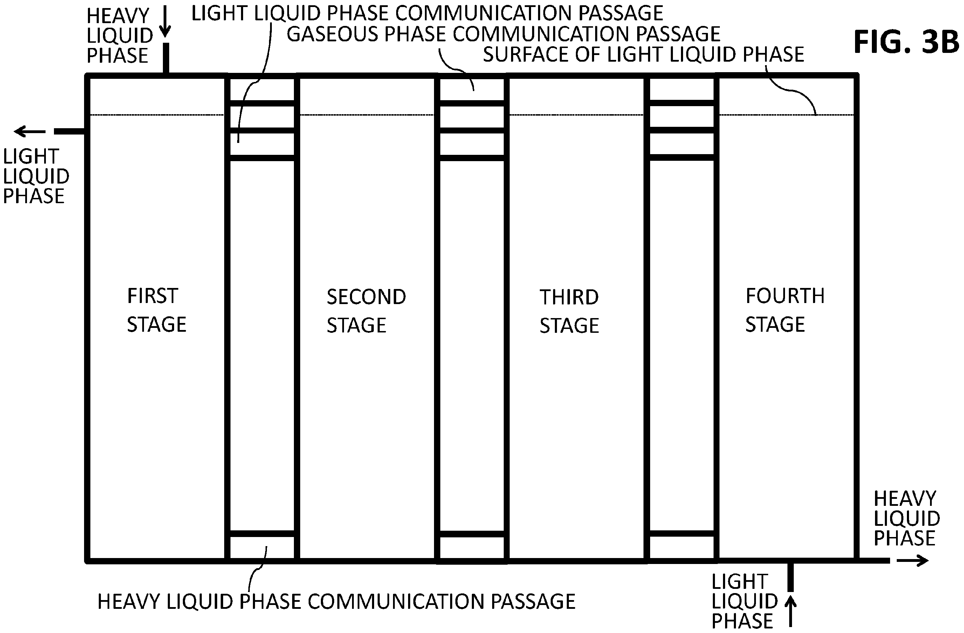

FIG. 3B shows an example of the internal multistage of a connection type with counter-current contact, where each of the heavy liquid phase and the light liquid phase communicates separately, and a gaseous phase communication passage is provided.

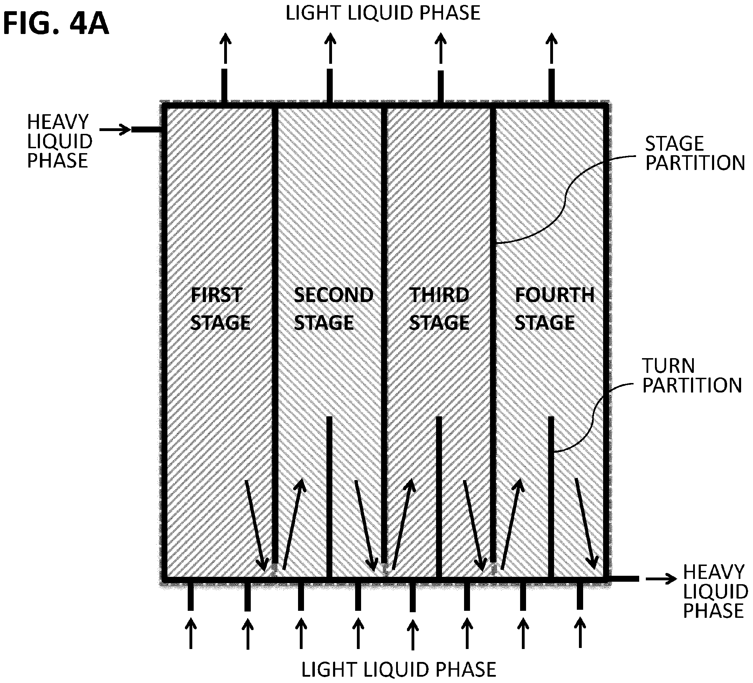

FIG. 4A shows an example of the internal multistage of a partition plate type with transverse contact, where only the heavy liquid phase communicates at one side of a container, and a direction change partition plate is provided at the center of the stage.

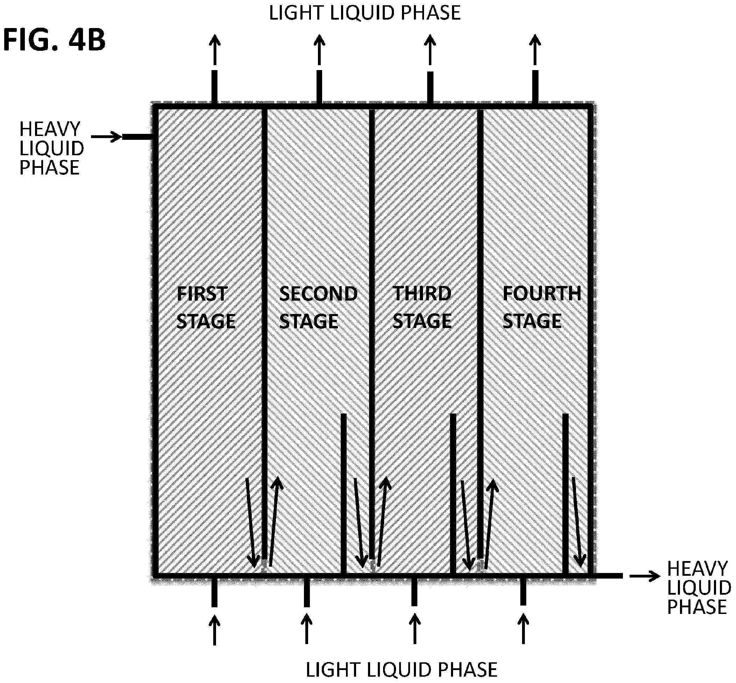

FIG. 4B shows an example of the internal multistage of a partition plate type with transverse contact, where only the heavy liquid phase communicates at one side of a container, and a direction change partition plate is provided on the right side of the stage.

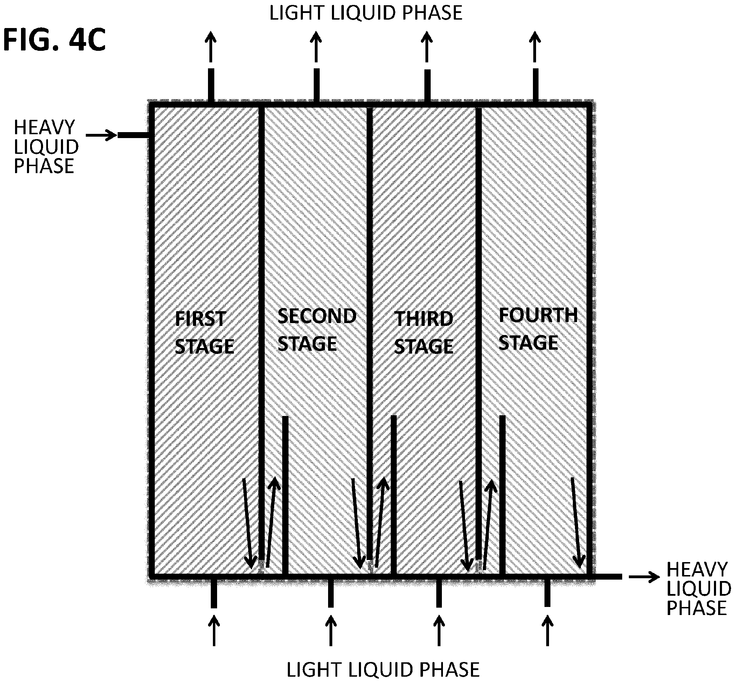

FIG. 4C shows an example of the internal multistage of a partition plate type with transverse contact, where only the heavy liquid phase communicates at one side of a container, and a direction change partition plate is provided on the left side of the stage.

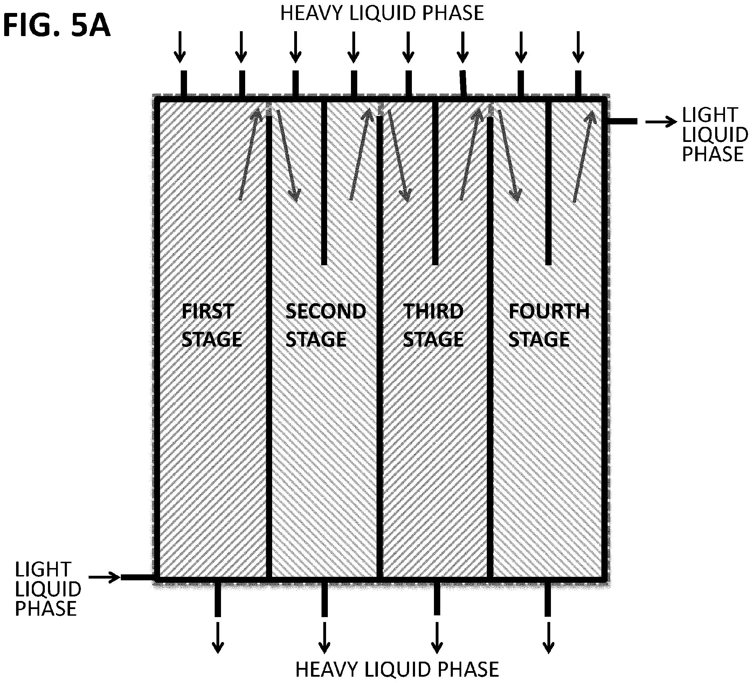

FIG. 5A shows an example of the internal multistage of a partition plate type with transverse contact, where only the light liquid phase communicates at one side of a container, and a direction change partition plate is provided at the center of the stage.

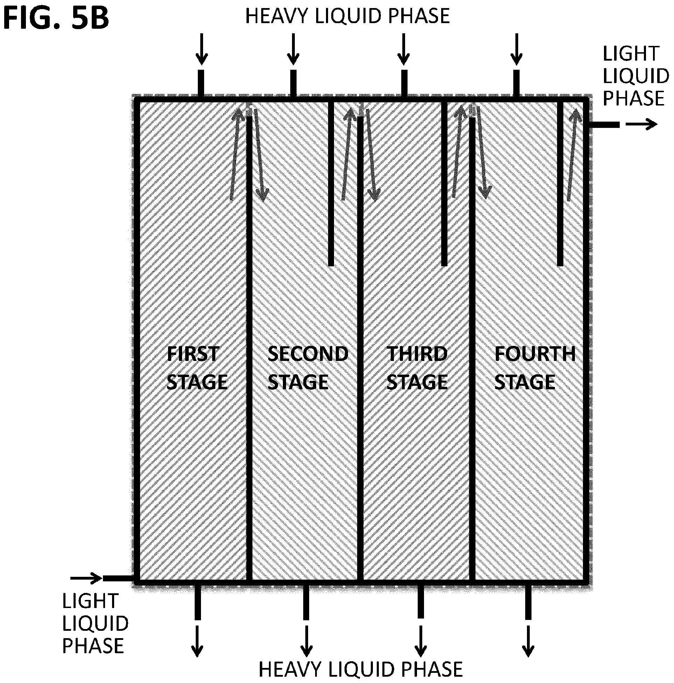

FIG. 5B shows an example of the internal multistage of a partition plate type with transverse contact, where only the light liquid phase communicates at one side of a container, and a direction change partition plate is provided on the right side of the stage.

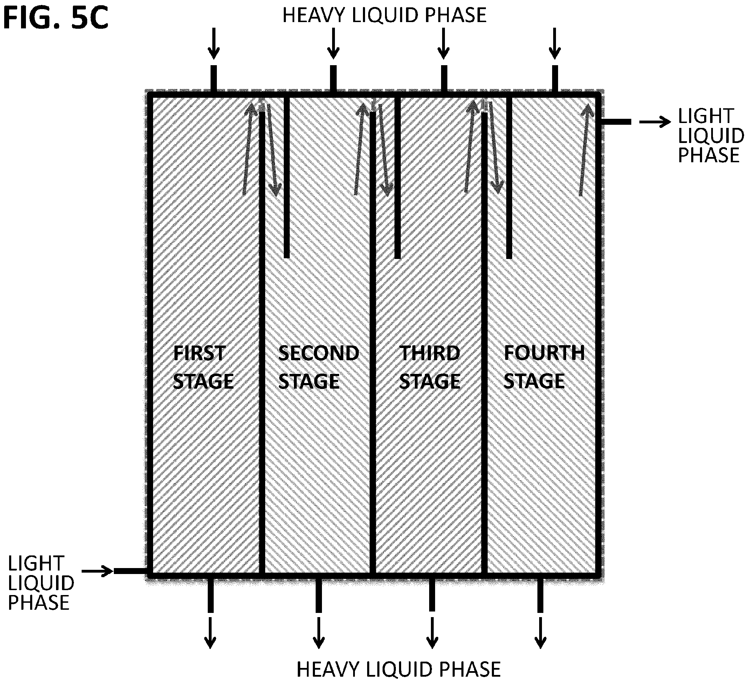

FIG. 5C shows an example of the internal multistage of a partition plate type with transverse contact, where only the light liquid phase communicates at one side of a container, and a direction change partition plate is provided on the left side of the stage.

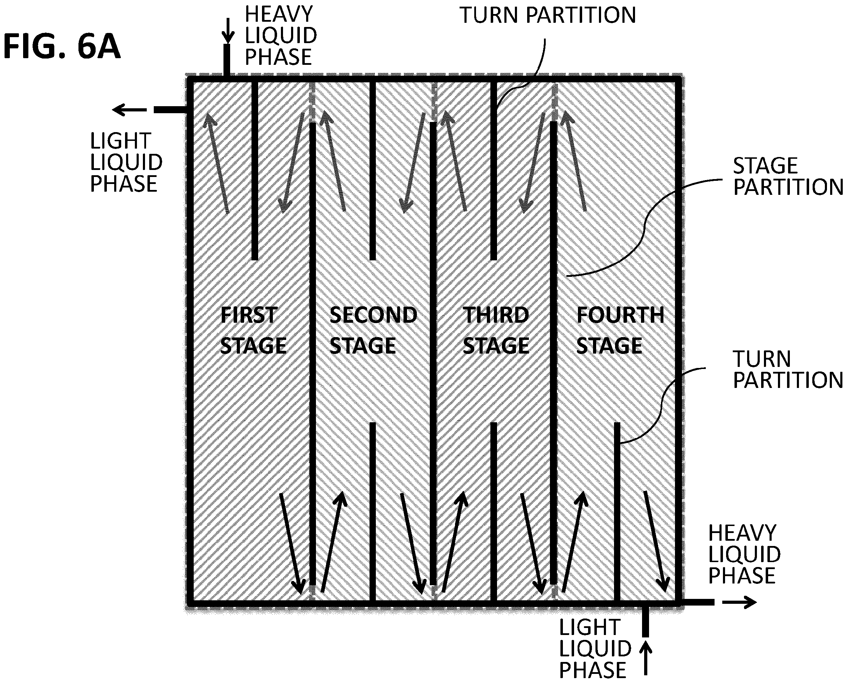

FIG. 6A shows an example of the internal multistage of a partition plate type with counter-current contact, where each of the heavy liquid phase and the light liquid phase communicates separately (communication near the ceiling of the container), and the upper and lower direction change partition plate are provided at the center of the stage.

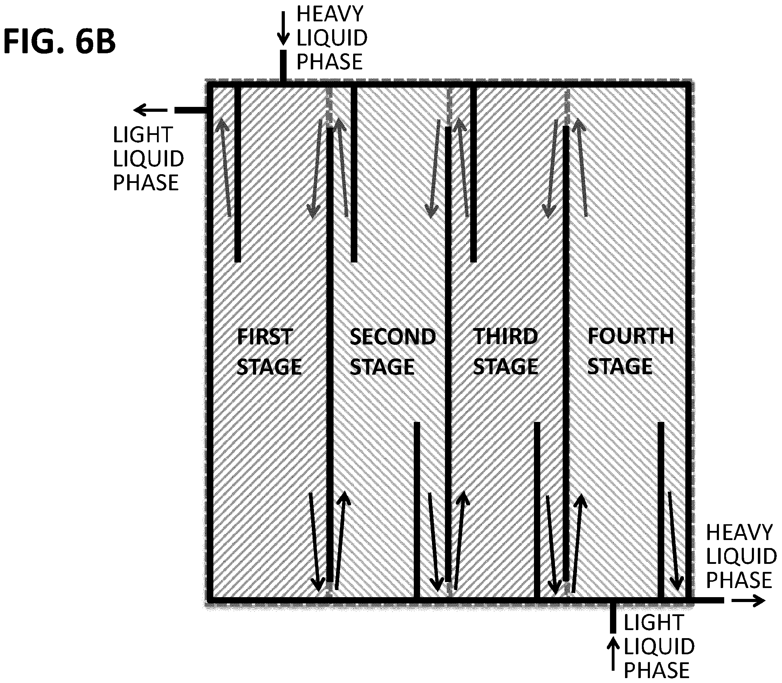

FIG. 6B shows an example of the internal multistage of a partition plate type with counter-current contact, where each of the heavy liquid phase and the light liquid phase communicates separately (communication near the ceiling of the container), and the upper direction change partition plate is provided on the left side of the stage and the lower one on the right side.

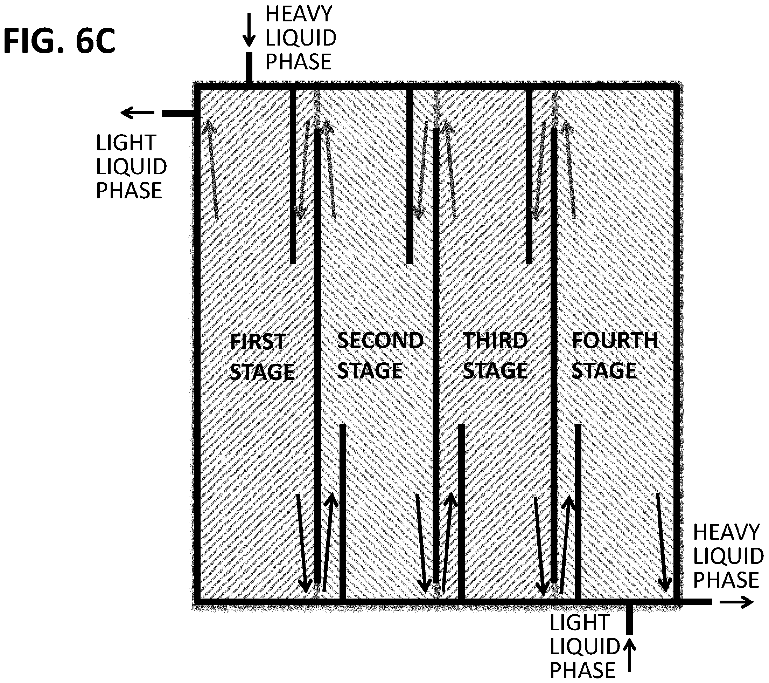

FIG. 6C shows an example of the internal multistage of a partition plate type with counter-current contact, where each of the heavy liquid phase and the light liquid phase communicates separately (communication near the ceiling of the container), and the upper direction change partition plate is provided on the right side of the stage and the lower one on the left side.

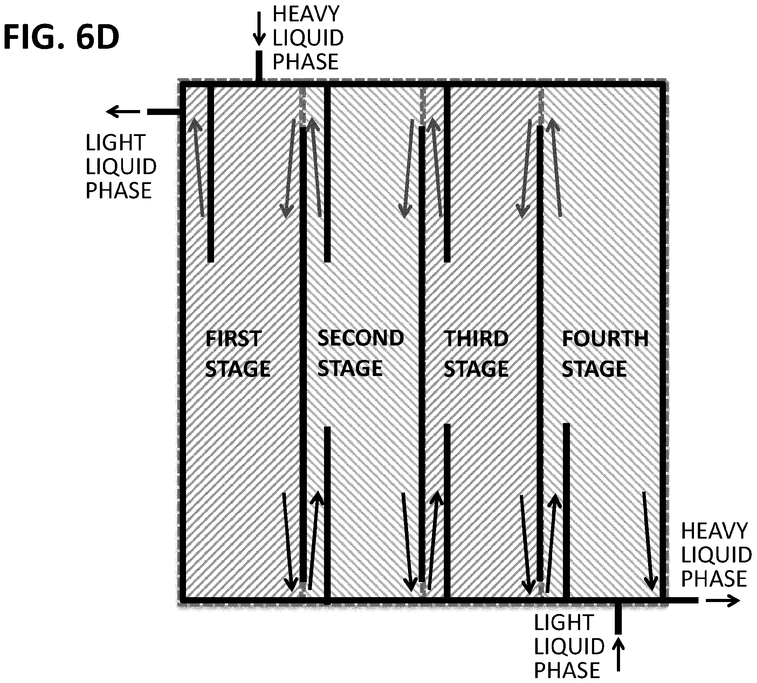

FIG. 6D shows an example of the internal multistage of a partition plate type with counter-current contact, where each of the heavy liquid phase and the light liquid phase communicates separately (communication near the ceiling of the container), and the upper and lower direction change partition plate are provided on the left of the stage.

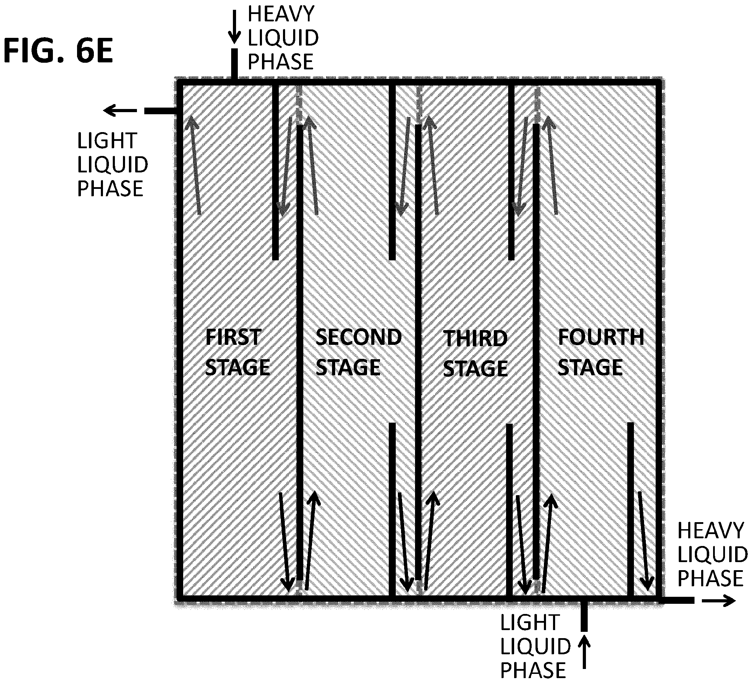

FIG. 6E shows an example of the internal multistage of a partition plate type with counter-current contact, where each of the heavy liquid phase and the light liquid phase communicates separately (communication near the ceiling of the container), and the upper and lower direction change partition plate are provided on the right of the stage.

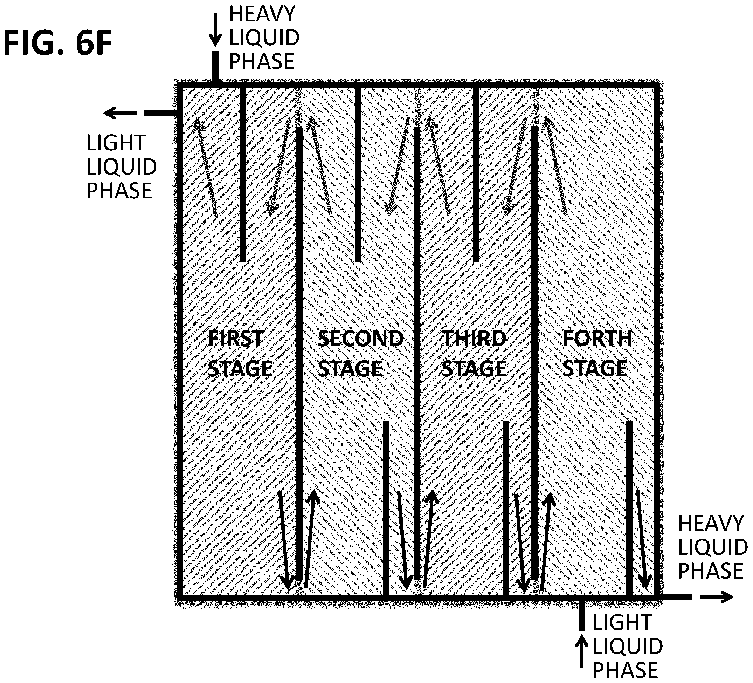

FIG. 6F shows an example of the internal multistage of a partition plate type with counter-current contact, where each of the heavy liquid phase and the light liquid phase communicates separately (communication near the ceiling of the container), and the upper direction change partition plate is provided at the center of the stage and the lower one on the right side.

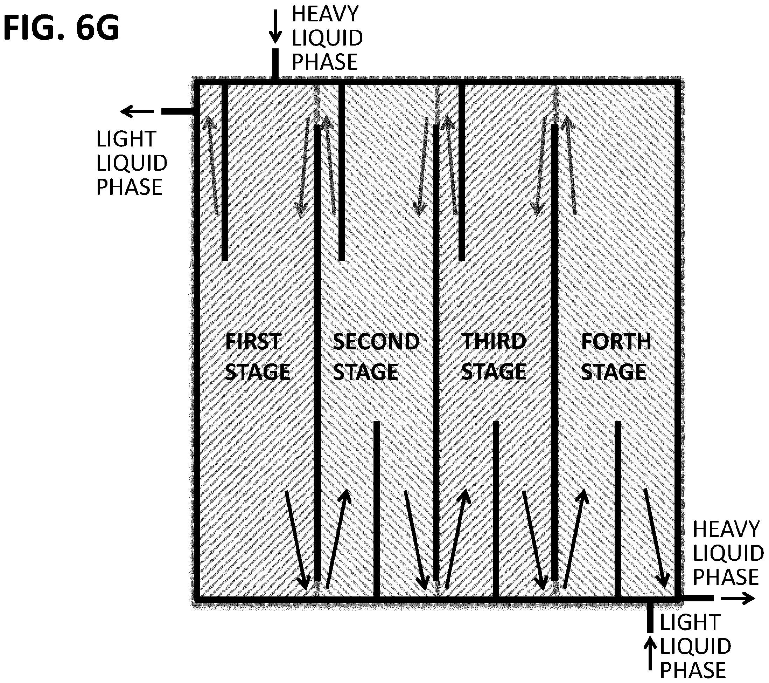

FIG. 6G shows an example of the internal multistage of a partition plate type with counter-current contact, where each of the heavy liquid phase and the light liquid phase communicates separately (communication near the ceiling of the container), and the upper direction change partition plate is provided on the left side of the stage and the lower one at the center.

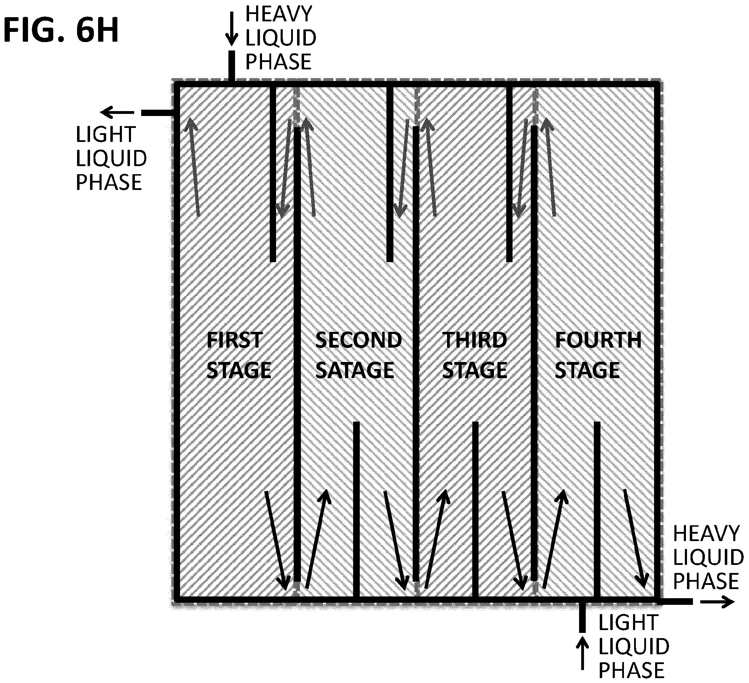

FIG. 6H shows an example of the internal multistage of a partition plate type with counter-current contact, where each of the heavy liquid phase and the light liquid phase communicates separately (communication near the ceiling of the container), and the upper direction change partition plate is provided on the right side of the stage and the lower one at the center.

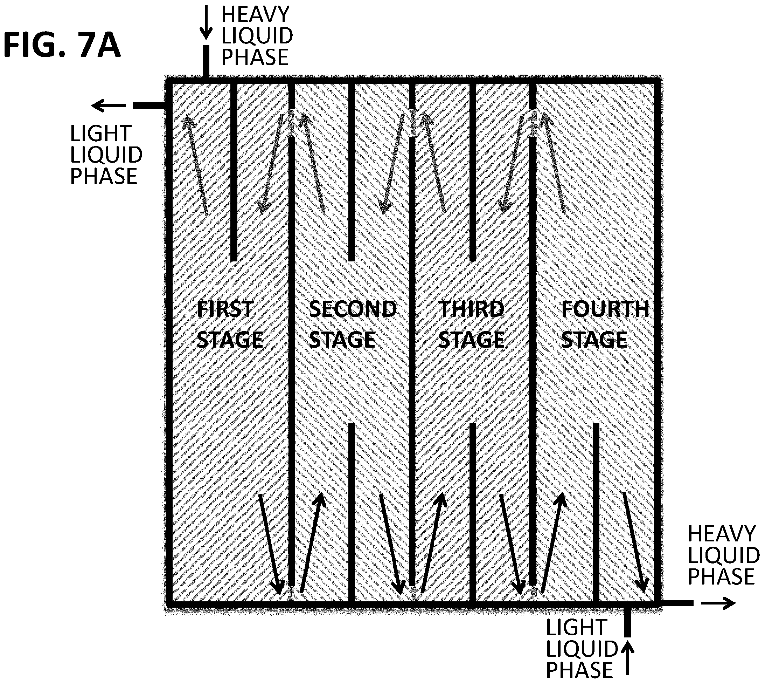

FIG. 7A shows an example of the internal multistage of a partition plate type with counter-current contact, where each of the heavy liquid phase and the light liquid phase communicates separately (communication through a hole provided above the stage dividing plate), and the upper and lower direction change partition plate are provided at the center of the stage.

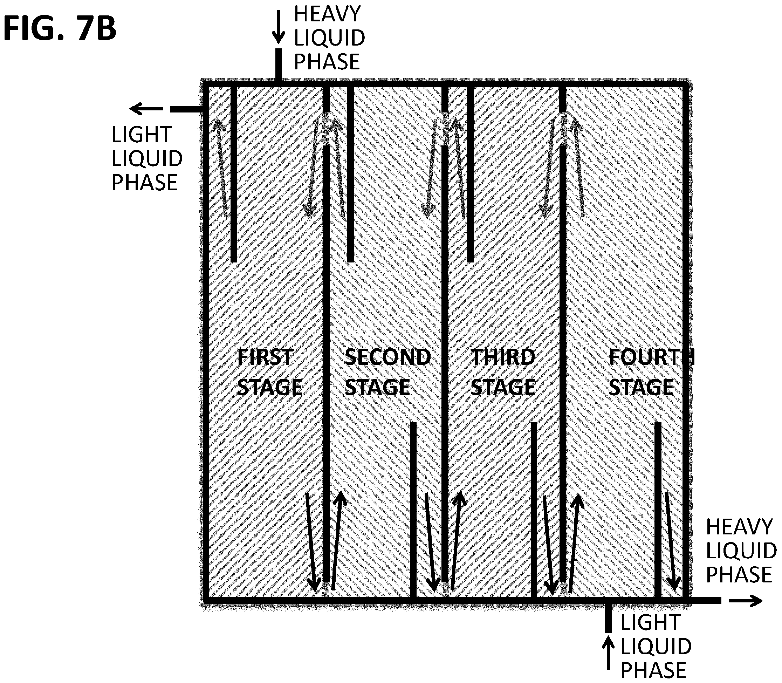

FIG. 7B shows an example of the internal multistage of a partition plate type with counter-current contact, where each of the heavy liquid phase and the light liquid phase communicates separately (communication through a hole provided above the stage dividing plate), and the upper direction change partition plate is provided on the left side of the stage and the lower one on the right side.

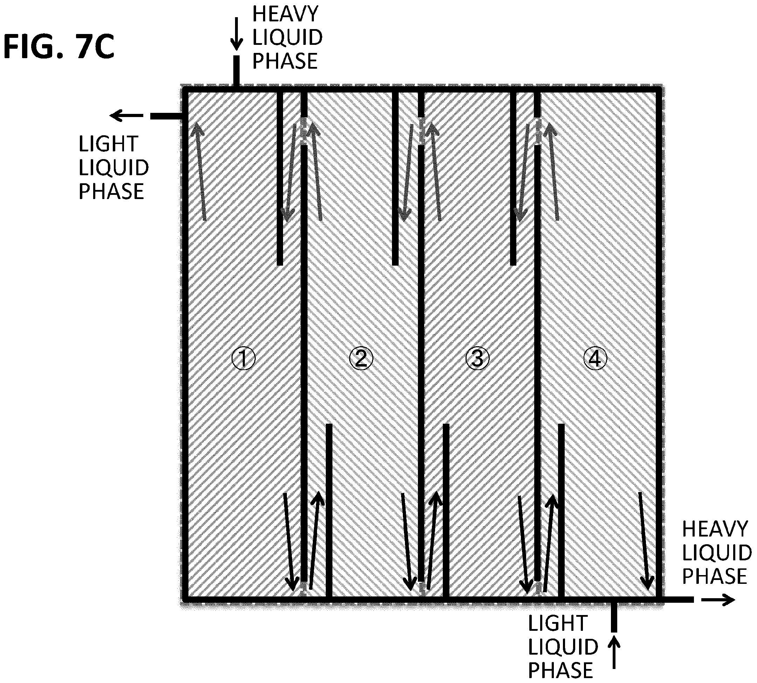

FIG.7C shows an example of the internal multistage of a partition plate type with counter-current contact, where each of the heavy liquid phase and the light liquid phase communicates separately (communication through a hole provided above the stage dividing plate), and the upper direction change partition plate is provided on the right side of the stage and the lower one on the left side.

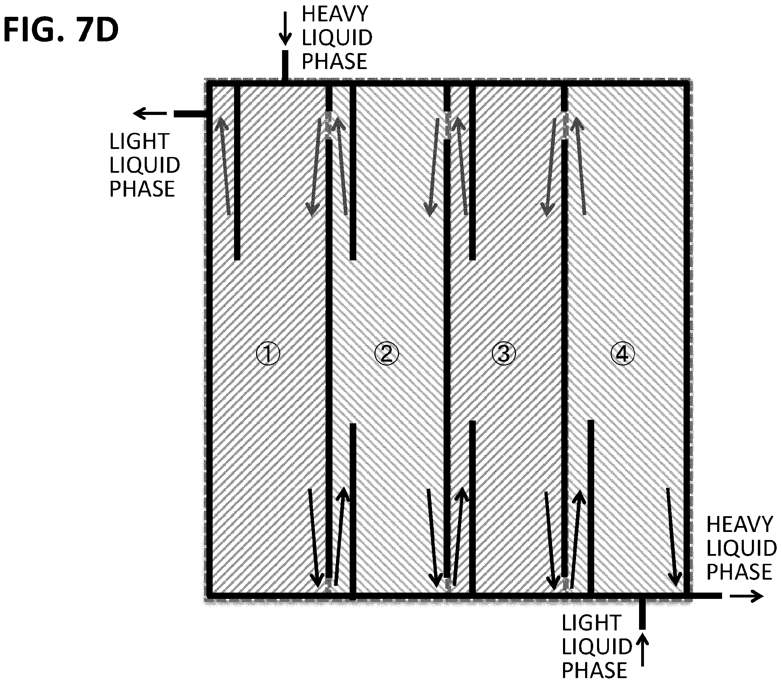

FIG. 7D shows an example of the internal multistage of a partition plate type with counter-current contact, where each of the heavy liquid phase and the light liquid phase communicates separately (communication through a hole provided above the stage dividing plate), and the upper and lower direction change partition plate are provided on the left of the stage.

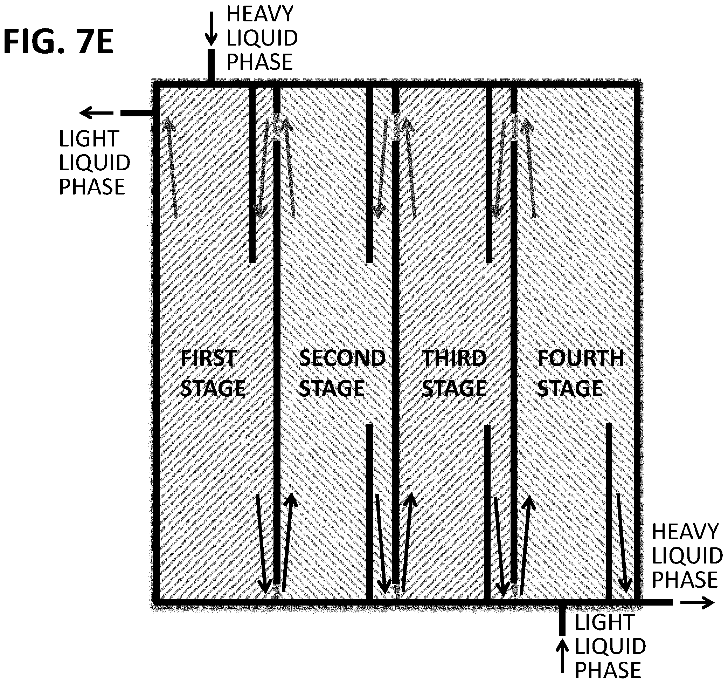

FIG. 7E shows an example of the internal multistage of a partition plate type with counter-current contact, where each of the heavy liquid phase and the light liquid phase communicates separately (communication through a hole provided above the stage dividing plate), and the upper and lower direction change partition plate are provided on the right of the stage.

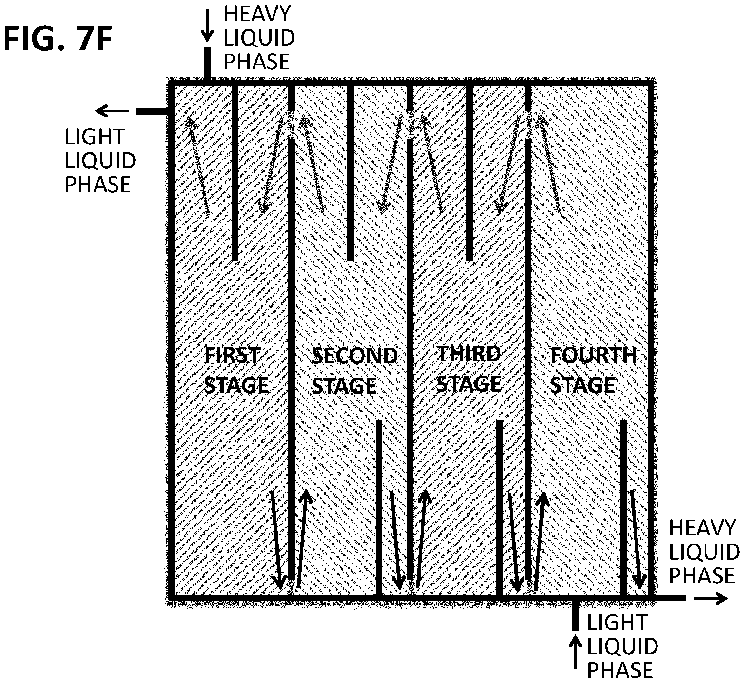

FIG. 7F shows an example of the internal multistage of a partition plate type with counter-current contact, where each of the heavy liquid phase and the light liquid phase communicates separately (communication through a hole provided above the stage dividing plate), and the upper direction change partition plate is provided at the center of the stage and the lower one on the right side.

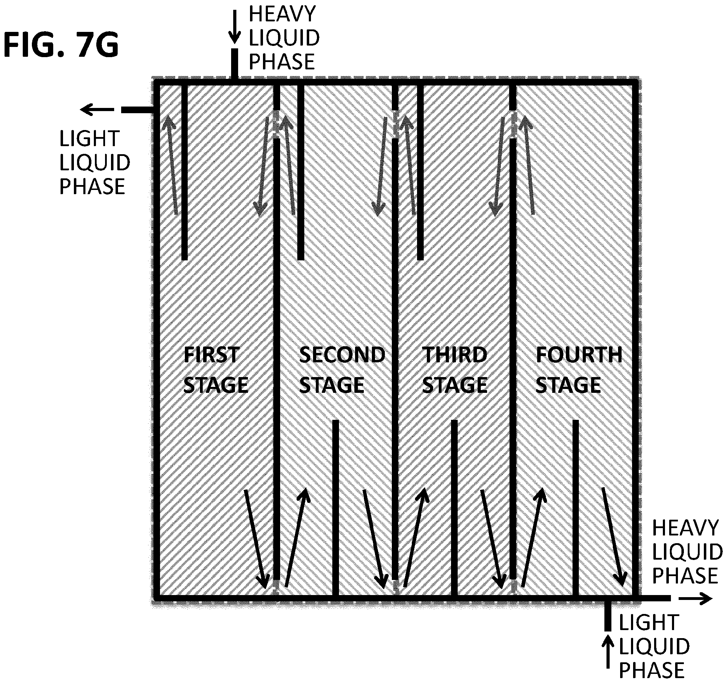

FIG. 7G shows an example of the internal multistage of a partition plate type with counter-current contact, where each of the heavy liquid phase and the light liquid phase communicates separately (communication through a hole provided above the stage dividing plate), and the upper direction change partition plate is provided on the left side of the stage and the lower one at the center.

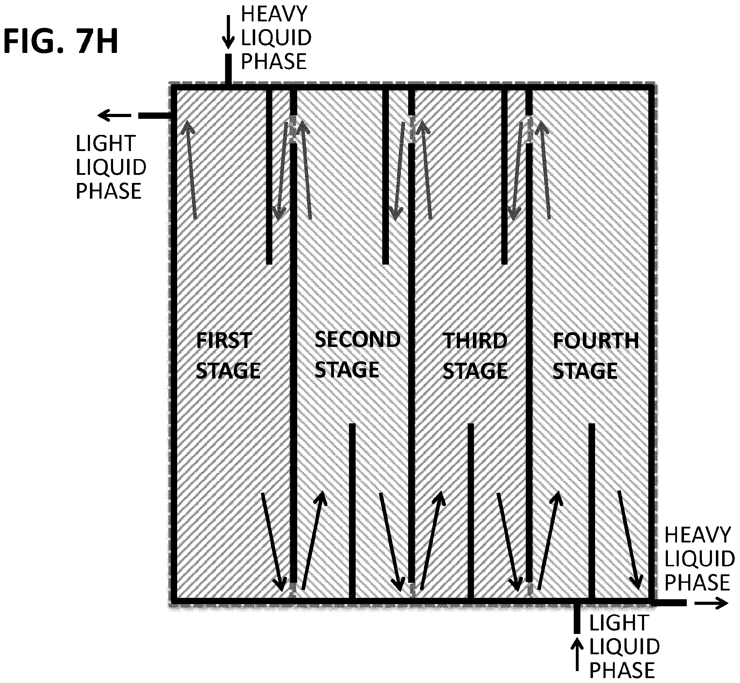

FIG. 7H shows an example of the internal multistage of a partition plate type with counter-current contact, where each of the heavy liquid phase and the light liquid phase communicates separately (communication through a hole provided above the stage dividing plate), and the upper direction change partition plate is provided on the right side of the stage and the lower one at the center.

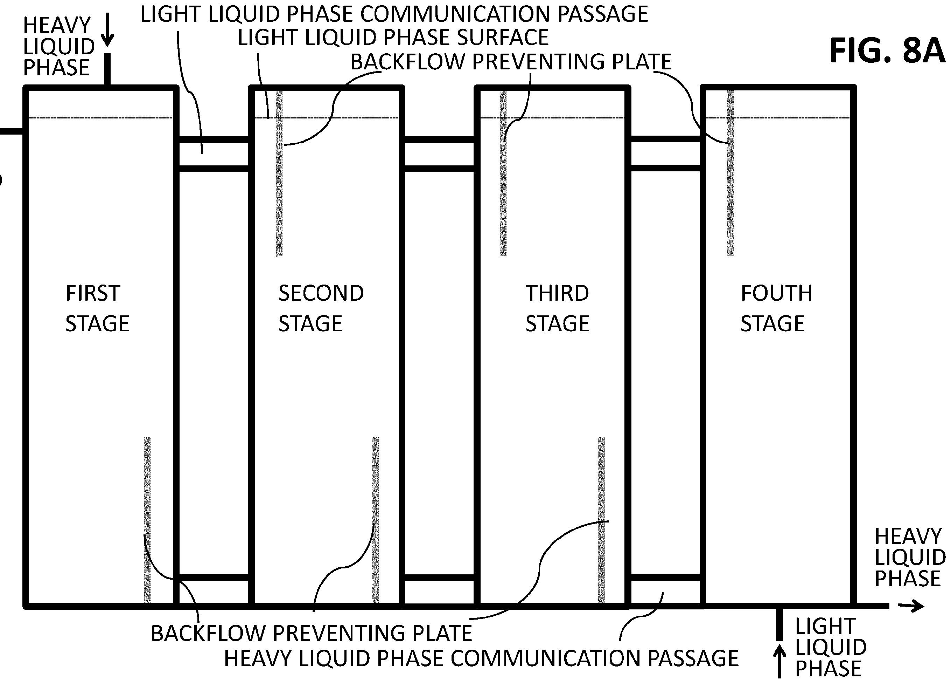

FIG. 8A shows an example of the internal multistage of a connection type with counter-current contact, where each of the heavy liquid phase and the light liquid phase communicates separately, and the upper backflow preventing plate is provided on the left side of the stage and the lower one on the right side.

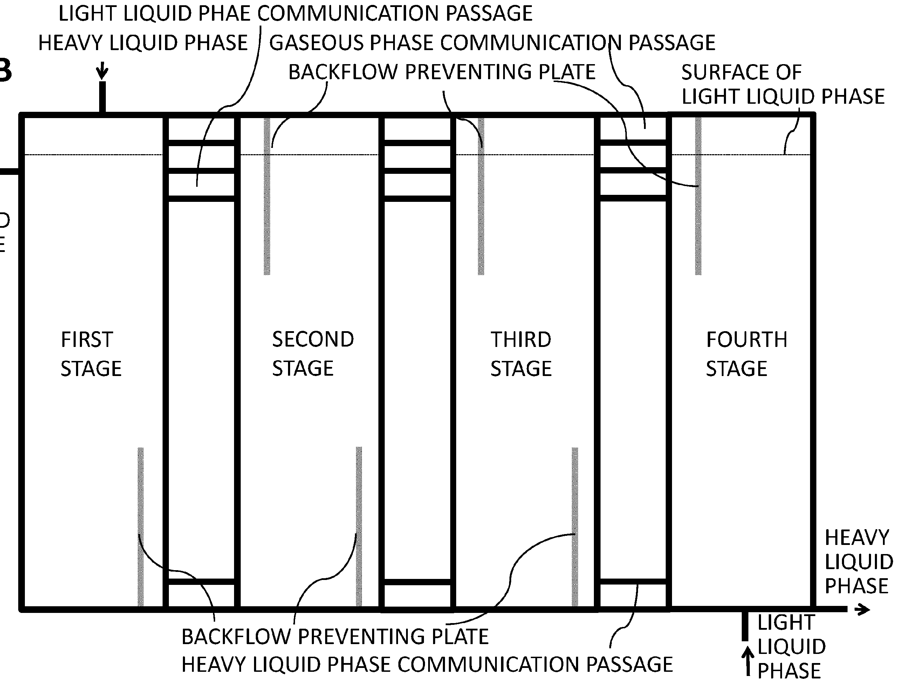

FIG. 8B shows an example of the internal multistage of a connection type with counter-current contact, where each of the heavy liquid phase and the light liquid phase communicates separately, the upper backflow preventing plate is provided on the left side of the stage and the lower one on the right side, and a gaseous phase communication passage is also provided

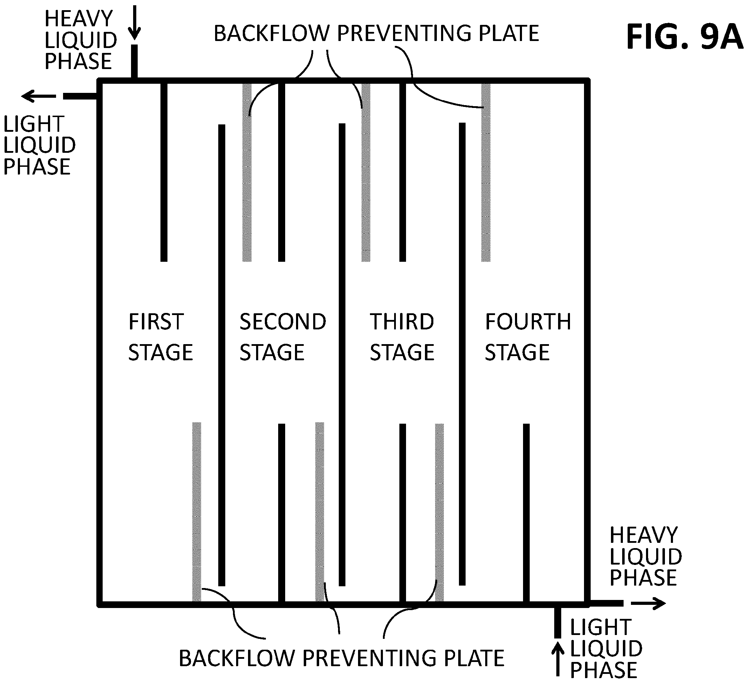

FIG. 9A shows an example of the internal multistage of a partition plate type with counter-current contact, where each of the heavy liquid phase and the light liquid phase communicates separately (communication near the ceiling of the container), and the upper backflow preventing plate is provided on the left side of the stage and the lower one on the right side.

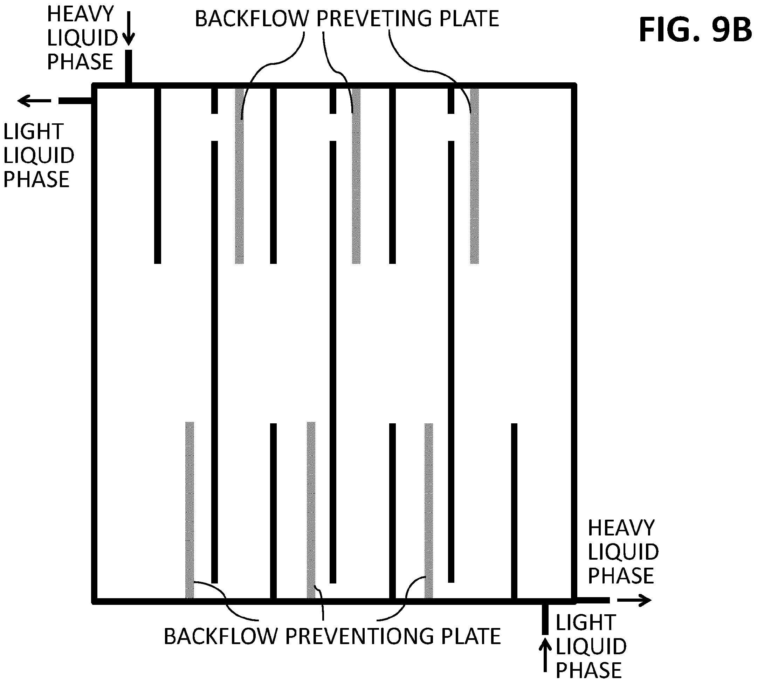

FIG. 9B shows an example of the internal multistage of a partition plate type with counter-current contact, where each of the heavy liquid phase and the light liquid phase communicates separately (communication through a hole provided above the stage dividing plate), and the upper backflow preventing plate is provided on the left side of the stage and the lower one on the right side (Example 1).

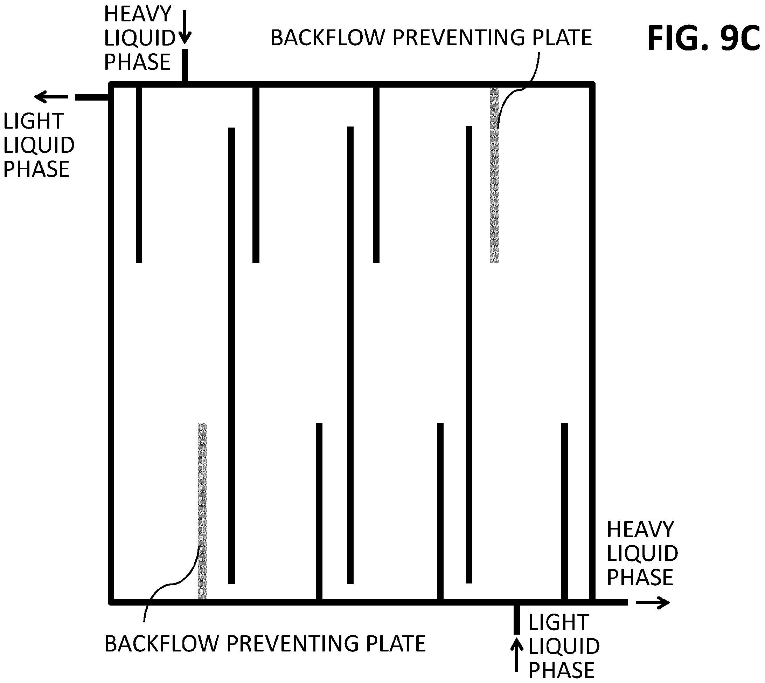

FIG.9C shows an example of the internal multistage of a partition plate type with counter-current contact, where each of the heavy liquid phase and the light liquid phase communicates separately (communication near the ceiling of the container), and the upper backflow preventing plate is provided on the left side of the stage and the lower one on the right side (Example 2).

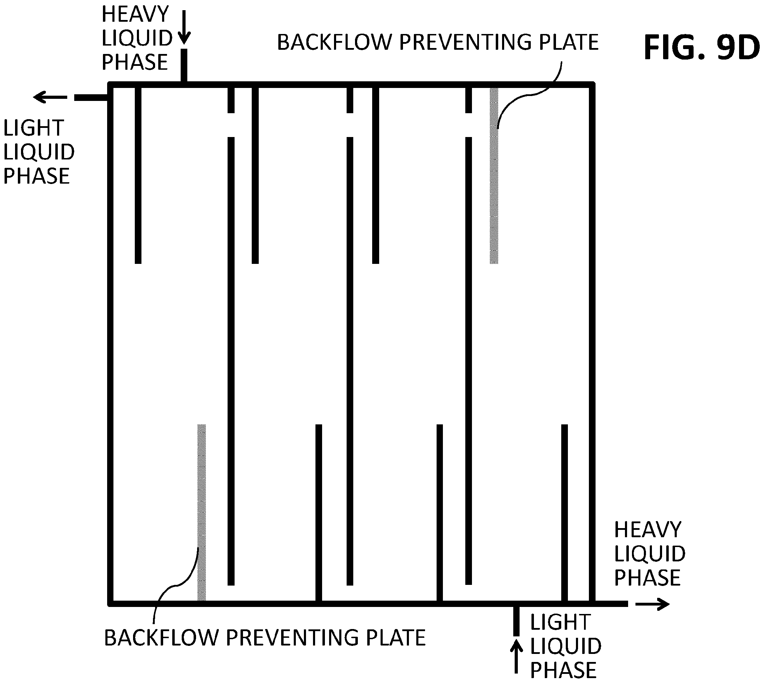

FIG.9D shows an example of the internal multistage of a partition plate type with counter-current contact, where each of the heavy liquid phase and the light liquid phase communicates separately (communication through a hole provided above the stage dividing plate), and the upper backflow preventing plate is provided on the left side of the stage and the lower one on the right side (Example 2).

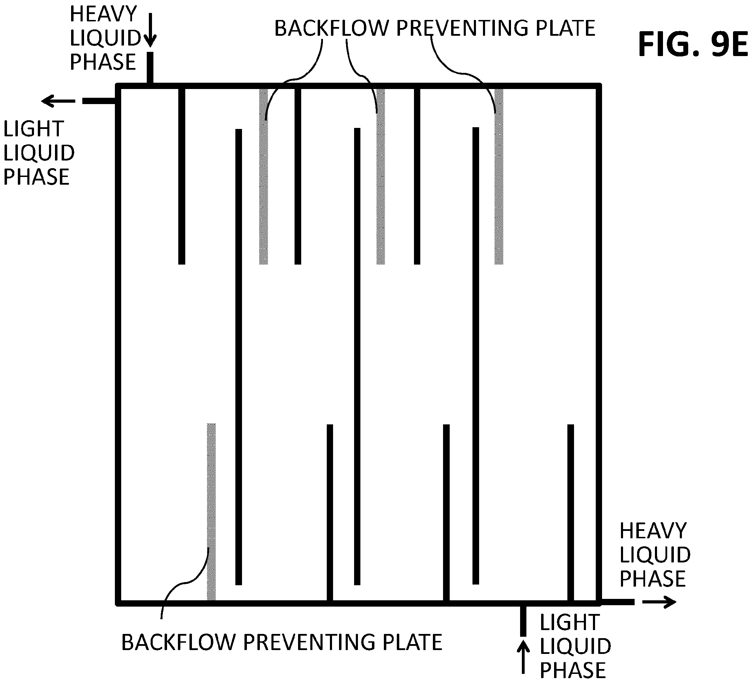

FIG. 9E shows an example of the internal multistage of a partition plate type with counter-current contact, where each of the heavy liquid phase and the light liquid phase communicates separately (communication near the ceiling of the container), and the upper backflow preventing plate is provided on the left of the stage and the lower one on the right side (Example 3).

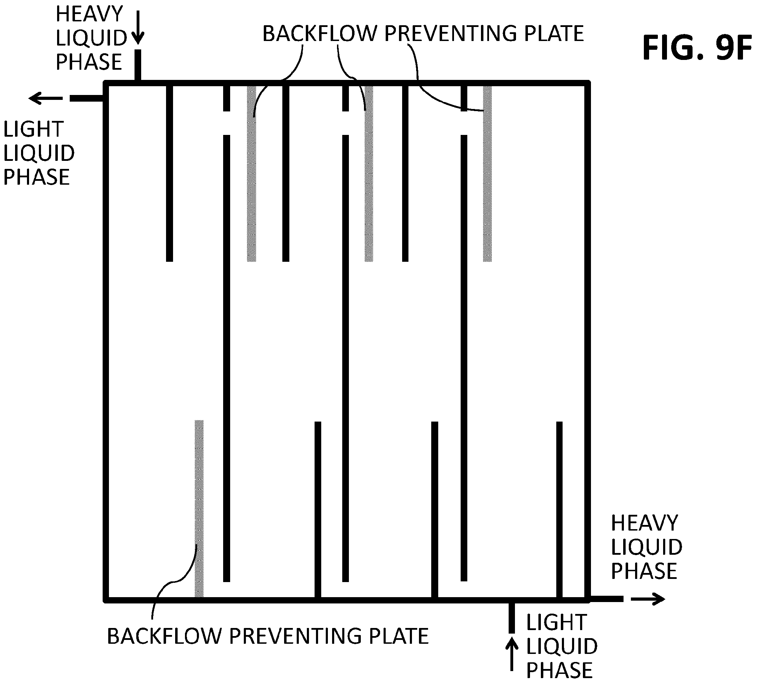

FIG. 9F shows an example of the internal multistage of a partition plate type with counter-current contact, where each of the heavy liquid phase and the light liquid phase communicates separately (communication through a hole provided above the stage dividing plate), and the upper backflow preventing plate is provided on the left of the stage and the lower one on the right side (Example 3).

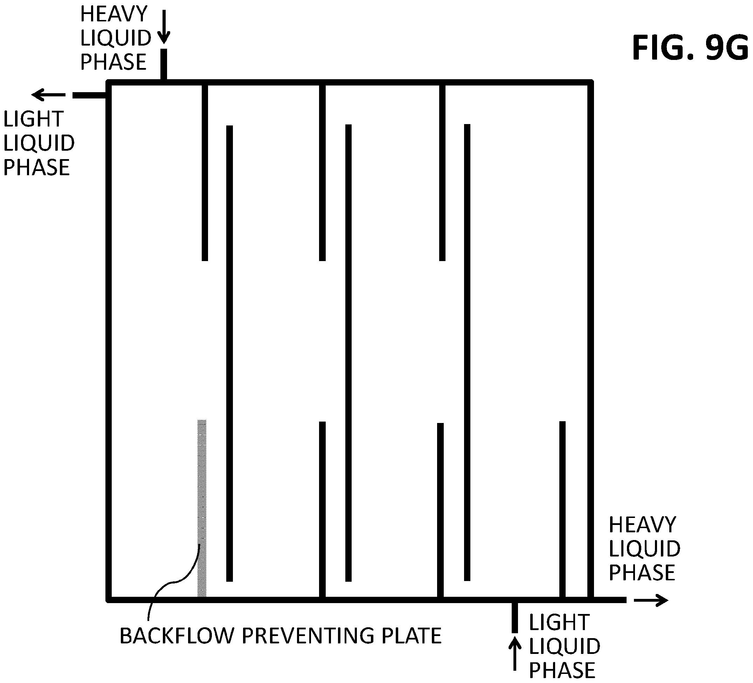

FIG. 9G shows an example of the internal multistage of a partition plate type with counter-current contact, where each of the heavy liquid phase and the light liquid phase communicates separately (communication near the ceiling of the container), and the lower backflow preventing plate is provided on the right side.

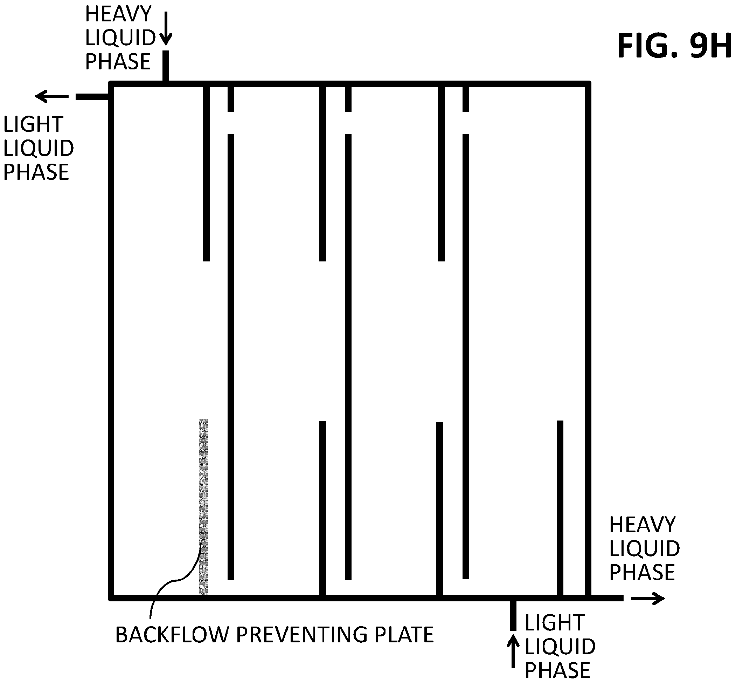

FIG. 9H shows an example of the internal multistage of a partition plate type with counter-current contact, where each of the heavy liquid phase and the light liquid phase communicates separately (communication through a hole provided above the stage dividing plate), and the lower backflow pre

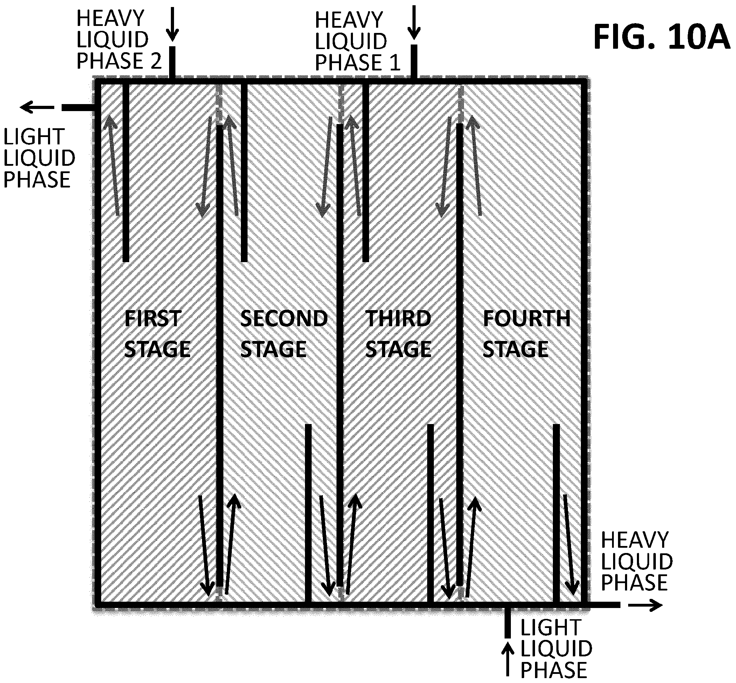

FIG. 10A shows an example of the internal multistage of a partition plate type with counter-current contact, where each of the heavy liquid phase and the light liquid phase communicates separately, and two kinds of heavy liquid phases are introduced (Example 1).

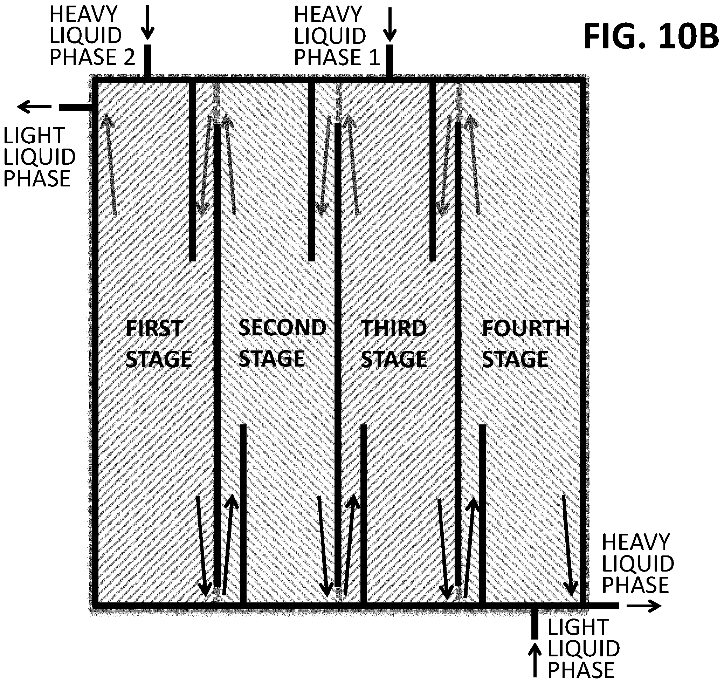

FIG. 10B shows an example of the internal multistage of a partition plate type with counter-current contact, where each of the heavy liquid phase and the light liquid phase communicates separately, and two kinds of heavy liquid phases are introduced (Example 2).

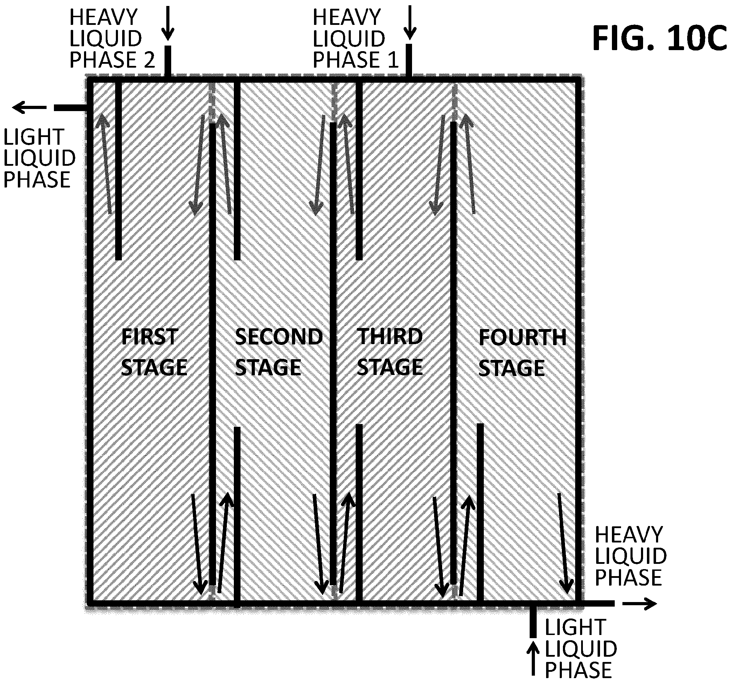

FIG. 10C shows an example of the internal multistage of a partition plate type with counter-current contact, where each of the heavy liquid phase and the light liquid phase communicates separately, and two kinds of heavy liquid phases are introduced (Example 3).

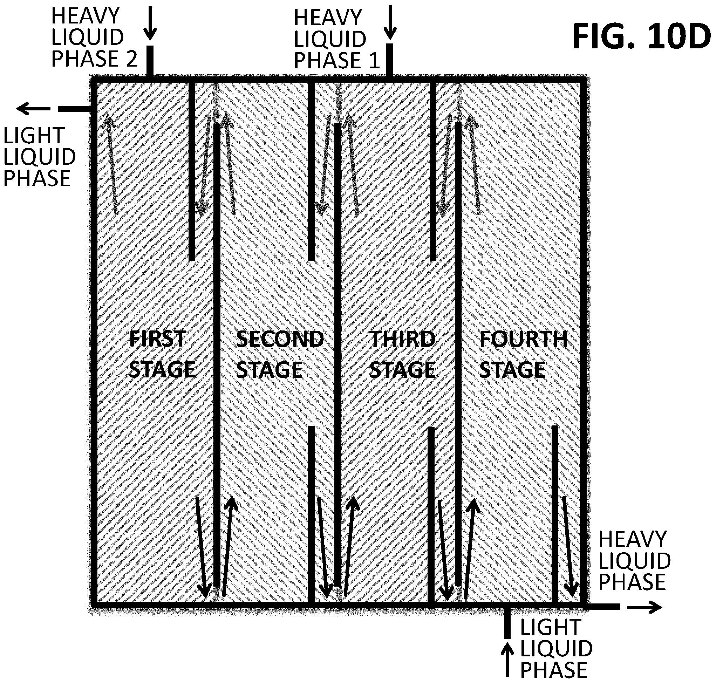

FIG. 10D shows an example of the internal multistage of a partition plate type with counter-current contact, where each of the heavy liquid phase and the light liquid phase communicates separately, and two kinds of heavy liquid phases are introduced (Example 4).

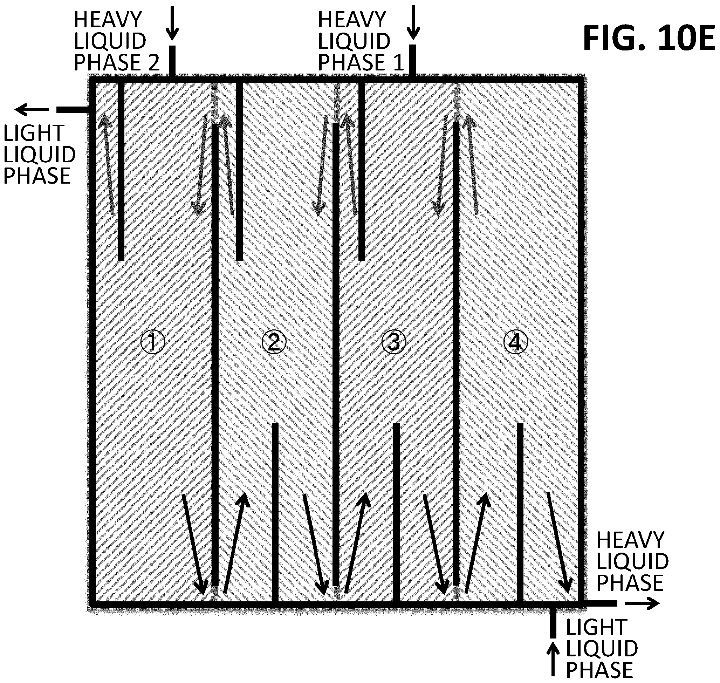

FIG. 10E shows an example of the internal multistage of a partition plate type with counter-current contact, where each of the heavy liquid phase and the light liquid phase communicates separately, and two kinds of heavy liquid phases are introduced (Example 5).

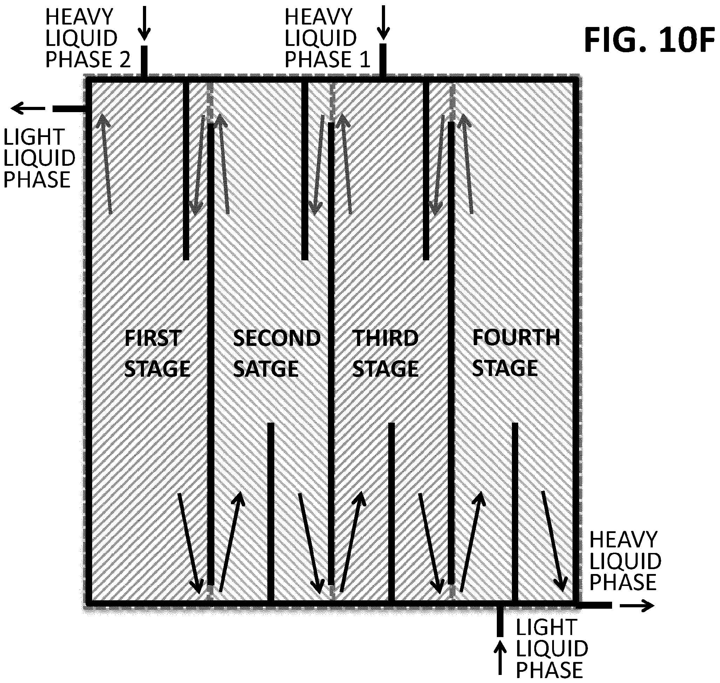

FIG. 10F shows an example of the internal multistage of a partition plate type with counter-current contact, where each of the heavy liquid phase and the light liquid phase communicates separately, and two kinds of heavy liquid phases are introduced (Example 6).

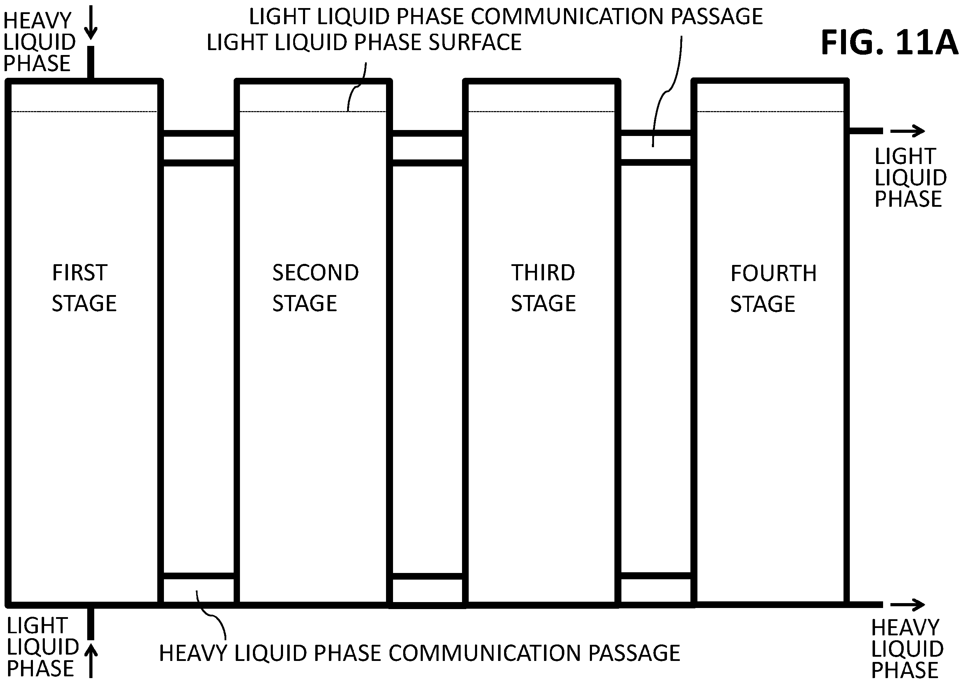

FIG. 11A shows an example of the internal multistage of a connection type with parallel contact, where each of the heavy liquid phase and the light liquid phase communicates separately, and one heavy liquid phase introduction port and one light liquid phase introduction port are provided.

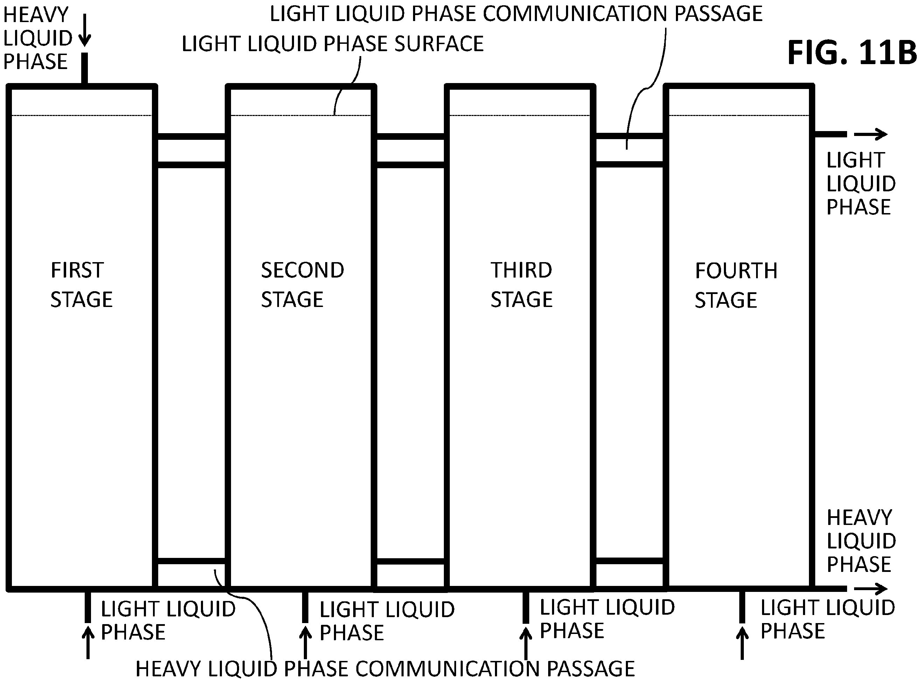

FIG. 11B shows an example of the internal multistage of a connection type with parallel contact, where each of the heavy liquid phase and the light liquid phase communicates separately, and one heavy liquid phase introduction port and a plurality of light liquid phase introduction ports are provided.

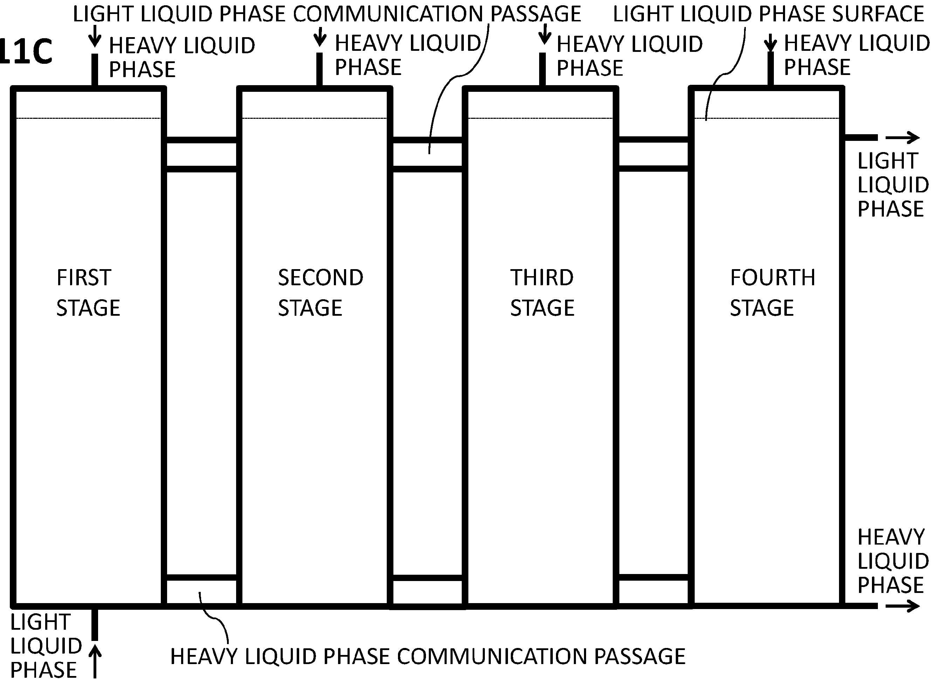

FIG. 11C shows an example of the internal multistage of a connection type with parallel contact, where each of the heavy liquid phase and the light liquid phase communicates separately, and a plurality of heavy liquid phase introduction ports and one light liquid phase introduction port are provided.

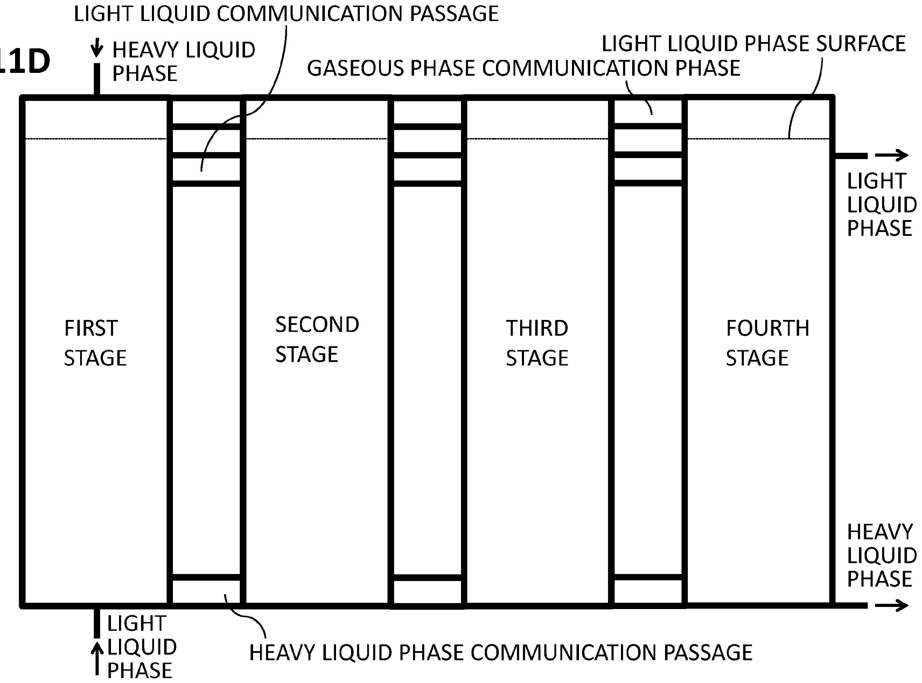

FIG. 11D shows an example of the internal multistage of a connection type with parallel contact, where each of the heavy liquid phase and the light liquid phase communicates separately, one heavy liquid phase introduction port and one light liquid phase introduction port are provided, and a gaseous phase communication passage is provided.

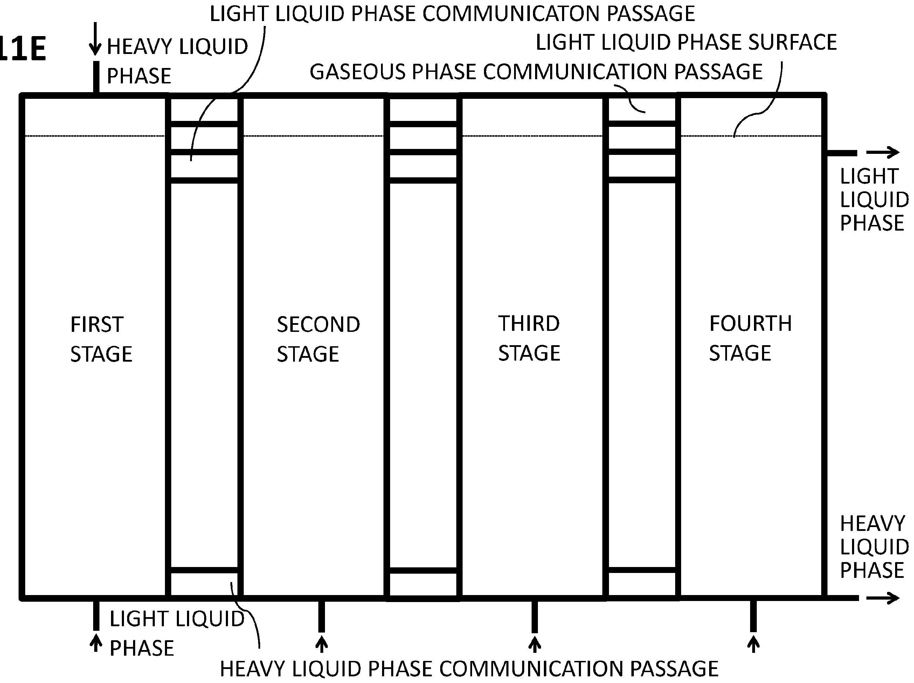

FIG. 11E shows an example of the internal multistage of a connection type with parallel contact, where each of the heavy liquid phase and the light liquid phase communicates separately, one heavy liquid phase introduction port and a plurality of light liquid phase introduction ports are provided, and a gaseous phase communication passage is provided.

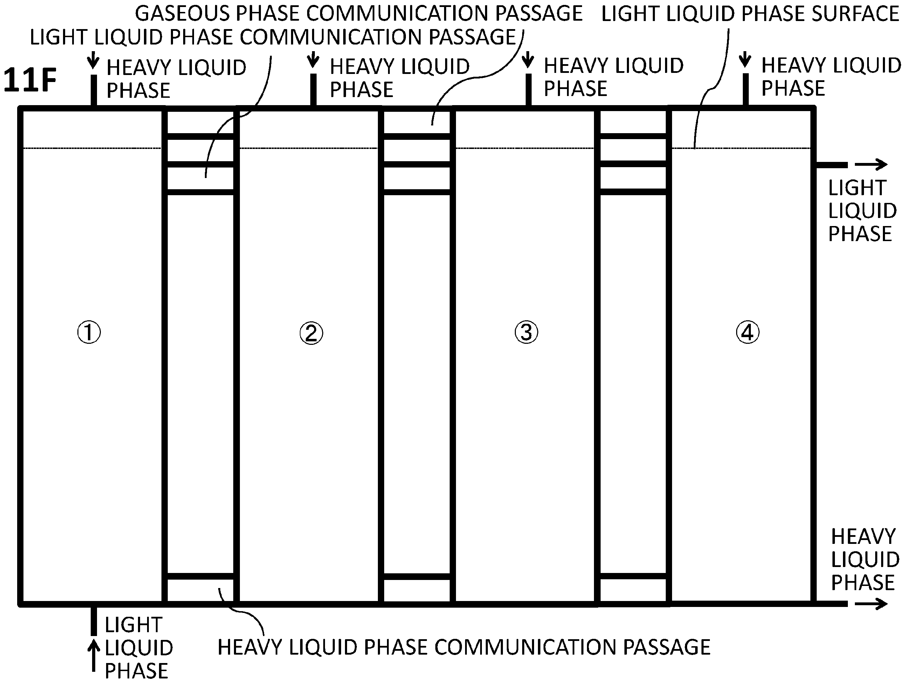

FIG. 11F shows an example of the internal multistage of a connection type with parallel contact, where each of the heavy liquid phase and the light liquid phase communicates separately, a plurality of heavy liquid phase introduction ports and one light liquid phase introduction port are provided, and a gaseous phase communication passage is provided.

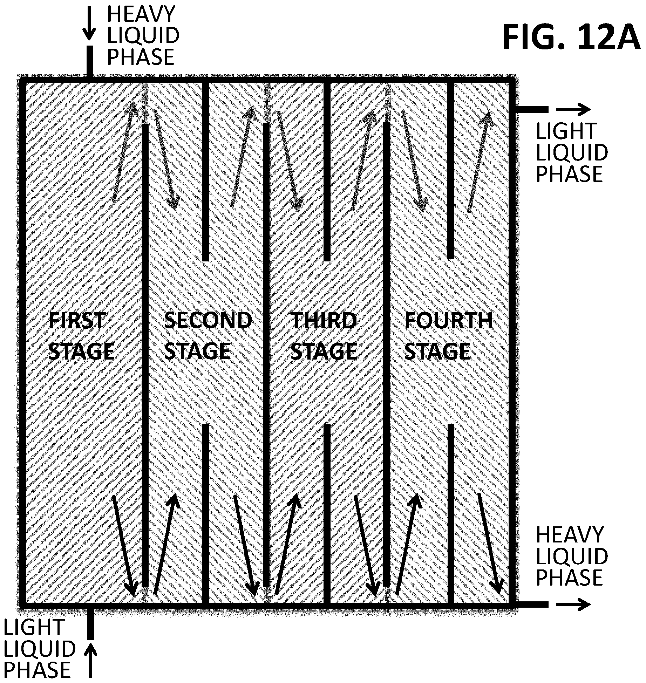

FIG. 12A shows an example of the internal multistage of a partition plate type with parallel contact, where each of the heavy liquid phase and the light liquid phase communicates separately, the upper and lower direction change partition plates are provided at the center of the stage, and one heavy liquid phase introduction port and one light liquid phase introduction port are provided.

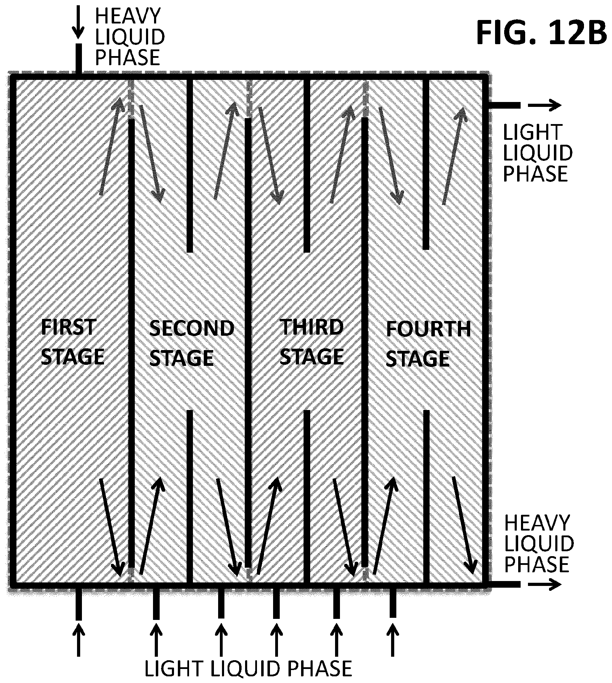

FIG. 12B shows an example of the internal multistage of a partition plate type with parallel contact, where each of the heavy liquid phase and the light liquid phase communicates separately, the upper and lower direction change partition plates are provided at the center of the stage, and one heavy liquid phase introduction port and a plurality of light liquid phase introduction ports are provided.

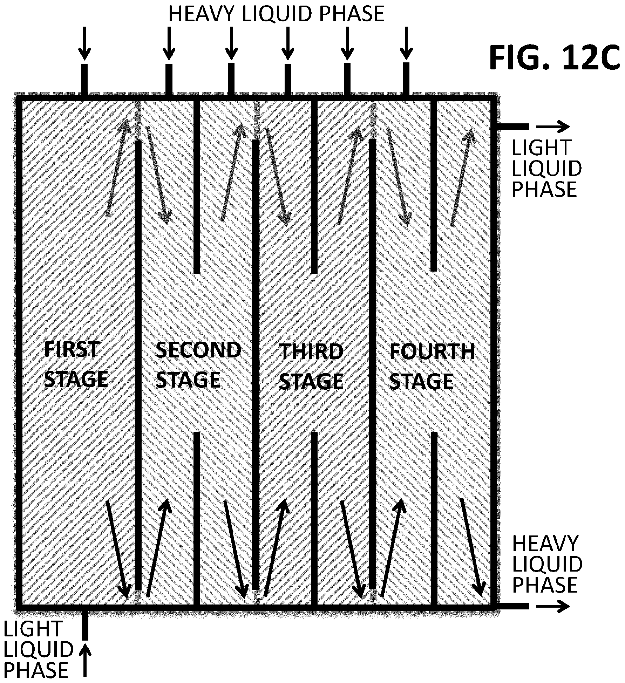

FIG. 12C shows an example of the internal multistage of a partition plate type with parallel contact, where each of the heavy liquid phase and the light liquid phase communicates separately, the upper and lower direction change partition plates are provided at the center of the stage, and a plurality of heavy liquid phase introduction ports and one light liquid phase introduction port are provided.

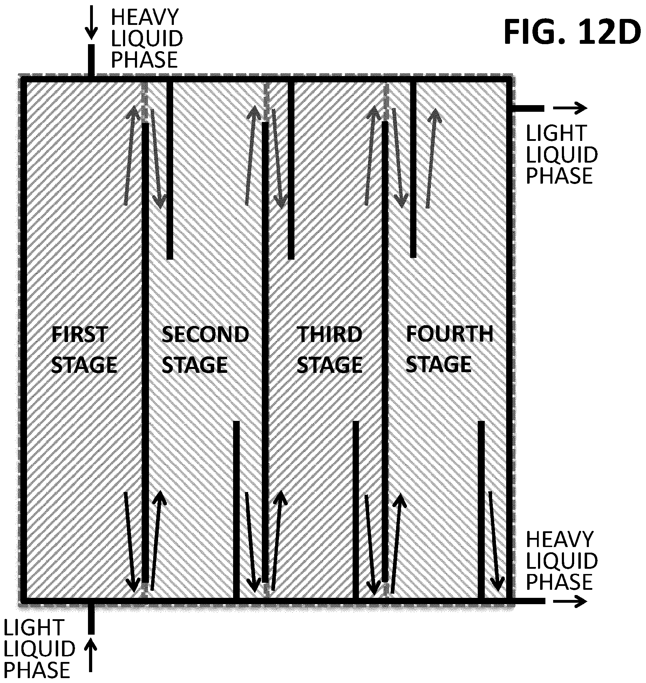

FIG. 12D shows an example of the internal multistage of a partition plate type with parallel contact, where each of the heavy liquid phase and the light liquid phase communicates separately, the upper direction change partition plate is provided on the left side of the stage and the lower one on the right side, and one heavy liquid phase introduction port and one light liquid phase introduction port are provided.

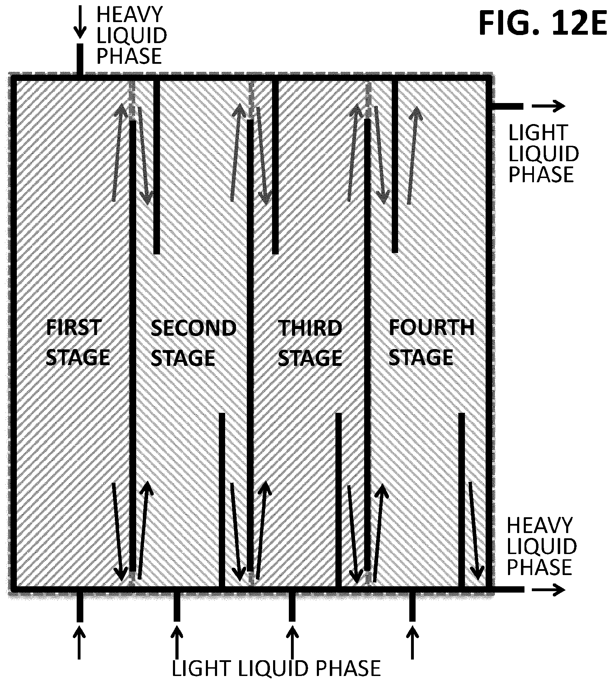

FIG. 12E shows an example of the internal multistage of a partition plate type with parallel contact, where each of the heavy liquid phase and the light liquid phase communicates separately, the upper direction change partition plate is provided on the left side of the stage and the lower one on the right side, and one heavy liquid phase introduction port and a plurality of light liquid phase introduction ports are provided.

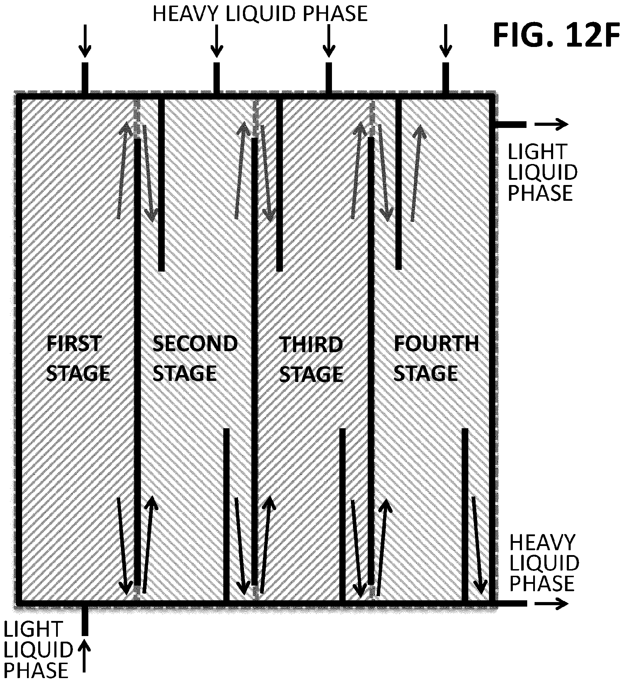

FIG. 12F shows an example of the internal multistage of a partition plate type with parallel contact, where each of the heavy liquid phase and the light liquid phase communicates separately, the upper direction change partition plate is provided on the left side of the stage and the lower one on the right side, and a plurality of heavy liquid phase introduction ports and one light liquid phase introduction port are provided.

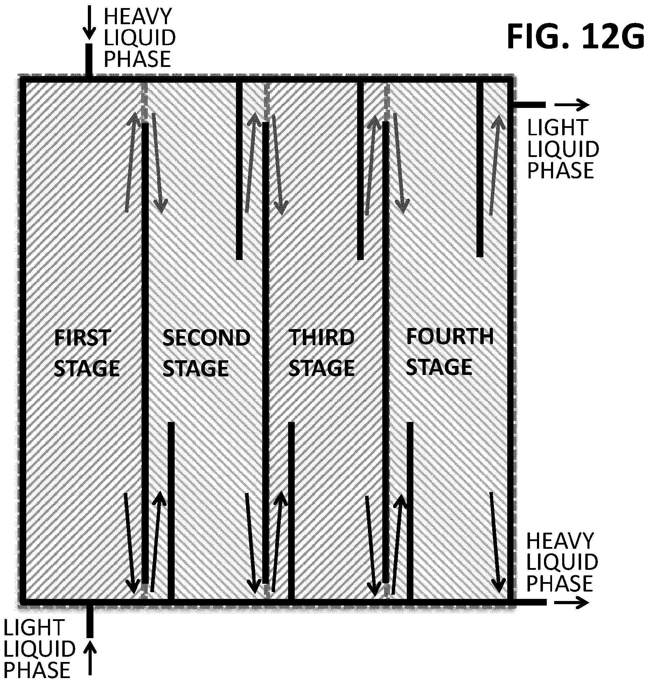

FIG. 12G shows an example of the internal multistage of a partition plate type with parallel contact, where each of the heavy liquid phase and the light liquid phase communicates separately, the upper direction change partition plate is provided on the right side of the stage and the lower one on the left side, and one heavy liquid phase introduction port and a plurality of light liquid phase introduction ports are provided.

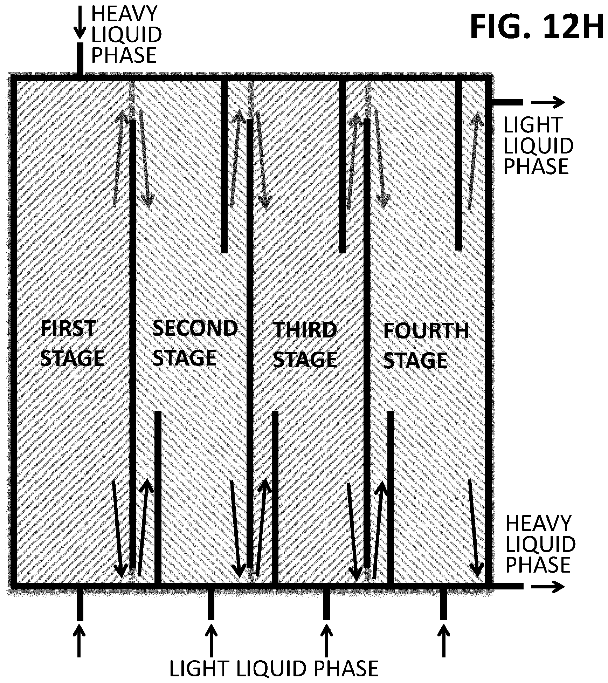

FIG. 12H shows an example of the internal multistage of a partition plate type with parallel contact, where each of the heavy liquid phase and the light liquid phase communicates separately, the upper direction change partition plate is provided on the right side of the stage and the lower one on the left side, and one heavy liquid phase introduction port and a plurality of light liquid phase introduction ports are provided.

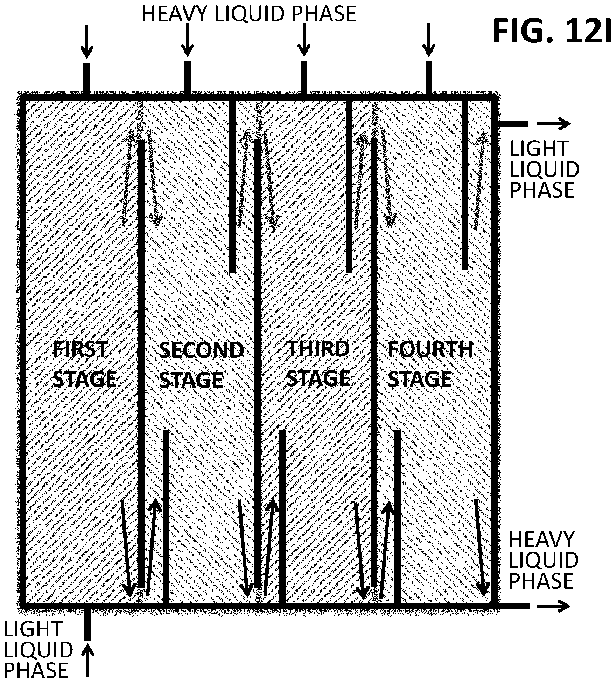

FIG. 12I shows an example of the internal multistage of a partition plate type with parallel contact, where each of the heavy liquid phase and the light liquid phase communicates separately, the upper direction change partition plate is provided on the right side of the stage and the lower one on the left side, and a plurality of heavy liquid phase introduction ports and one light liquid phase introduction port are provided.

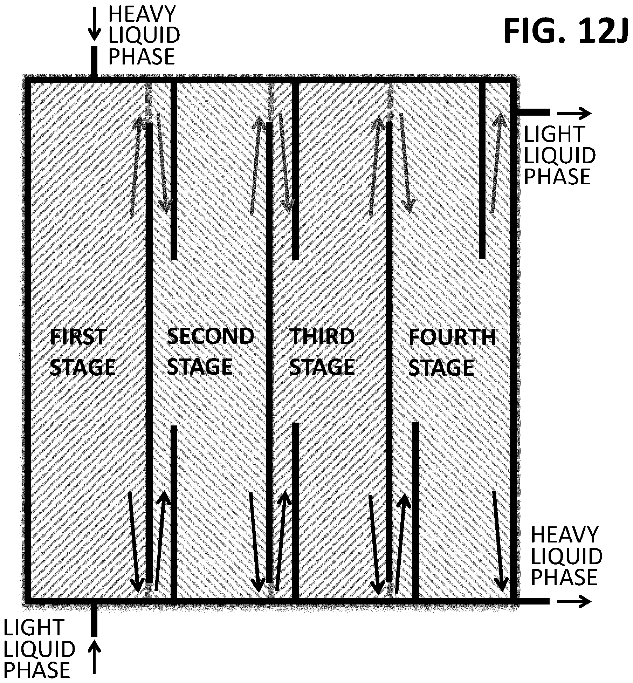

FIG. 12J shows an example of the internal multistage of a partition plate type with parallel contact, where each of the heavy liquid phase and the light liquid phase communicates separately, the upper and lower direction change partition plates are provided on the left side of the stage, and one heavy liquid phase introduction port and one light liquid phase introduction port are provided.

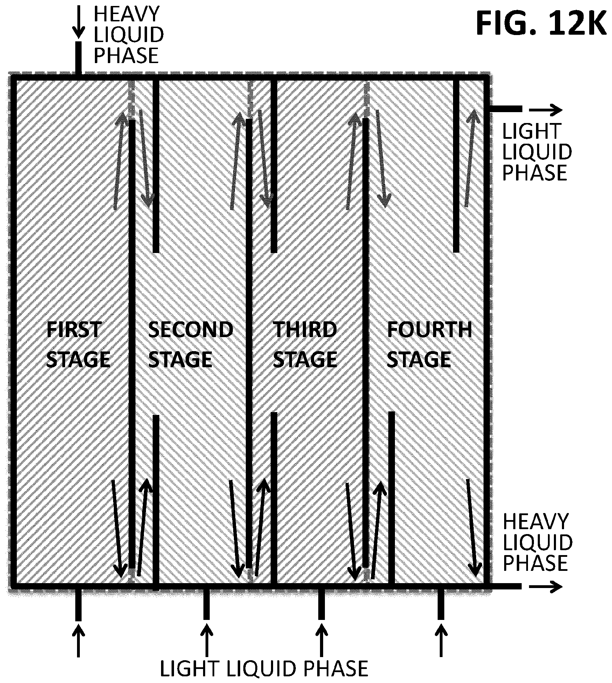

FIG. 12K shows an example of the internal multistage of a partition plate type with parallel contact, where each of the heavy liquid phase and the light liquid phase communicates separately, the upper and lower direction change partition plates are provided on the left side of the stage, and one heavy liquid phase introduction port and a plurality of light liquid phase introduction ports are provided.

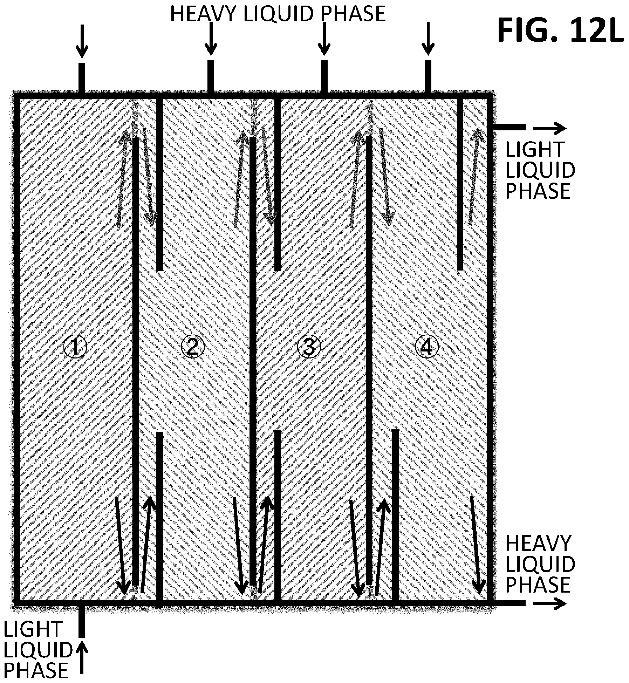

FIG. 12L shows an example of the internal multistage of a partition plate type with parallel contact, where each of the heavy liquid phase and the light liquid phase communicates separately, the upper and lower direction change partition plates are provided on the left side of the stage, and a plurality of heavy liquid phase introduction ports and one light liquid phase introduction port are provided.

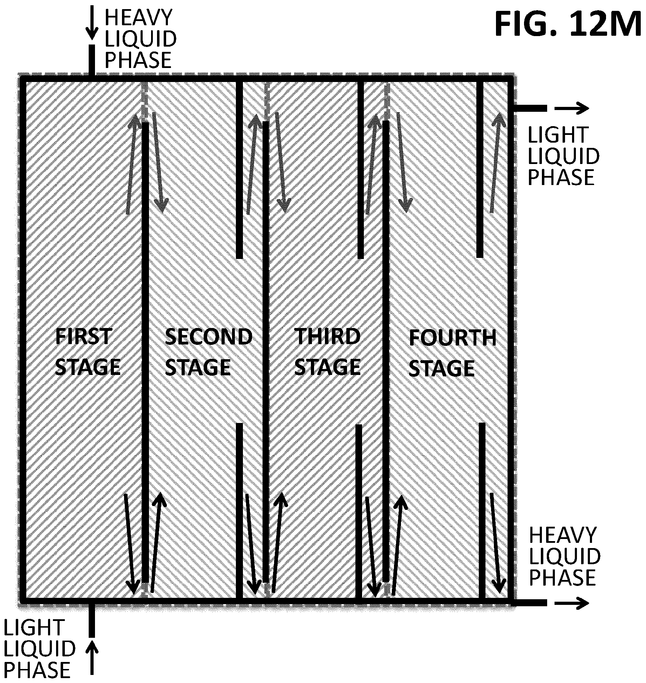

FIG. 12M shows an example of the internal multistage of a partition plate type with parallel contact, where each of the heavy liquid phase and the light liquid phase communicates separately, the upper and lower direction change partition plates are provided on the right side of the stage, and one heavy liquid phase introduction port and one light liquid phase introduction port are provided.

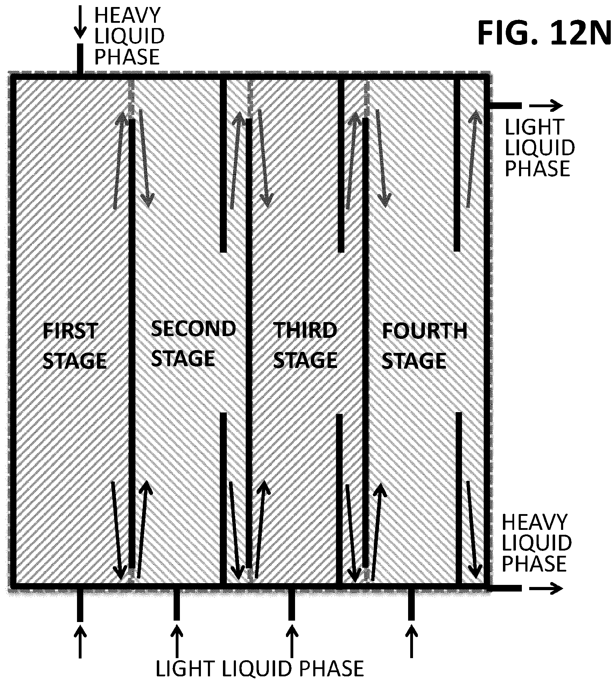

FIG. 12N shows an example of the internal multistage of a partition plate type with parallel contact, where each of the heavy liquid phase and the light liquid phase communicates separately, the upper and lower direction change partition plates are provided on the right side of the stage, and one heavy liquid phase introduction port and a plurality of light liquid phase introduction ports are provided.

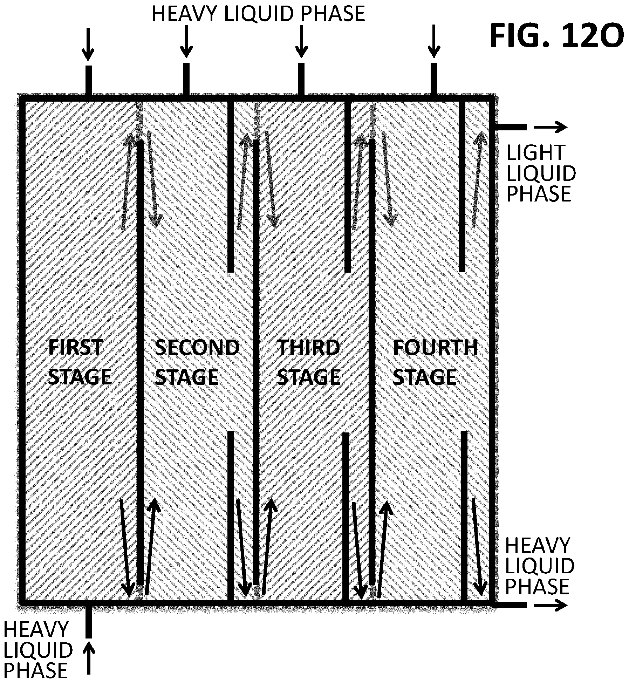

FIG. 12O shows an example of the internal multistage of a partition plate type with parallel contact, where each of the heavy liquid phase and the light liquid phase communicates separately, the upper and lower direction change partition plates are provided on the right side of the stage, and a plurality of heavy liquid phase introduction ports and one light liquid phase introduction port are provided.

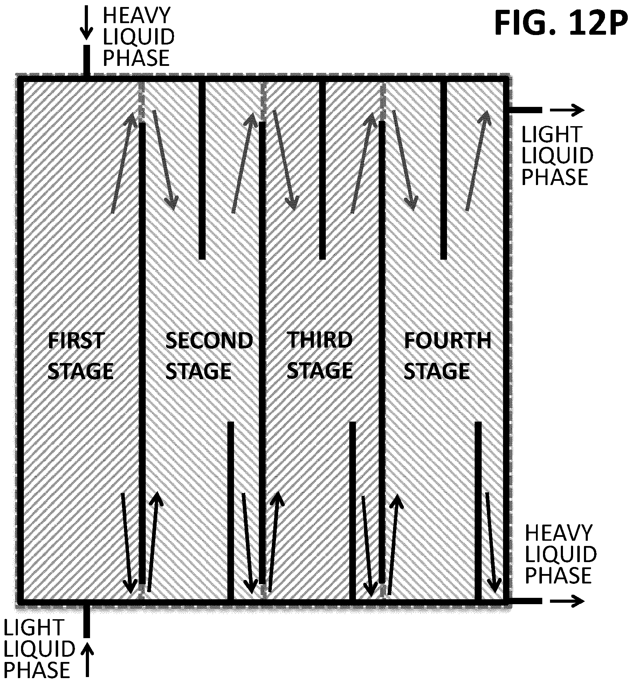

FIG. 12P shows an example of the internal multistage of a partition plate type with parallel contact, where each of the heavy liquid phase and the light liquid phase communicates separately, the upper direction change partition plate is provided at the center of the stage and the lower one on the right side, and one heavy liquid phase introduction port and one light liquid phase introduction port are provided.

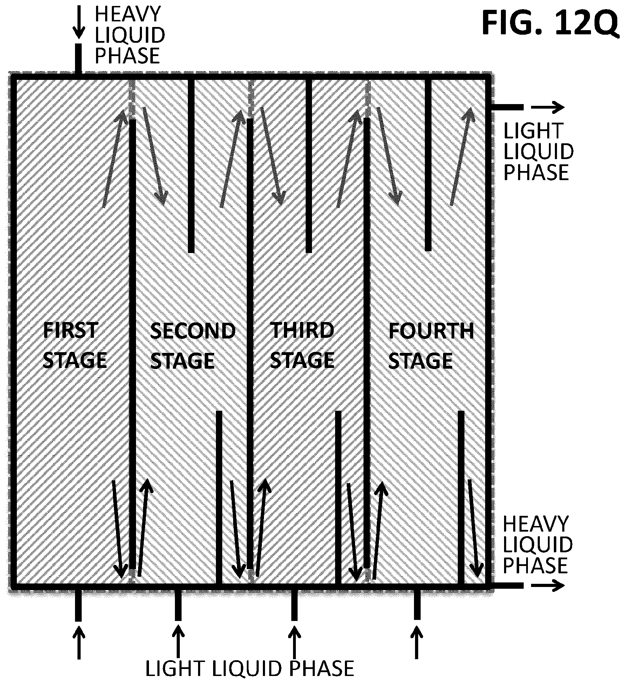

FIG. 12Q shows an example of the internal multistage of a partition plate type with parallel contact, where each of the heavy liquid phase and the light liquid phase communicates separately, the upper direction change partition plate is provided at the center of the stage and the lower one on the right side, and one heavy liquid phase introduction port and one light liquid phase introduction port are provided.

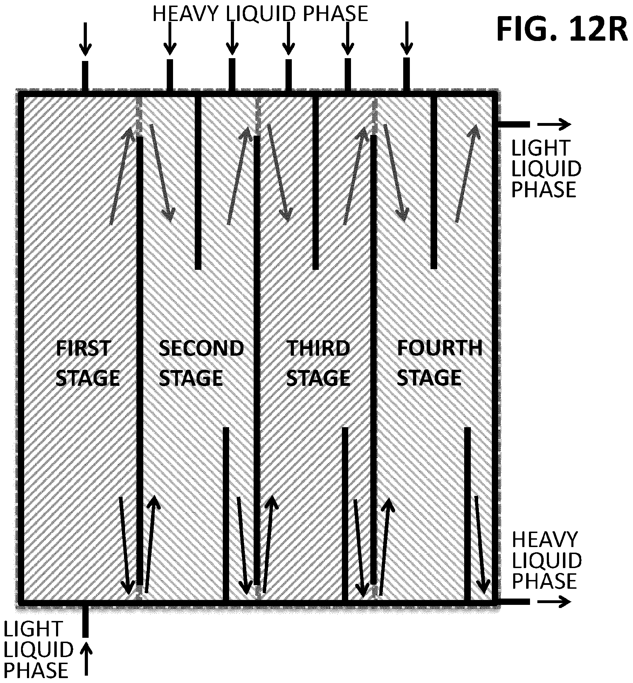

FIG. 12R shows an example of the internal multistage of a partition plate type with parallel contact, where each of the heavy liquid phase and the light liquid phase communicates separately, the upper direction change partition plate is provided on the left side of the stage, and the lower one on the right side, and a plurality of heavy liquid phase introduction ports and one light liquid phase introduction port are provided.

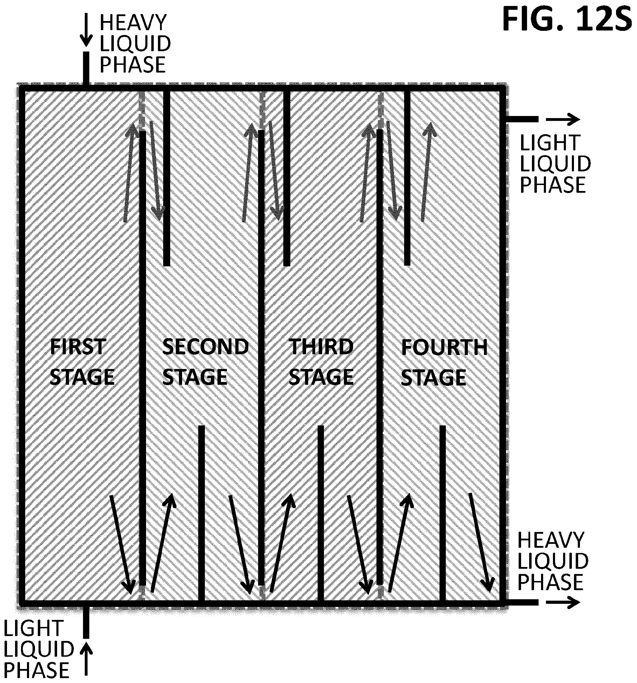

FIG. 12S shows an example of the internal multistage of a partition plate type with parallel contact, where each of the heavy liquid phase and the light liquid phase communicates separately, the upper direction change partition plate is provided on the left of the stage and the lower one at the center of the stage, and one heavy liquid phase introduction port and one light liquid phase introduction port are provided.

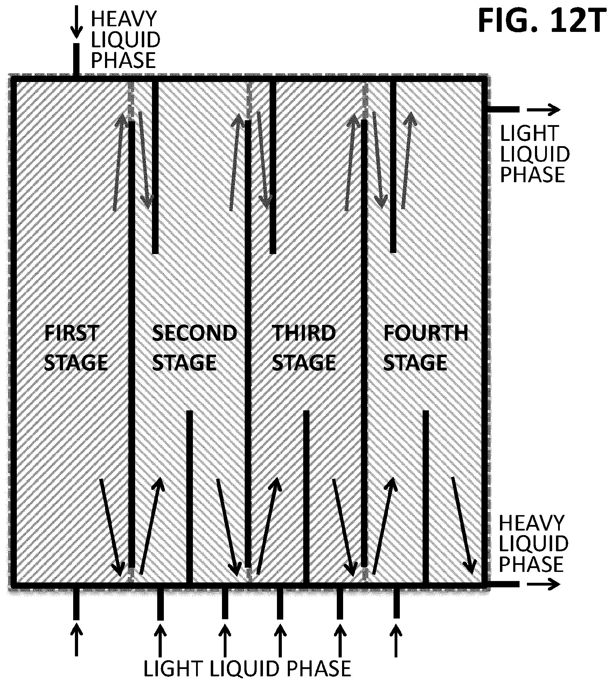

FIG. 12T shows an example of the internal multistage of a partition plate type with parallel contact, where each of the heavy liquid phase and the light liquid phase communicates separately, the upper direction change partition plate is provided on the left side of the stage and the lower one at the center of the stage, and one heavy liquid phase introduction port and a plurality of light liquid phase introduction ports are provided.

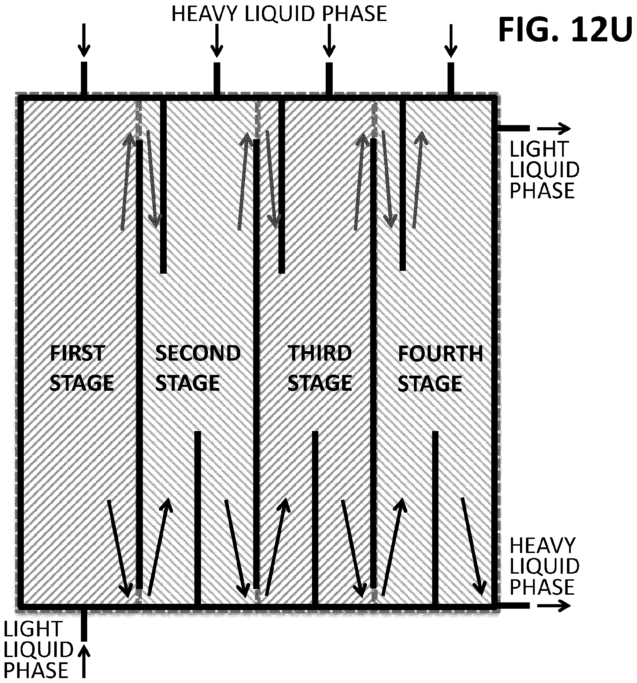

FIG. 12U shows an example of the internal multistage of a partition plate type with parallel contact, where each of the heavy liquid phase and the light liquid phase communicates separately, the upper direction change partition plate is provided on the left side of the stage and the lower one at the center, and a plurality of heavy liquid phase introduction ports and one light liquid phase introduction port are provided.

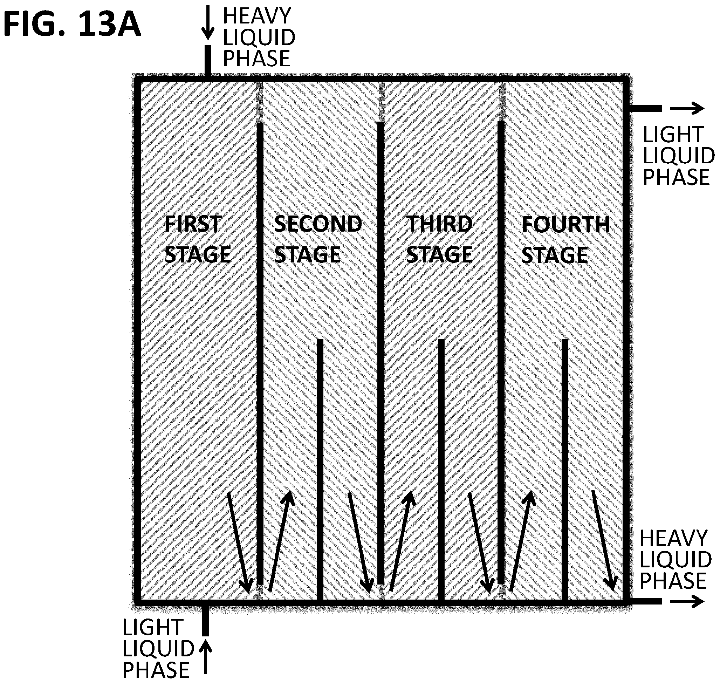

FIG. 13A shows an example of the internal multistage of a partition plate type with parallel contact, where each of the heavy liquid phase and the light liquid phase communicates separately, the direction change partition plate is provided only at the bottom of the center of the stage, and one heavy liquid phase introduction port and one light liquid phase introduction port are provided.

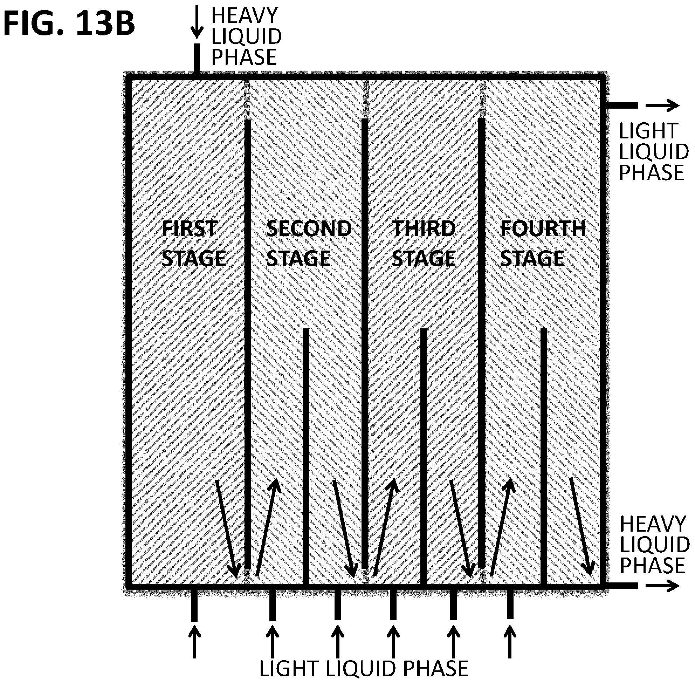

FIG. 13B shows an example of the internal multistage of a partition plate type with parallel contact, where each of the heavy liquid phase and the light liquid phase communicates separately, the direction change partition plate is provided only at the bottom of the center of the stage, and one heavy liquid phase introduction port and a plurality of light liquid phase introduction ports are provided.

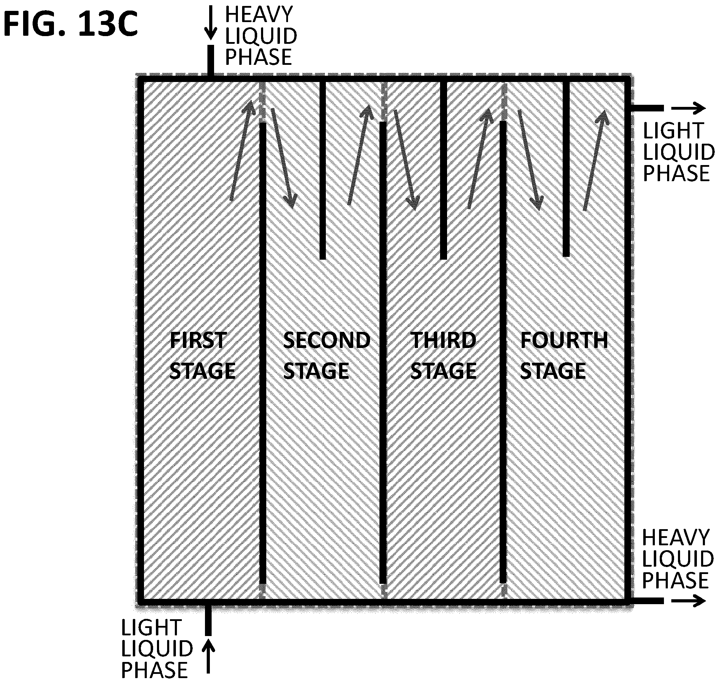

FIG. 13C shows an example of the internal multistage of a partition plate type with parallel contact, where each of the heavy liquid phase and the light liquid phase communicates separately, the direction change partition plate is provided only at the top of the center of the stage, and one heavy liquid phase introduction port and one light liquid phase introduction port are provided.

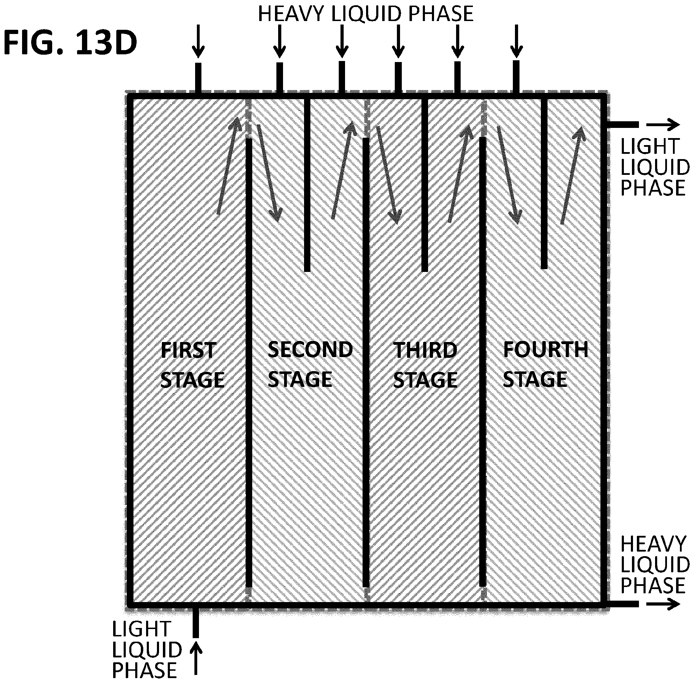

FIG. 13D shows an example of the internal multistage of a partition plate type with parallel contact, where each of the heavy liquid phase and the light liquid phase communicates separately, the direction change partition plate is provided only at the top of the center of the stage, and a plurality of heavy liquid phase introduction ports and one light liquid phase introduction port are provided.

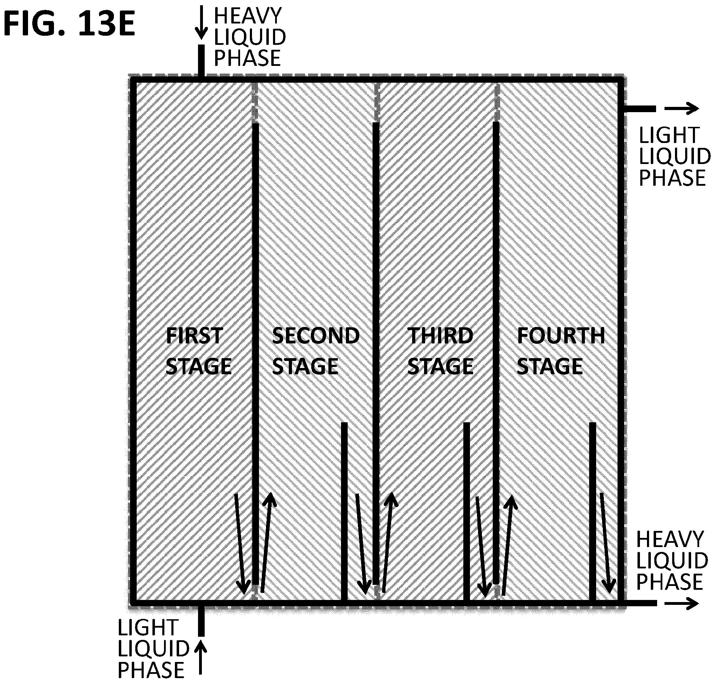

FIG. 13E shows an example of the internal multistage of a partition plate type with parallel contact, where each of the heavy liquid phase and the light liquid phase communicates separately, the direction change partition plate is provided only at the bottom of the right side of the stage, and one heavy liquid phase introduction port and one light liquid phase introduction port are provided.

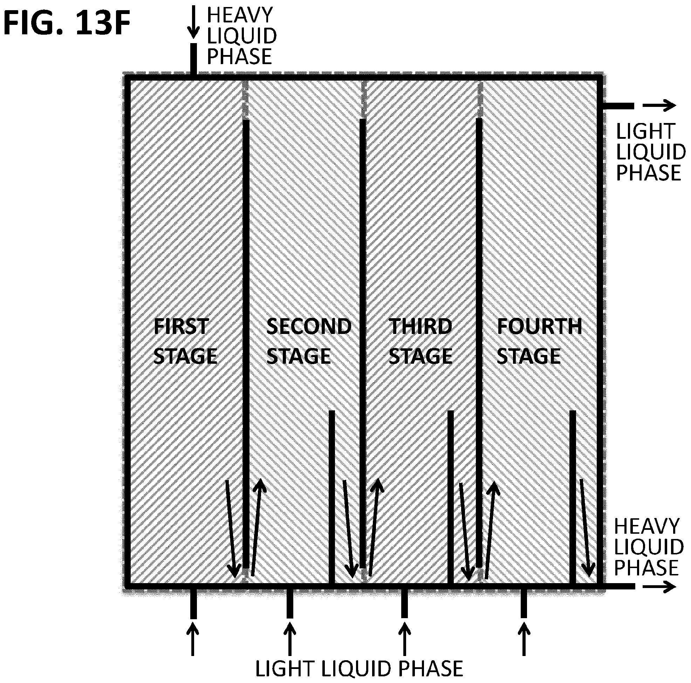

FIG. 13F shows an example of the internal multistage of a partition plate type with parallel contact, where each of the heavy liquid phase and the light liquid phase communicates separately, the direction change partition plate is provided only at the bottom of the right side of the stage, and one heavy liquid phase introduction port and a plurality of light liquid phase introduction ports are provided.

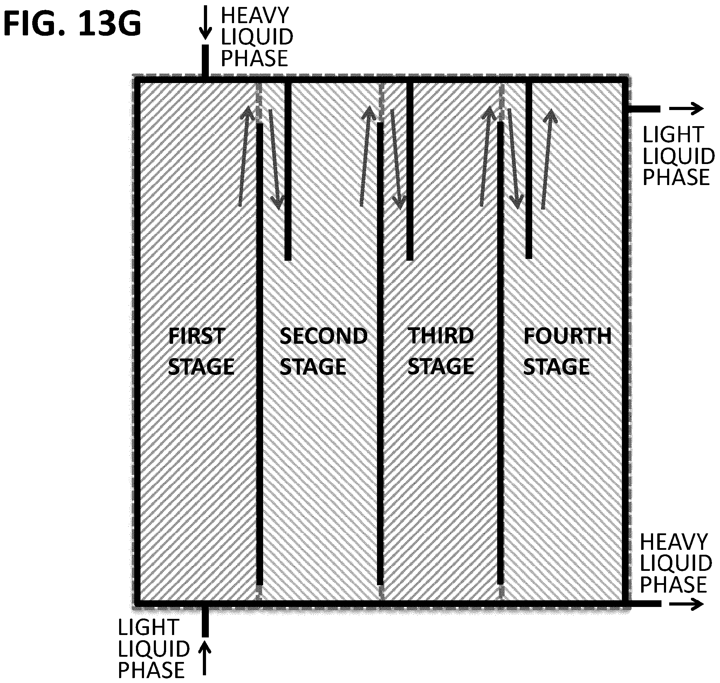

FIG. 13G shows an example of the internal multistage of a partition plate type with parallel contact, where each of the heavy liquid phase and the light liquid phase communicates separately, the direction change partition plate is provided only at the top of the left side of the stage, and one heavy liquid phase introduction port and one light liquid phase introduction port are provided.

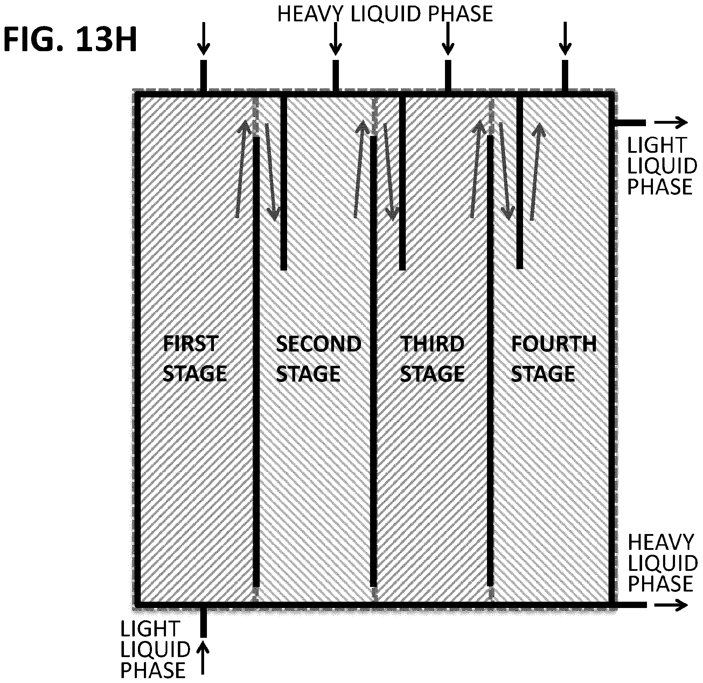

FIG. 13H shows an example of the internal multistage of a partition plate type with parallel contact, where each of the heavy liquid phase and the light liquid phase communicates separately, the direction change partition plate is provided only at the top of the left of the stage, and a plurality of heavy liquid phase introduction ports and one light liquid phase introduction port are provided.

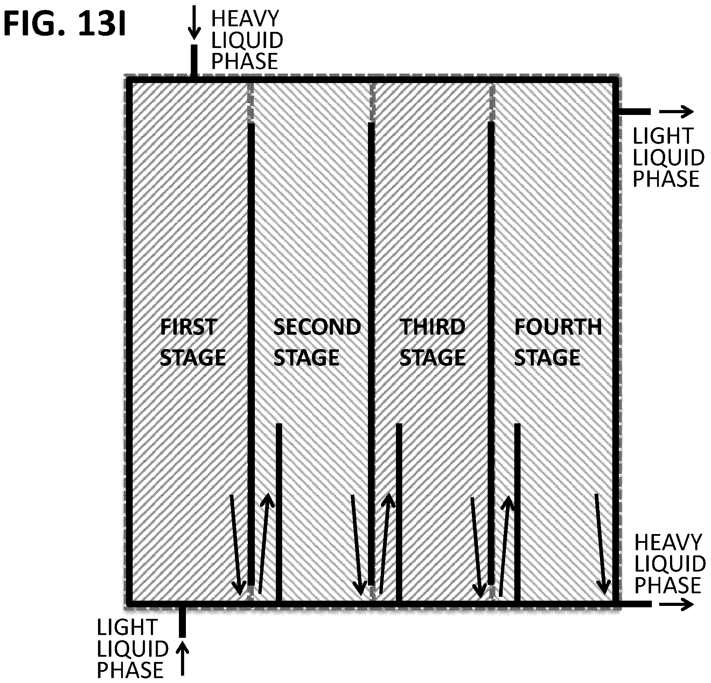

FIG. 13I shows an example of the internal multistage of a partition plate type with parallel contact, where each of the heavy liquid phase and the light liquid phase communicates separately, the direction change partition plate is provided only at the bottom of the right side of the stage, and one heavy liquid phase introduction port and one light liquid phase introduction port are provided.

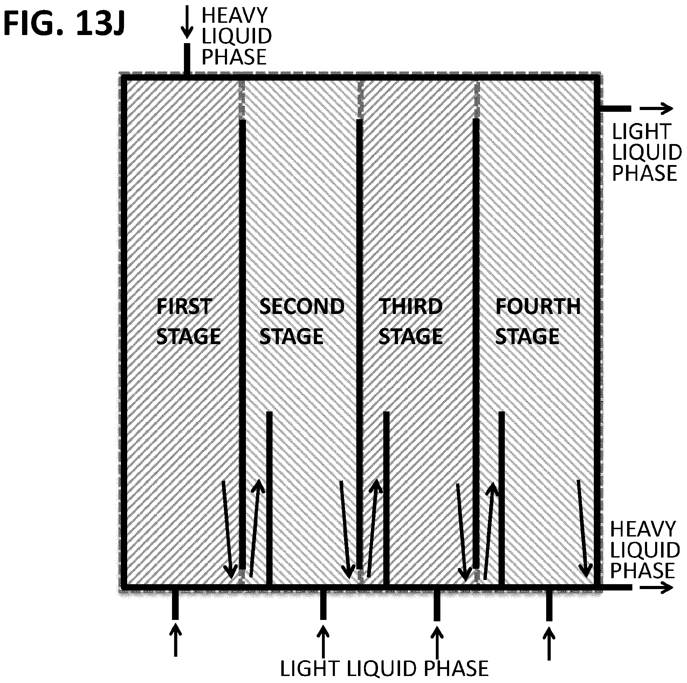

FIG. 13J shows an example of the internal multistage of a partition plate type with parallel contact, where each of the heavy liquid phase and the light liquid phase communicates separately, the direction change partition plate is provided only at the bottom of the left side of the stage, and one heavy liquid phase introduction port and a plurality of light liquid phase introduction ports are provided.

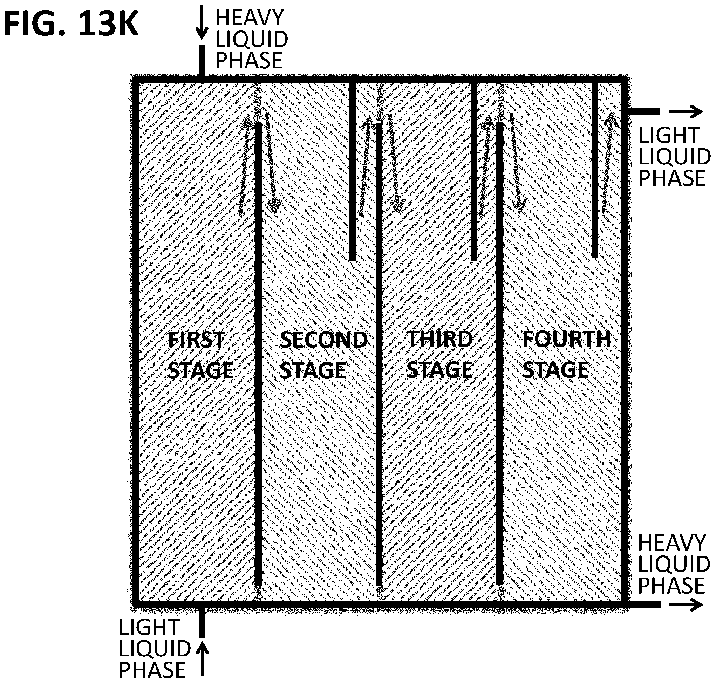

FIG. 13K shows an example of the internal multistage of a partition plate type with parallel contact, where each of the heavy liquid phase and the light liquid phase communicates separately, the direction change partition plate is provided only at the top of the right side of the stage, and one heavy liquid phase introduction port and one light liquid phase introduction port are provided.

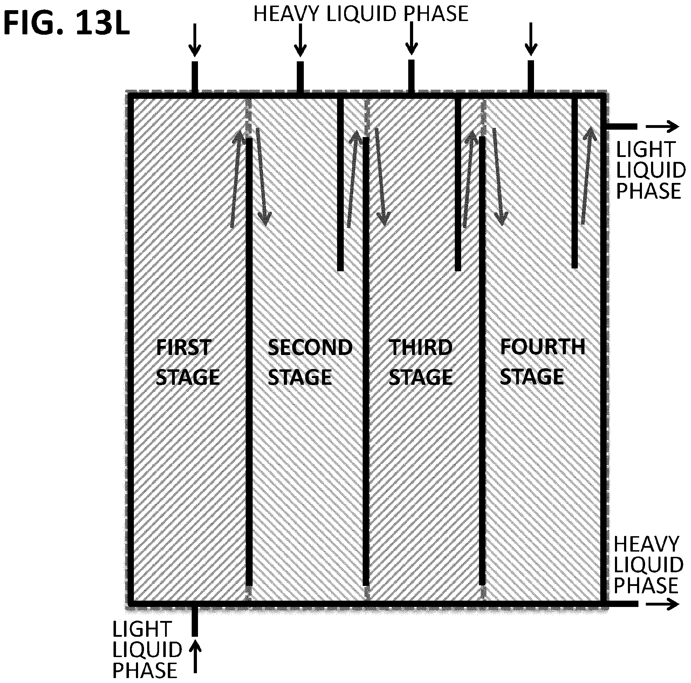

FIG. 13L shows an example of the internal multistage of a partition plate type with parallel contact, where each of the heavy liquid phase and the light liquid phase communicates separately, the direction change partition plate is provided only at the top of the right side of the stage, and a plurality of heavy liquid phase introduction ports and one light liquid phase introduction port are provided.

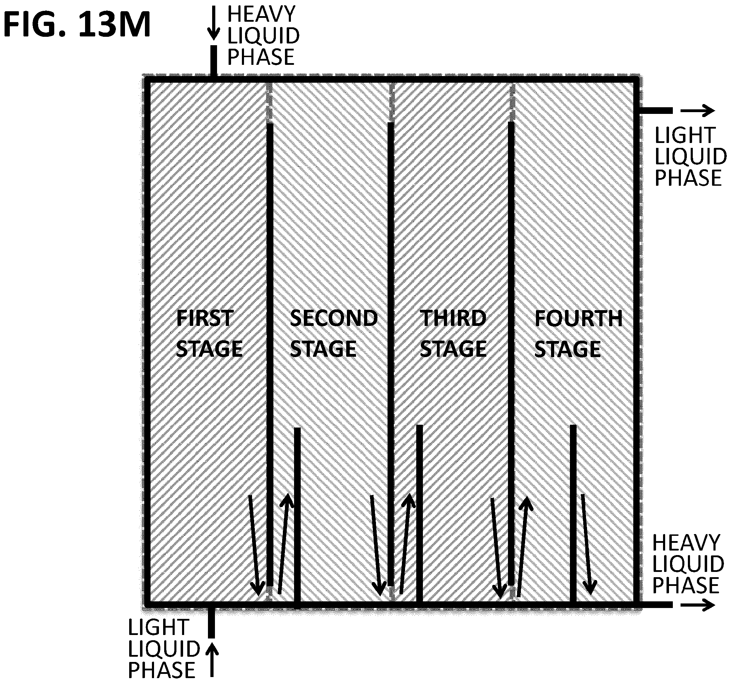

FIG. 13M shows an example of the internal multistage of a partition plate type with parallel contact, where each of the heavy liquid phase and the light liquid phase communicates separately, the direction change partition plate is provided only at the bottom of the left side or the bottom of the center of the stage, and one heavy liquid phase introduction port and one light liquid phase introduction port are provided.

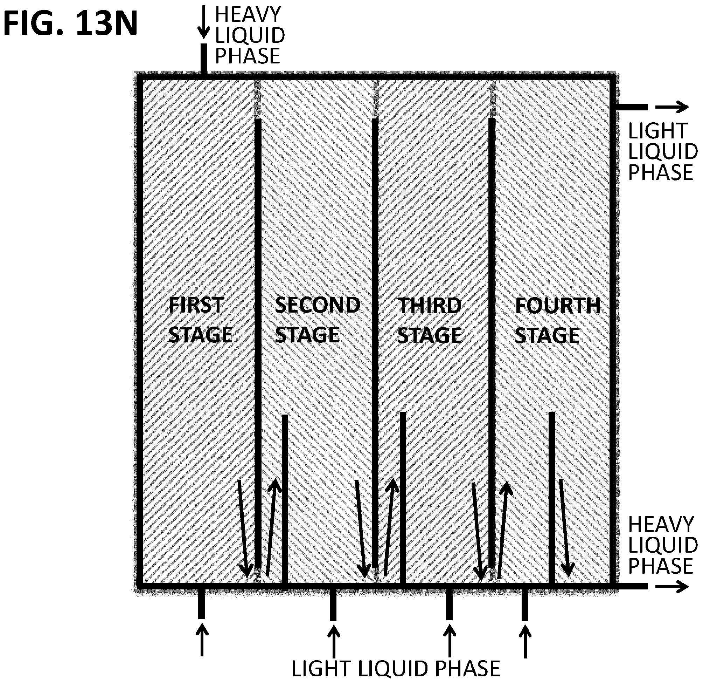

FIG. 13N shows an example of the internal multistage of a partition plate type with parallel contact, where each of the heavy liquid phase and the light liquid phase communicates separately, the direction change partition plate is provided only at the bottom of the left side or the bottom of the center of the stage, and one heavy liquid phase introduction port and a plurality of light liquid phase introduction ports are provided.

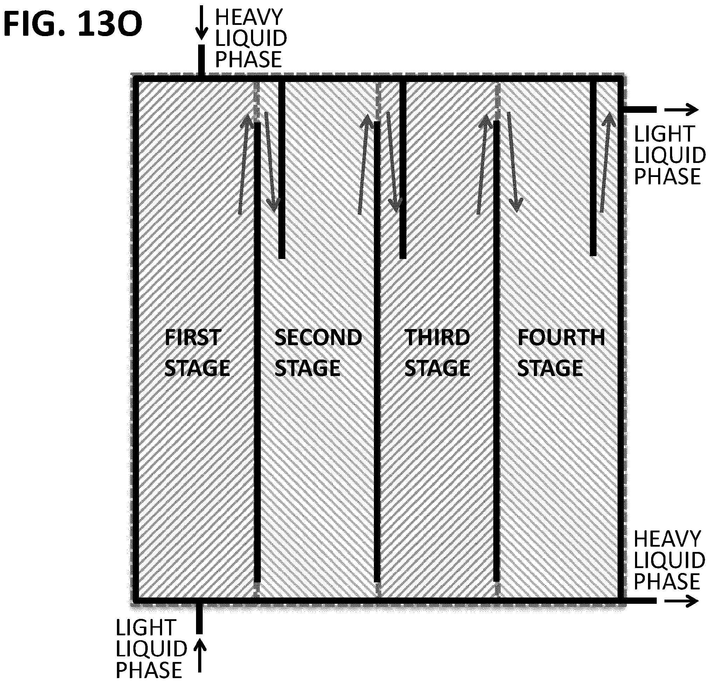

FIG. 13O shows an example of the internal multistage of a partition plate type with parallel contact, where each of the heavy liquid phase and the light liquid phase communicates separately, the direction change partition plate is provided only at the top of the left side or the top of the right side of the stage, and one heavy liquid phase introduction port and one light liquid phase introduction port are provided.

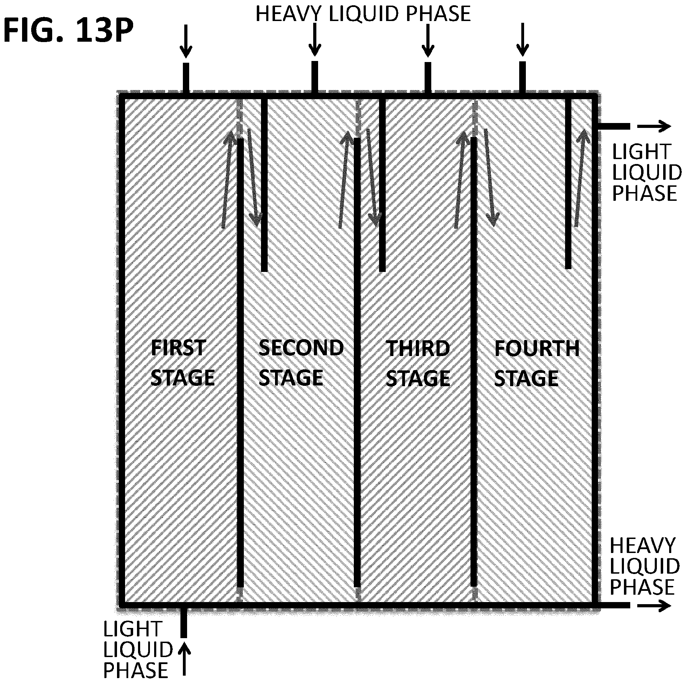

FIG. 13P shows an example of the internal multistage of a partition plate type with parallel contact, where each of the heavy liquid phase and the light liquid phase communicates separately, the direction change partition plate is provided only at the top of the left side or the top of the right side of the stage, and a plurality of heavy liquid phase introduction ports and one light liquid phase introduction port are provided.

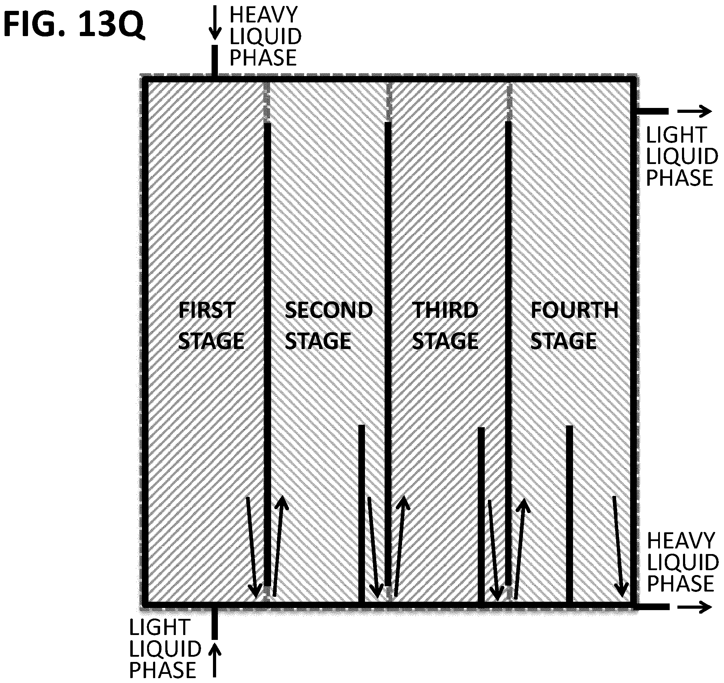

FIG. 13Q shows an example of the internal multistage of a partition plate type with parallel contact, where each of the heavy liquid phase and the light liquid phase communicates separately, the direction change partition plate is provided only at the bottom of the right side or the bottom of the center of the stage, and one heavy liquid phase introduction port and one light liquid phase introduction port are provided.

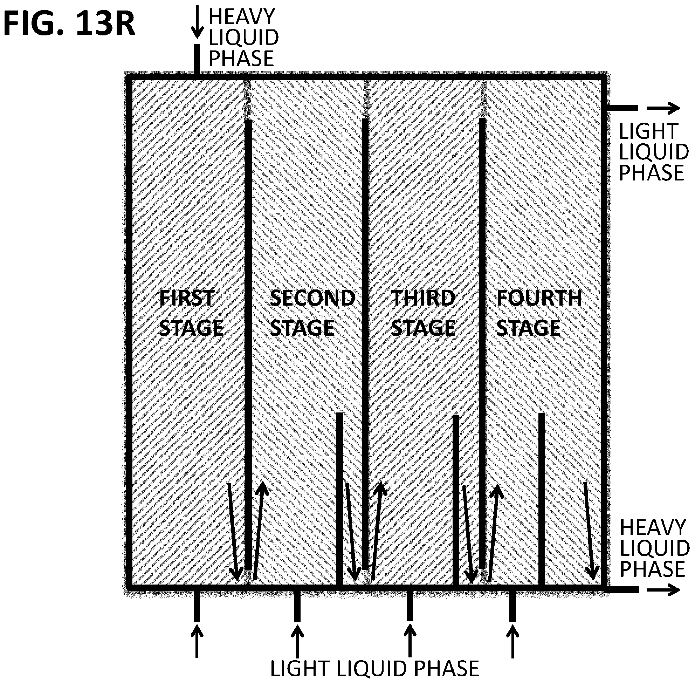

FIG. 13R shows an example of the internal multistage of a partition plate type with parallel contact, where each of the heavy liquid phase and the light liquid phase communicates separately, the direction change partition plate is provided only at the bottom of the right side or the bottom of the center of the stage, and one heavy liquid phase introduction port and a plurality of light liquid phase introduction ports are provided.

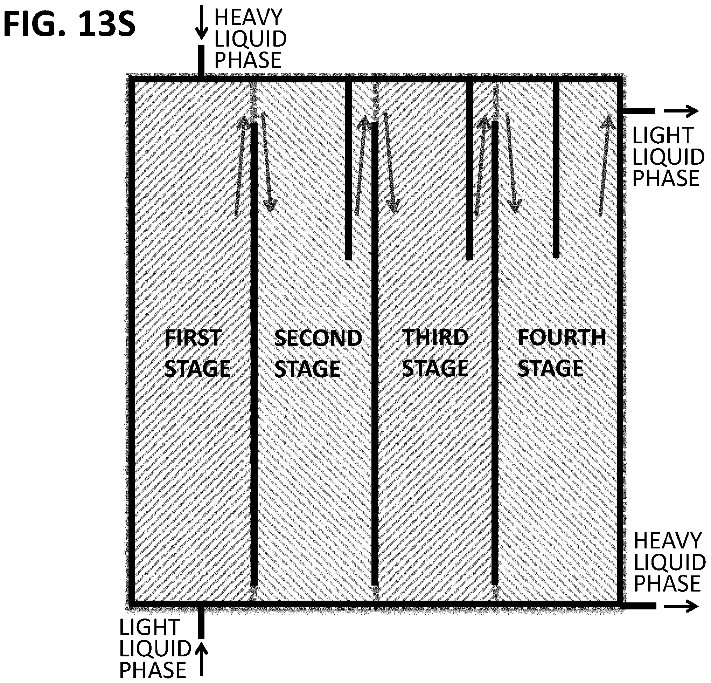

FIG. 13S shows an example of the internal multistage of a partition plate type with parallel contact, where each of the heavy liquid phase and the light liquid phase communicates separately, the direction change partition plate is provided only at the top of the right side or the top of the center of the stage, and one heavy liquid phase introduction port and one light liquid phase introduction port are provided.

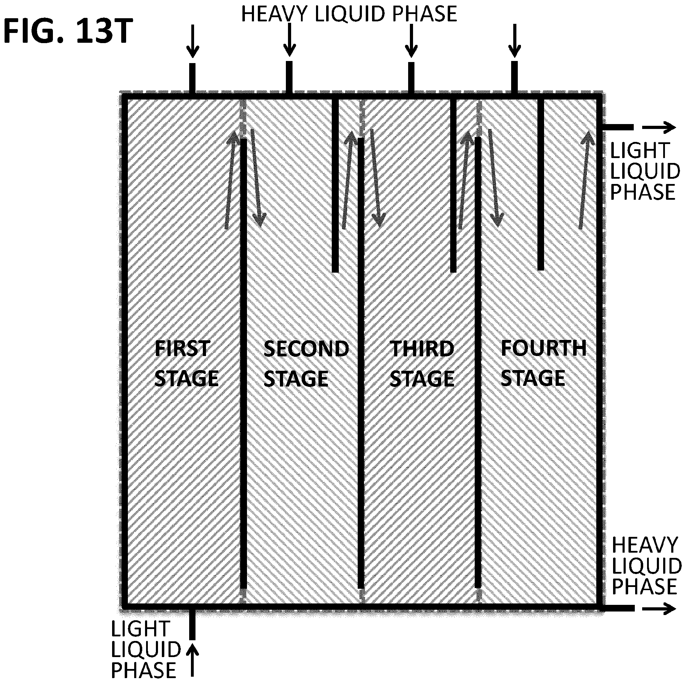

FIG. 13T shows an example of the internal multistage of a partition plate type with parallel contact, where each of the heavy liquid phase and the light liquid phase communicates separately, the direction change partition plate is provided only at the top of the right side or the top of the center of the stage, and a plurality of heavy liquid phase introduction ports and one light liquid phase introduction port are provided.

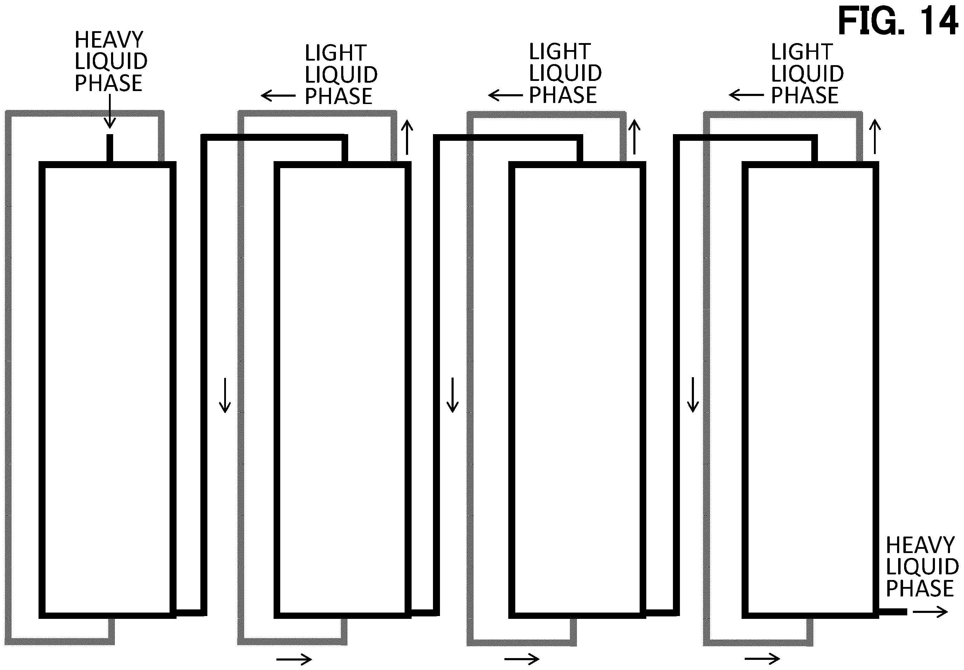

FIG. 14 shows an example of the conventional multistage system of a closed and droplet spray type, in which the containers are connected by feed piping.

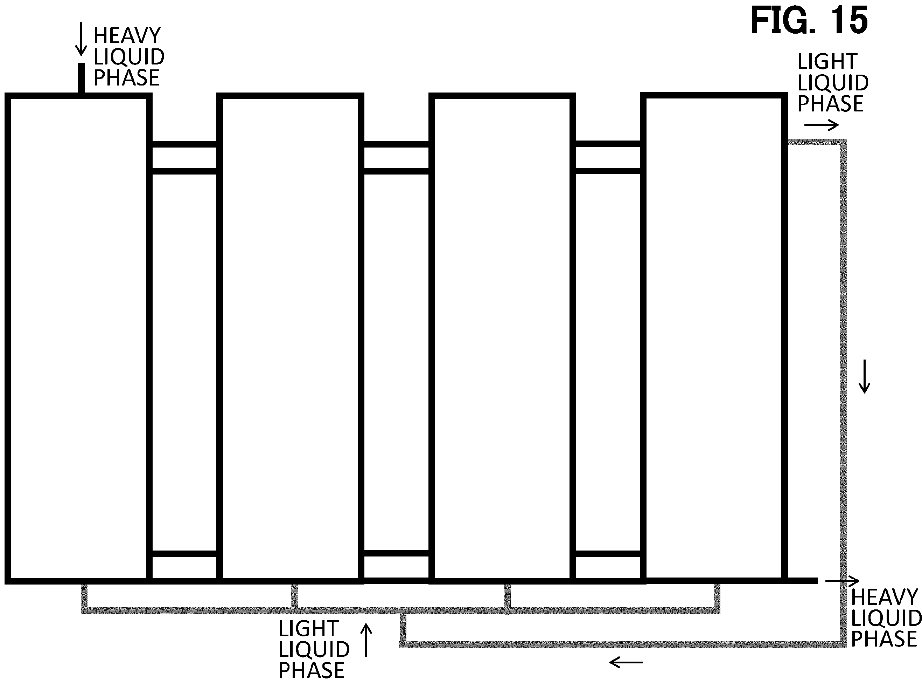

FIG. 15 shows an example of the multistage system of a closed and droplet spray type having the structure shown in FIG. 11B, according to the present invention.

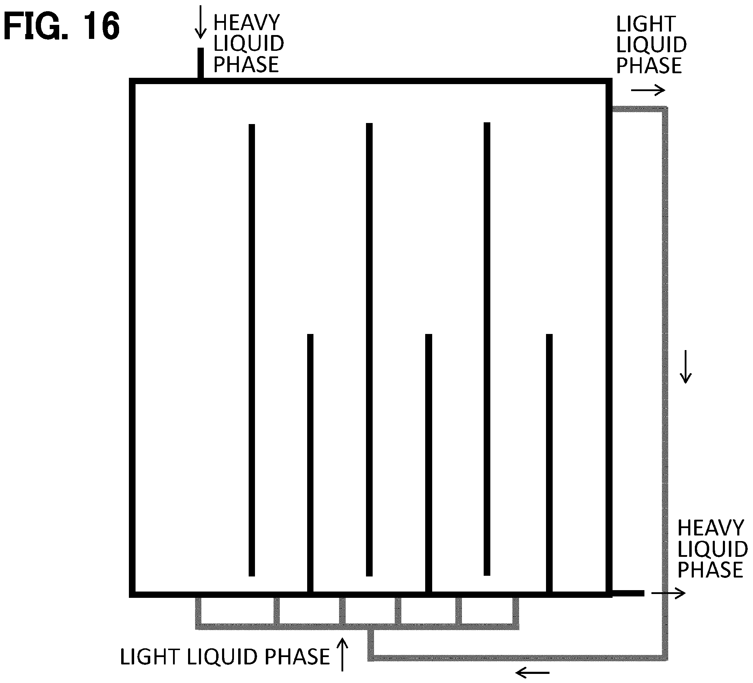

FIG. 16 shows an example of the multistage system of a closed and droplet spray type having the structure shown in FIG. 13B, according to the present invention.

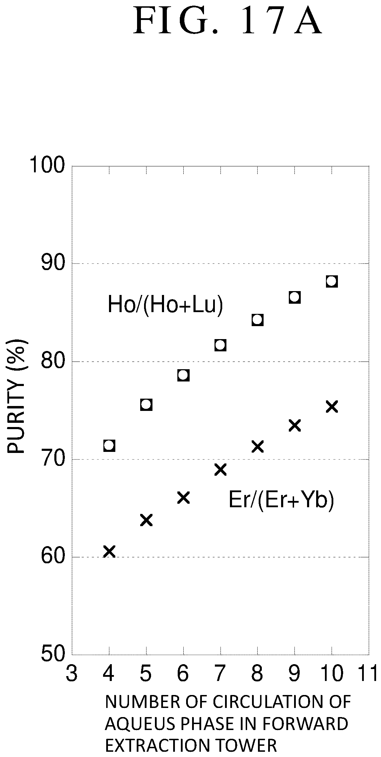

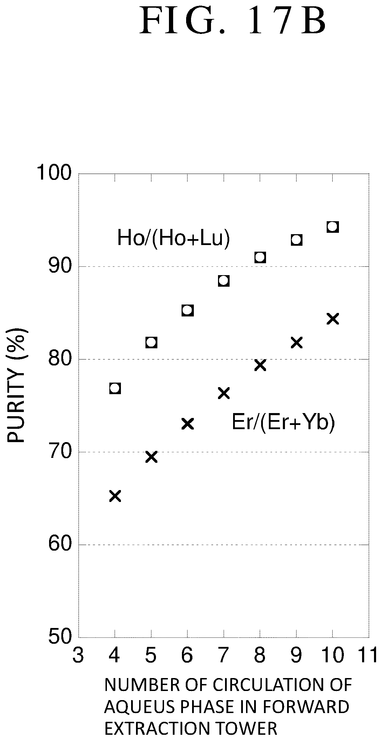

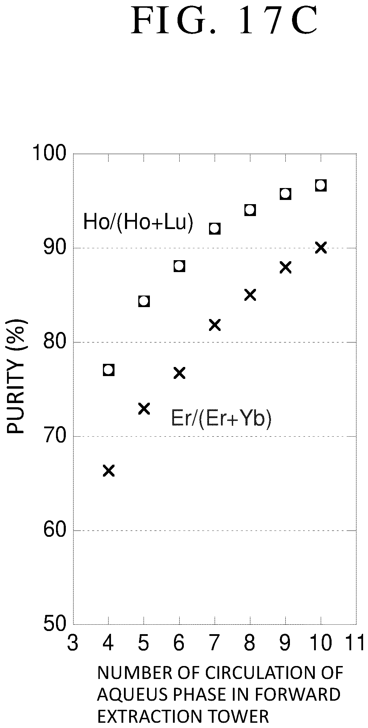

FIG. 17 shows the effect of the combination of the internal multistage and the synchronous liquid circulation multistage.

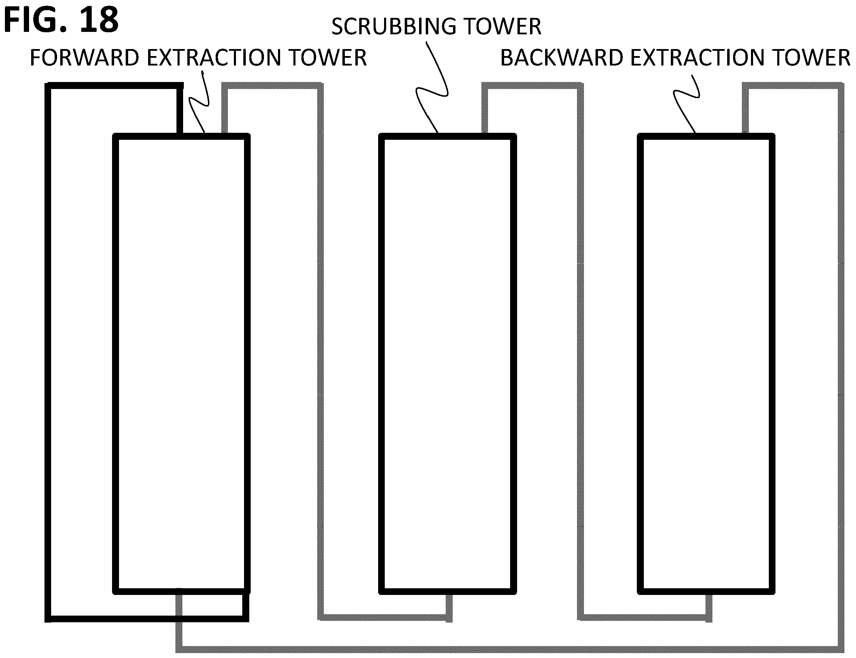

FIG. 18 shows a mechanism of the synchronous liquid circulation multistage with an internal single stage (1-stage) forward extraction tower.

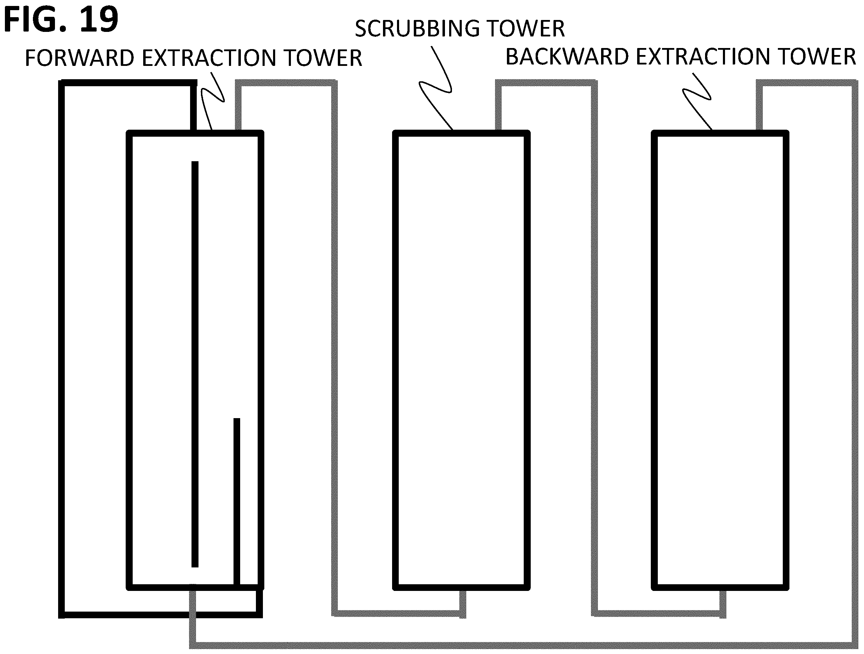

FIG. 19 shows a mechanism of the synchronous liquid circulation multistage with an internal 2-stage forward extraction tower.

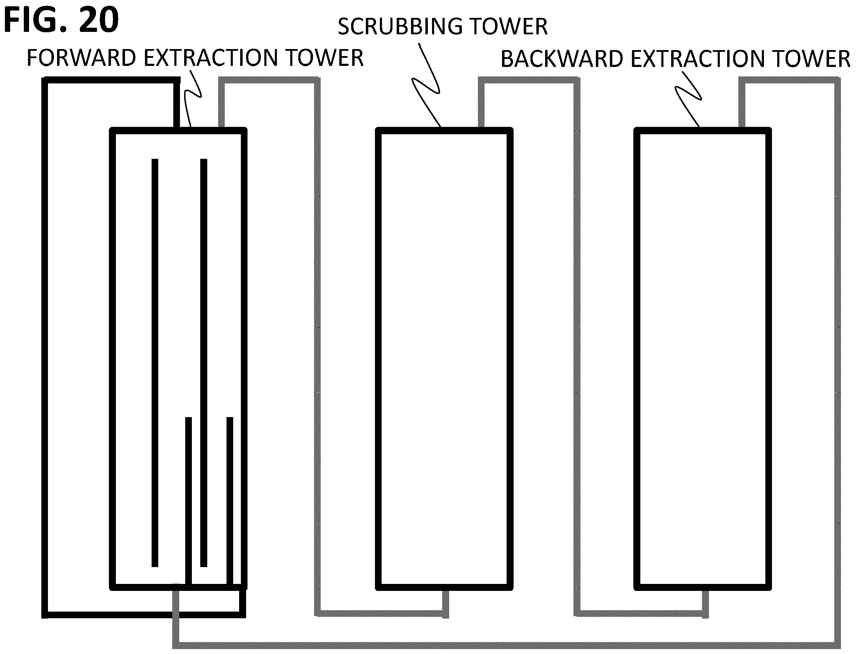

FIG. 20 shows a mechanism of the synchronous liquid circulation multistage with an internal 3-stage forward extraction tower.

### BEST MODE FOR CARRYING OUT THE INVENTION

The present invention relates to an "internal multistage" characterized in that fluctuations in the interface position are suppressed by communicating the lower part, the upper part, or both of the container, and the present invention can be broadly divided into two types of embodiments. One is a form using a connected body of a plurality of adjacent containers (referred to as a connection type), and the other is a form using a single-piece container in which a plurality of partitions are arranged inside thereof (referred to as a partition plate type).

Also, for each of the connection type and the partition plate type, there are three types: the type in which only the heavy liquid phase communicates in the lower part of the container (referred to as heavy liquid phase communication), the type in which only the light liquid phase communicates in the upper part of the container (referred to as light liquid phase communication), and the type in which both liquid phases communicate at the lower part of the container and the upper part of the container (referred to as both-phase communication).

Furthermore, there are the following three types in the present invention. A contact type (referred to as counter-current contact) in which the heavy liquid phase and the light liquid phase face each other and traverse each stage, a contact type (referred to as parallel contact) in which the heavy liquid phase and the light liquid phase transverse each stage in parallel, and a contact type (referred to as one-side transverse contact) in which only one of the heavy liquid phase and the light liquid phase transverses each stage. Hereinafter, examples of specific embodiments will be shown using the above definitions, but the present invention is not limited to this. Further, for convenience of illustration, an example of four stages is shown, but the number of stages can be arbitrarily installed.

FIG. 1 is an example of a connection type in which the heavy liquid phases of each stage communicate with each other in a plurality of adjacent containers. The heavy liquid phase traverses each stage sequentially from the first stage to the fourth stage. On the other hand, since the light liquid phase does not communicate between the containers, the phase contact becomes inevitably the one-side transverse contact. In this case, it is preferable that the volume velocities of the light liquid phases supplied to each stage are exactly the same, and the position of the liquid-liquid interface does not change under that condition. The container forming the connected body may be a closed type or a non-sealed type, and a droplet ejection nozzle, a mechanical stirring blade, or both can be used for phase mixing of the two liquid phases. The number of the droplet ejection nozzle and the mechanical stirring blade to be installed may be arbitrary.

FIG. 2 shows a variation of a connection type system in which light liquid phases communicate with each other in a plurality of adjacent containers. The light liquid phase traverses each stage sequentially from the first stage to the fourth stage. On the other hand, since the heavy liquid phase does not communicate with each other, the phase contact becomes inevitably the one-side transverse contact. In this case, it is preferable that the volume velocities of the heavy liquid phase supplied to each stage are exactly the same, and the position of the liquid-liquid interface does not change under that condition. The container forming the connected body may be a closed type or a non-sealed type, and a droplet ejection nozzle, a mechanical stirring blade, or both can be used for phase mixing of the two liquid phases. The number of the droplet ejection nozzle and the mechanical stirring blade to be installed may be arbitrary.

FIG. 3A shows a variation of a connection type system in which both the heavy liquid phase and the light liquid phase communicate with each other in a plurality of adjacent containers. The heavy liquid phase traverses each stage in order from the first stage to the fourth stage, and conversely, the light liquid phase traverses each stage in order from the fourth stage to the first stage. In this way, both phases are brought into counter-current contact.

Further, FIG. 3B shows the similar structure of FIG. 3A, in which a gaseous phase communication passage is added. By communicating the gaseous phase, the position of the liquid-liquid interface does not change even if a gas is mixed in any of the containers forming the connected body. As in the case of FIGS. 1 and 2, the connection type container shown in FIGS. 3A and 3B may be a closed type or a non-sealed type. A droplet ejection nozzle, a mechanical stirring blade, or both can be used for phase mixing of the two liquid phases. The number of the droplet ejection nozzle and the mechanical stirring blade to be installed may be arbitrary.

Fig. 4A to Fig. 4C show variations of a partition plate type apparatus in which the heavy liquid phases of each stage communicate with each other in a single-piece container in which a plurality of partitions is arranged.

Although each stage is separated by a stage dividing plate, it communicates with the lower part of the container and allows the heavy liquid phase to pass through. This mechanism is characterized in that it has a partition plate (called a turn partition plate, i.e. a direction change partition plate) arranged so as to change the direction in which the emulsion phase in which the heavy liquid phase and the light liquid phase are mixed flows from bottom to top or from top to bottom. In FIG. 4A, the direction change partition plate is located in the center of the stage, in FIG. 4B, it is located on the right side of the stage, and in FIG. 4C, it is located on the left side of the stage. The heavy liquid phase traverses each stage in order from the first stage to the fourth stage, while the light liquid phase side (upper part of the container) does not communicate with each other, so that the phase contact becomes inevitably the one-side transverse contact. In this case, it is preferable that the volume velocities of the light liquid phases supplied to each stage are exactly the same, and the position of the liquid-liquid interface does not change under that condition. The container forming the above integrated structure may be a closed type or a non-sealed type, and a droplet ejection nozzle, a mechanical stirring blade, or both can be used for phase mixing of the two liquid phases. The number of the droplet ejection nozzle and the mechanical stirring blade to be installed may be arbitrary.

FIGS. 5A to 5C show variations of a partition plate type apparatus in which the light liquid phases of each stage communicate with each other in a single-piece container with multiple partitions. Although each stage is separated by a stage dividing plate, it communicates above the container and allows the light liquid phase to pass through it. Similar to the container shown in FIGS. 4A to 4C, they are characterized by having a direction change partition plate. In FIG. 5A, the direction change partition plate is located in the center of the stage, in FIG. 5B, it is located on the right side of the stage, and in FIG. 5C, it is located on the left side of the stage. The light liquid phase traverses each stage in order from the first stage to the fourth stage, while the heavy liquid phase side (the lower part of the container) does not communicate with each other, so that the phase contact becomes inevitably the one-side transverse contact. In this case, if the volume velocities of the light liquid phases supplied to each stage are exactly the same, the position of the liquid-liquid interface does not change. Further, similar to the containers shown in FIGS. 4 (a) to 4 (c) in which the heavy liquid phase communicates, the container forming the above integrated structure in which the light liquid communicates with each other may be a closed type or a non-sealed type, and a droplet ejection nozzle, a mechanical stirring blade, or both can be used for phase mixing of the two liquid phases. The number of the droplet ejection nozzle and the mechanical stirring blade to be installed may be arbitrary.

FIGS. 6A to 6H show variations of a partition plate type apparatus in which both the heavy liquid phase and the light liquid phase of each stage communicate with each other in a single-piece container with multiple partitions, and both phases are in counter-current contact with each other. The heavy liquid phase traverses each stage in order from the first stage to the fourth stage, and conversely, the light liquid phase traverses each stage in order from the fourth stage to the first stage. As a result, both phases are brought into counter-current contact. Although each stage is separated by a stage dividing plate, it communicates with each other below and above the container so that the heavy liquid phase and the light liquid phase can pass through, respectively. The arrangement of the direction change partition plates installed above and below the container shows examples of various combinations such as the center of the stage, the left side, and the right side, but the present invention is not limited to these examples. In the structure shown in these figures, the communication of the light liquid phase is provided by the gap between the ceiling of the container and the step dividing plate. The shape and size of the gap are arbitrary. Further, similar to the containers shown in FIGS. 4A to 4C and FIGS. 5A to 5C, the container in which both phases communicate with each other may be a closed type or a non-sealed type, and a droplet ejection nozzle, a mechanical stirring blade, or both can be used for phase mixing of the two liquid phases. The number of the droplet ejection nozzle and the mechanical stirring blade to be installed may be arbitrary.

FIGS. 7A to 7H are similar to the variations shown in FIGS. 6A to 6H. But the communication of the light liquid phase is performed by a hole provided above the stage dividing plate, and the shape and size of the hole are arbitrary. Further, similar to the containers shown in FIGS. 4A to 4C, FIGS. 5A to 5C, and FIGS. 6A to 6H, the container in which two liquid phases communicates with each other may be a closed type or a non-sealed type, and a droplet ejection nozzle, a mechanical stirring blade, or both can be used for phase mixing of the two liquid phases. The number of the droplet ejection nozzle and the mechanical stirring blade to be installed may be arbitrary.

FIGS. 8A and 8B are examples of variations in which a backflow preventing plate is installed in a connected container in which both the heavy liquid phase and the light liquid phase communicate with each other. The backflow preventing plate is arranged to prevent backflow from the latter stage to the previous stage in the process in which the heavy liquid phase, the light liquid phase, or the emulsion phase sequentially shifts the stages installed in the container. By installing the backflow preventing plate, mixing due to backflow is suppressed, so that more accurate multistage processing becomes possible. The backflow preventing plate can exert a higher effect by installing the backflow preventing plate in the vicinity of the communication passage behind the direction of the flow of the liquid phase in the communication passage. That is, by passing the flow of the liquid phase through a narrow place before reaching the communication passage, the range of the accelerated flow is expanded and the backflow is less likely to occur.

The backflow preventing plate is effective not only in the above-mentioned both-phase communication system but also in the heavy liquid phase communication system and the light liquid phase communication system. Further, although FIGS. 8A and 8B show examples in the counter-current contact, the same applies to the parallel contact.

FIGS. 9A to 9H are examples of variations in the installation of the backflow prevention plate in the partition plate type container in which both the heavy liquid phase and the light liquid phase communicate with each other. As in the case of the connected container, mixing due to backflow is suppressed by installing the backflow preventing plate, so that more accurate multistage processing becomes possible. The backflow preventing plate can exert a higher effect by installing the backflow preventing plate in the vicinity of the gap between the container ceiling and the stage dividing plate or the hole above the stage dividing plate, and behind the flow direction of the liquid phase. That is, by allowing the liquid phase flow to pass through a narrow space before reaching the gap or the hole, the range of accelerated flow is greatly expanded and backflow is less likely to occur.

In addition, the direction change partition plate may also serve as a backflow preventing plate at the same time. The backflow preventing plate is effective not only in the above-mentioned two-phase communication method but also in the heavy liquid phase communication method and the light liquid phase communication method. Further, although FIGS. 9A to 9H show an example of the counter-current contact, the same applies to the parallel contact.

FIGS. 10A to 10F are variations in an apparatus in which two kinds of heavy liquid phases are introduced in a single-piece container with multiple partitions. For example, by using the aqueous solution to be treated as the heavy liquid phase 1 shown in these figures, and the aqueous solution for cleaning the light liquid phase as the heavy liquid phase 2, more advanced separation and purification can be realized.

FIGS. 11A to 11F are variations of an apparatus in which both the heavy liquid phase and the light liquid phase are communicated with each other in a plurality of adjacent containers, and the two phases are brought into parallel contact with each other. Both the heavy liquid phase and the light liquid phase are brought into parallel contact by traversing each stage in order from the first stage to the fourth stage. In the case of parallel contact, a method of introducing a heavy liquid phase or a light liquid phase from a plurality of introduction ports may be effective. That is, as shown in FIGS. 11B, 11C, 11E, and 11F, either the heavy liquid phase or the light liquid phase is introduced from the plurality of introduction ports. For example, the same heavy liquid phase or the same light liquid phase can be introduced at the same time via a branch pipe, a liquid reservoir, or the like.

Further, in the case of the counter-current contact, a heavy liquid phase or a light liquid phase can be introduced from a plurality of introduction ports in accordance with the example of the structure shown in FIGS. 11B, 11C, 11E, and 11F.

Similar to the structures shown in FIGS. 3A and 3B, in the structures shown from FIGS. 11A to 11C, only the light liquid phase communication passage is installed above the container. And, in the structure shown from FIG. 11D to FIG. 11F, both the light liquid phase communication passage and the gaseous phase communication passage are installed above the container.

Further, as in the case of the counter-current contact, the container used in the case of the parallel contact shown in FIGS. 11A to 11F may be a closed type or a non-sealed type, and a droplet ejection nozzle, a mechanical stirring blade, or both can be used for phase mixing of the two liquid phases. The number of the droplet ejection nozzle and the mechanical stirring blade to be installed may be arbitrary.

Among the variations in which both phases are in parallel-contact in the partition plate type in which both the heavy liquid phase and the light liquid phase of each stage communicate with each other, FIGS. 12A to 12U show examples in which the direction change partition plate is installed above and below the container. Both the heavy liquid phase and the light liquid phase are brought into parallel contact by traversing each stage in order from the first stage to the fourth stage.

Similar to the connection type, also in the case of the partition plate type parallel contact, the method of introducing the heavy liquid phase or the light liquid phase from multiple introduction ports may be effective. That is, as shown in FIGS. 12B, 12C, 12E, 12F, 12H, 12I, 12K, 12L, 12N, 12O, 12Q, 12R, 12T, and 12U, either a heavy liquid phase or a light liquid phase is introduced from multiple introduction ports. For example, the same heavy liquid phase or the same light liquid phase can be introduced at the same time via a branch pipe, a liquid reservoir, or the like.

Further, also in the case of counter-current contact, it is formally possible to introduce a heavy liquid phase or a light liquid phase from a plurality of introduction ports in accordance with the examples of the structures shown in FIGS. 12B, 12C, 12E, 12F, 12H, 12I, 12K, 12L, 12N, 12O, 12Q, 12R, 12T, and 12U.

Further, as in the case of the counter-current contact, the container used in the case of the parallel contact shown in FIGS. 12A to 12U may be a closed type or a non-sealed type, and a droplet ejection nozzle, a mechanical stirring blade, or both can be used for phase mixing of the two liquid phases.

The number of the droplet ejection nozzle and the mechanical stirring blade to be installed may be arbitrary.

Among the variations in which both phases are in parallel-contact in the partition plate type in which both the heavy liquid phase and the light liquid phase of each stage communicate with each other, FIGS. 13A to 13T show examples in which the direction change partition plate is installed above or below the container. Both the heavy liquid phase and the light liquid phase are brought into parallel contact by traversing each stage in order from the first stage to the fourth stage.

Similar to the connection type, also in the case of the parallel contact in which the direction change partition plate is installed above or below the container, the method of introducing the heavy liquid phase or the light liquid phase from multiple introduction ports may be effective. That is, as shown in FIGS. 13B, 13D, 13F, 13H, 13J, 13L, 13N, 13P, 13R, and 13T, either a heavy liquid phase or a light liquid phase is introduced from multiple introduction ports. For example, the same heavy liquid phase or the same light liquid phase can be introduced at the same time via a branch pipe, a liquid reservoir, or the like.

Further, in the case of the counter-current contact, a heavy liquid phase or a light liquid phase can be introduced from a plurality of introduction ports in accordance with the example of the structure shown in FIGS. 13B, 13D, 13F, 13H, 13J, 13L, 13N, 13P, 13R and 13T.

Further, as in the case of the counter-current contact, the container used in the case of the parallel contact shown in FIGS. 13A to 13T may be a closed type or a non-sealed type, and a droplet ejection nozzle, a mechanical stirring blade, or both can be used for phase mixing of the two liquid phases.

The number of the droplet ejection nozzle and the mechanical stirring blade to be installed may be arbitrary.

### [EMBODIMENT 1]

### Changes in interface position in each container structure

In the structure shown in FIG. 1 and FIGS. 4A to 4C, in which only the heavy liquid phase communicates below the container, when the introduction flow velocity (volume velocity) of the light liquid phase in each stage is set to the same value, the volume ratio of the heavy liquid phase and the light liquid phase (so-called O/A ratio) did not change, and both the liquid-liquid interface and the light liquid phase liquid level (the gas-liquid interface between the light liquid phase and the gaseous phase) also did not change. In addition, the same results were obtained regardless of the difference between the closed and non-sealed containers, the difference between the ejection of droplets from the nozzle and the mechanical stirring with the stirring blade, and the difference in the type of solvent for the heavy liquid phase and the light liquid phase.

Further, in the structure shown in FIG. 2 and FIGS. 5A to 5C, in which only the light liquid phase communicates below the container, when the introduction flow velocity (volume velocity) of the heavy liquid phase in each stage is set to the same value, the volume ratio (so-called O/A ratio) of the heavy liquid phase and the light liquid phase did not change, and both the liquid-liquid interface and the light liquid phase liquid level (the gas-liquid interface between the light liquid phase and the gaseous phase) also did not change. In addition, the same results were obtained regardless of the difference between the closed and non-sealed containers, the difference between the ejection of droplets from the nozzle and the mechanical stirring with the stirring blade, and the difference in the type of solvent for the heavy liquid phase and the light liquid phase.

In the structure shown in FIGS. 3A and 3B, FIGS. 6A to 6H, FIGS. 7A to7H, FIGS. 8A and 8B, FIGS. 9A to 9H, FIGS. 10A to 10F, FIGS. 11A to 11F, FIGS. 12A to 12U, and FIGS. 13A to 13T, in which the heavy liquid phase communicates below the container and the light liquid phase communicates above the container, the volume ratio (so-called O/A ratio) of the heavy liquid phase and the light liquid phase did not change, and both the liquid-liquid interface and the light liquid phase liquid level also did not change, regardless of the introduction flow rate (volume velocity) of the heavy liquid phase and the light liquid phase, the number of introduction ports, the presence/absence of the branch pipe or the liquid reservoir, the difference between the closed and the non-sealed containers, the difference between the droplet ejection from a nozzle and the mechanical stirring with a stirring blade, and the difference in the type of solvent for the heavy liquid phase and the light liquid phase

### [EMBODIMENT 2]

### Comparison of introduction flow velocity (volume velocity) limit

As an example, in a droplet ejection type multistage apparatus of the closed-type, the limits of the introduction flow rate (volume velocity) of the aqueous solution to be treated was compared with regard to the multistage of the present invention and the conventional multistage (the multistage in which each stage is connected by a liquid feeding pipe). About the structure such that the same light liquid phase is sent to each stage (for example, assuming the synchronous liquid circulation multistage shown in [Embodiment 4] described later), as the conventional multistage, a multistage (FIG. 14) in which four independent emulsion flow towers are connected by a liquid feeding pipe was selected. Further, as the multistage of the present invention, four stages (FIG. 15 and FIG. 16) shown in FIGS. 11B and 13B were selected.

FIG. 14 shows a structure in which four independent stages (towers) are connected by a liquid feed pipe of a heavy liquid phase.

Although not shown, nozzles for the heavy liquid phase and nozzles for the light liquid phase are installed in a pair on the top and bottom of each stage.

The heavy liquid phase is discharged at the fourth stage while passing through the nozzles (four nozzles) installed in each stage in order from the first stage to the fourth stage, and the light liquid phase is configured so as to circulate in each stage. Incidentally, the following methods can be considered. The light liquid phase is evenly sent to each stage by arranging the branch pipe on the inlet side of the light liquid phase. While the light liquid phase is concentrated and collected by the branch pipe arranged on the outlet side, the light liquid phase is introduced again from the branch pipe on the inlet side to circulate the light liquid phase. However, in such a method, the interface position at each stage is likely to fluctuate. Therefore, a mechanism for circulating the same light liquid phase at each stage as shown in FIG. 14 was adopted to prevent the fluctuation of the interface position due to the liquid feeding of the light liquid phase.

The method for operating the mechanism of FIG. 14 is as follows. First, when the circulation of the light liquid phase is started in each stage, the emulsion phase generated from the liquid-liquid interface gradually expands up and down in each stage. When the emulsion phase reaches the nozzle for the heavy liquid phase, the liquid transfer of the heavy liquid phase is started, and then the steady state is reached within several minutes.

FIG. 15 shows a container structure having four adjacent stages (towers) in which both the heavy liquid phase and the light liquid phase communicate with each other by a communication passage. Although not shown, a nozzle for the heavy liquid phase and a nozzle for the light liquid phase are installed in a pair on the top and bottom of the first stage, and only one nozzle for the light liquid phase is installed at the bottom of each of the second, third, and fourth stages. The point that the heavy liquid phase is discharged in the fourth stage while traversing from the first stage to the fourth stage in order is the same as in FIG. 14. But, the light liquid phase is sent from the branch pipe to each stage, and reaches the branch pipe again from the exit installed in the fourth stage. That is, the light liquid phase is a mechanism that circulates in all four stages. FIG. 15 differs from FIG. 14 in that the heavy liquid phase passes through only one nozzle and the heavy liquid phase is not sent to the next stage through the liquid feeding pipe.

FIG. 16 shows a mechanism in which four stages arranged in a single-piece container with partitions communicate with each other in both the heavy liquid phase and the light liquid phase. Although not shown, a nozzle for the heavy liquid phase and a nozzle for the light liquid phase are installed in a pair on the top and bottom of the first stage, two nozzles for the light liquid phase are installed at the bottom of each of the second and third stages, and only one nozzle is installed at the bottom of the fourth stage. The point that the heavy liquid phase is discharged in the fourth stage while traversing from the first stage to the fourth stage in order is the same as in FIG. 14. But the light liquid phase is sent from the branch pipe to each stage, and reaches the branch pipe again from the exit installed in the fourth stage. Similar to FIG. 15, FIG. 16 also differs from FIG. 14 in that the heavy liquid phase passes through only one nozzle and the heavy liquid phase is not sent to the next stage through the liquid feeding pipe.

The operation of the apparatus shown in FIGS. 15 and 16 is the same as that of the apparatus of FIG. 14. First, when the circulation liquid feeding of the light liquid phase is started, the emulsion phase generated from the liquid-liquid interface gradually expands up and down in each stage. When the emulsion phase reaches the nozzle for the heavy liquid phase installed in the first stage, the liquid transfer of the heavy liquid phase is started, and then the steady state is reached within several minutes.

The limit of the introduction flow rate (volume velocity) was set at the time when either the clear turbidity of the wastewater or the clear change of the liquid-liquid interface position occurred. As a result, it was found that in the multistage of the present invention (multistage shown in FIGS. 15 and 16), the limit of the introduction flow rate (volume velocity) is at least 5 times the speed of the conventional multistage (multistage shown in FIG. 14).

### [EMBODIMENT 3]

### Extraction and separation of rare earths by counter-current contact multistage

Using as an organic phase a diluting solvent (trade name: ShellSol D70) containing alkane as a main component, which is dissolving one of the phosphoric acid-based extractants, i.e. 2-ethylhexyl (2-ethylhexyl) phosphonate (trade name: PC-88A), an experiment was conducted to separate erbium (Er) and dysprosium (Dy) from a nitric acid aqueous solution (aqueous phase). As a result, it was found that when the counter-current contact multistage is ideally performed, the simulated value (theoretical value) and the actual measured value are close to each other, and the counter-current contact multistage close to the ideal can be realized.

Specifically, using a non-sealed apparatus having a container structure shown in FIG. 6H and equipped with a mechanical stirring blade, an experiment was conducted. Where, the heavy liquid phase was a nitric acid aqueous solution containing Er and Dy to be treated, and the light liquid phase was ShellSol D70 containing PC-88A. As a result, for example, when the theoretical value of the extraction rate of Er is 98% at the time the distribution of Er and Dy reaches a steady state, the actual measured value was 97%, and when the theoretical value of the extraction rate of Dy is 53%, the actual measured value was 52%.

Further, using a non-sealed apparatus having a container structure shown in FIG. 10F and equipped with mechanical stirring blades, an experiment was conducted. Where, the heavy liquid phase 1 shown in FIG. 10F was a nitric acid aqueous solution to be treated, and a heavy liquid phase 2 was used as a nitric acid aqueous solution for cleaning the light liquid phase. As a result, for example, when the theoretical value of the extraction rate of Er is 92% at the time the distribution of Er and Dy reaches a steady state, the actual measured value was 90%, and when the theoretical value of the extraction rate of Dy is 25%, the actual measured value was 27%.

### [EMBODIMENT 4]

### Extraction and separation of rare earths in combination with synchronous liquid circulation multistage

In the extraction and separation of rare earths which uses the multistage effect produced by integrating forward extraction, scrubbing, and backward extraction and synchronously circulating the liquid, i.e., the effect of "synchronous liquid circulation multistage", the experiment of the apparatus in which the "internal multistage" of the present invention is applied to the forward extraction tower was carried out. In the "synchronous liquid circulation multistage", the number of circulations of the aqueous phase in the forward extraction tower corresponds to the number of stages. It was found that the number of circulations can be significantly reduced by using "internal multistage". Specifically, it was found that the number of circulations is 1/n of the number n of stages installed in the "internal multistage".

Using the same extractant and diluting solvent as in Embodiment 3, an experiment was conducted in which the following four rare earth elements were extracted and separated from an aqueous nitric acid solution. FIG. 17 shows the purity of Ho in the separation of holmium (Ho) and lutetium (Lu), and the purity of Er in the separation of erbium (Er) and ytterbium (Yb). Compared to the case where the conventional emulsion flow apparatus (internal one stage) is used as the forward extraction tower, it was found that ideally, the number of circulations can be reduced to 1/2 in the internal 2-stage forward extraction tower and can be reduced to 1/3 in the internal 3-stage forward extraction tower. Regarding the mechanism actually used, the cases where the forward extraction tower in the "multistage by synchronous liquid circulation" has internal 1-stage, internal 2-stages, and internal 3-stages are shown in FIGS. 18, 19, and 20, respectively. In the internal multistage (internal 2-stage and internal 3-stage) shown in FIGS. 19 and 20, a branch pipe was used to introduce the light liquid phase into the forward extraction tower, and the same light liquid phase was evenly sent.

### [EMBODIMENT 5]

### Stable liquid-liquid extraction in a system containing components with strong surface activity

Basically, we would like to avoid using a substance that has strong surface activity and tends to cause severe turbidity and gelation in a liquid-liquid system, but in reality, sometimes, such a substance may exhibit a very high extraction ability or selective separation ability at the time of extraction and separation of metal ions. For example, Sodium Dioctyl Sulfosuccinate (trade name: Aerosol OT), which forms nano-sized molecular aggregates called reversed micelles in an inert medium, is a useful substance in liquid-liquid extraction, but because of a surface active agent, it tends to cause severe turbidity and gelation.

However, in the case of liquid droplet ejection in which two liquid phases are mixed by gently laminating droplets, it may be used for liquid-liquid extraction without causing turbidity or gelation, even if it is a substance with strong surface activity, different from shaking accompanied by violent disturbance and mechanical stirring by rotation of a stirring blade in which shearing force works strongly.

The container structure provided by the present invention is useful as a mechanism for handling a substance having strong surface activity such as Aerosol OT in multiple stages in that liquid-liquid extraction based on droplet ejection can be performed with high efficiency in multiple stages. Actually, when the droplet ejection type apparatus of internal multistage shown in FIG. 13B was used for the Aerosol OT-containing system, which causes severe turbidity by mechanical stirring, the liquid-liquid extraction could be performed without generating the turbidity.

### [EMBODIMENT 6]

### Purification of solid components

Liquid-liquid extraction can be used for the purpose of removing fine impurities (solid components) consisting of metals such as iron, carbon, phosphorus, and boron from silicon powder (solid components). The internal multistage provided by the present invention is a mechanism suitable for such a purpose, and impurities can be removed from silicon powder with high efficiency.

Specifically, impurities were removed from the silicon powder using the droplet ejection type apparatus of internal multistage shown in FIG. 13B.

In the liquid-liquid system composed of water and hexane, the silicon powder was easily distributed to the hexane phase, and the impurities were easily distributed to the aqueous phase, so that both could be easily separated. In addition, by increasing the number of internal multistage, the recovery rate of impurities from the silicon powder was increased.

### [EMBODIMENT 7]

### Milking of valuable ingredients from algae

The droplet ejection type apparatus of internal multistage provided by the present invention can be used for "milking" in which valuable components are recovered without killing algae, like milking a cow.

Algae can produce and store valuable components such as triglyceride, chlorophyll, and β-carotenoid, but if these valuable components are to be recovered in a solvent by liquid-liquid extraction, the algae will die. Only Botryococcus, which can store valuable components in the extracellular matrix, is said to be an alga that can recover the valuable components that seep out by milking.

However, it was found that in the liquid-liquid extraction of the droplet ejection method in which the two liquid phases are mixed by gently laminating the droplets, the milking is not limited to special algae such as Botryococcus braunii. The container structure provided by the present invention is suitable for milking algae in that liquid-liquid extraction based on droplet ejection can be performed in multiple stages and with high efficiency.

Specifically, it was found that β-carotenoid, chlorophyll, and triglyceride can be milked from Dunaliella salina using the droplet ejection apparatus of internal multistage shown in FIG. 13B. In addition, by increasing the number of stages in the internal multistage, the recovery rate of these valuable components could be increased. It was confirmed that Dunaliella salina was alive because the shape of the cells was maintained, there was no leakage of extracellular fluid, and the number increased by culturing.

### [EMBODIMENT 8]

### Oil separating

The internal multistage provided by the present invention can also be used as a method for separating oil and water. In particular, the droplet ejection type, which has a high phase separation capability, can realize a high degree of oil separating.

ShellSol D70, which is a solvent containing alkane as a main component, was selected as the oil content, in a simulated manner and emulsified in water by the way described below. When an open container with an empty conical nozzle was filled with ion-exchange distilled water and ShellSol D70 was ejected into the water from an empty conical nozzle connected by a pipe, it reached an emulsion state and maintained that state for a long time. When the emulsion was collected and observed using an optical microscope, it was found that oil droplets of ShellSol D70 having a diameter of several µm to a maximum of about 100 µm were dispersed. Moreover, when the total organic carbon (TOC) of the emulsion was measured, it was 239 mg / L.

As a result of treating the water emulsified with the oil droplets of ShellSol D70 described above using the droplet ejection type apparatus of internal multistage, the TOC was significantly reduced. In addition, by increasing the number of stages of the internal multistage, the TOC value could be further reduced. For example, the TOC was reduced from 239 mg / L to 23 mg / L (about 1/10) by using the droplet ejection apparatus of internal 4-stage in the mechanism shown in FIG. 13B.

### [INDUSTRIAL APPLICABILITY]

The present invention relates to a multistage mechanism for repeatedly performing unit operations such as liquid-liquid extraction (solvent extraction) carried out by using a liquid-liquid system which uses two liquid phases. In the present invention, the difficulty of the handling in the conventional apparatus is eliminated because the adjustment of the interface position is not required, and it becomes possible to feed large-capacity liquid. By improving operability (ease of handling), it becomes easier to control and automate the apparatus, and by increasing the amount of liquid feeding, the processing speed increases, and the apparatus can be downsized accordingly.

For example, by performing liquid-liquid extraction (solvent extraction) in multiple stages, it is possible to improve the purity of products such as metal materials, chemical products, and bio products, and to perform difficult element separation such as separation between elements with similar chemical properties. However, it is often unprofitable and unsuccessful as a business due to the labor and time required to operate the hard-to-handle multistage apparatus, the cost and the lack of floor area of preparing the required number of stages.

If the present invention eliminates all of the low operability, high cost, and non-compactness of conventional multistage apparatus, technologies using a two-liquid phase system such as liquid-liquid extraction (solvent extraction) will become more familiar. As described in the above-mentioned embodiments, it can be expected that in a wide variety of industrial fields such as metals, chemistry, semiconductors and biotechnology, the innovation will be brought about.

### [EXPLANATION OF SIGN]

1: Heavy liquid phase communication passage
2: light liquid phase communication passage
3: Gaseous phase communication passage
4: Stage partition plate
5: Turn partition plate (Direction change partition plate)
6: Backflow preventing plate

## Claims

1. A liquid-liquid multistage apparatus provided with a multistage mechanism having a droplet ejection nozzle, a mechanical stirring blade, or both of them for phase-mixing two liquid phases that do not mix with each other, wherein
between two or more stages defined by multiple containers arranged next to each other which forms a connected body, or defined by multiple partitions installed in a single-piece container, a heavy liquid phase communicates at the lower part of the container, or a light liquid phase communicates at the upper part of the container, or both of them.

2. The liquid-liquid multistage apparatus according to claim 1, wherein said connected body is connected through a communication passage in the upper part of the container, the lower part of the container, or both of them.

3. The liquid-liquid multistage apparatus according to claim 1, wherein
in said single-piece container with multiple partitions, partition plates arranged so as to change the direction of flow of the emulsion phase formed by the mixing of the heavy liquid phase and the light liquid phase from bottom to top or from top to bottom are installed.

4. The liquid-liquid multistage apparatus according to any one of claims 1 to 3, wherein
in order to prevent the backflow from the latter stage to the previous stage, which is occurred in the process in which the heavy liquid phase, the light liquid phase, or the emulsion phase sequentially shifts the stages
a backflow preventing plate is arranged in each of said multiple containers arranged next to each other which forms said connected body, or said single-piece container with multiple partitions.

5. A method of producing specific substances using a liquid-liquid multistage apparatus provided with a multistage mechanism having a droplet ejection nozzle, a mechanical stirring blade, or both of them for phase-mixing two liquid phases that do not mix with each other, wherein between two or more stages defined by multiple containers arranged next to each other which forms a connected body, or defined by multiple partitions installed in a single-piece container, a heavy liquid phase communicates at the lower part of the container, or a light liquid phase communicates at the upper part of the container, or both of them.

6. The method of producing specific substances, using a liquid-liquid multistage apparatus of claim 5, wherein said connected body is connected through a communication passage in the upper part of the container, the lower part of the container, or both of them.

7. The method of producing specific substances, using a liquid-liquid multistage apparatus of claim 5, wherein in said single-piece container with multiple partitions, partition plates arranged so as to change the direction of flow of the emulsion phase formed by the mixing of the heavy liquid phase and the light liquid phase from bottom to top or from top to bottom are installed.

8. The method of producing specific substances, using a liquid-liquid multistage apparatus of any one of claims 5 to 7, wherein in order to prevent the backflow from the latter stage to the previous stage, which is occurred in the process in which the heavy liquid phase, the light liquid phase, or the emulsion phase sequentially shifts the stages, a backflow preventing plate is arranged in each of said multiple containers arranged next to each other which forms said connected body, or said single-piece container with multiple partitions.
